(19) Europäisches Patentamt

European Patent Office

Office européen des brevets

(11) **EP 1 684 224 A1**

(12) **EUROPEAN PATENT APPLICATION**

(43) Date of publication:
   **26.07.2006 Bulletin 2006/30**

(51) Int Cl.:
   **G06Q 10/00** *(2006.01)*

(21) Application number: **05001308.5**

(22) Date of filing: **22.01.2005**

(84) Designated Contracting States:
   **AT BE BG CH CY CZ DE DK EE ES FI FR GB GR
   HU IE IS IT LI LT LU MC NL PL PT RO SE SI SK TR**
   Designated Extension States:
   **AL BA HR LV MK YU**

(71) Applicant: **Kairos Investments
   1202 Genève (CH)**

(72) Inventors:
   • **Ariarajah, Shyamala
     1218 Grand Saconnex (CH)**

   • **Delteil, Jean-François
     1203 Geneva (CH)**
   • **Durrleman, Mathieu
     1202 Geneva (CH)**
   • **Matupire, Passmore M.
     Mount Pleasant, Harare (ZW)**

Remarks:
   Amended claims in accordance with Rule 86 (2) EPC.

(54) **An ethically coherent and scientifically logical method for allocating assets in portfolios of investments**

(57)   The present invention concerns the technical aspects of applying ethics to the field of investment industry. It provides an ethically coherent and scientifically logical Method for allocating assets in portfolios of investments to alleviate critical tensions that lead to financial, social and environmental systemic imbalances; it also provides a model Fund product that applies this Method. The said Method, through which ratios for allocating the assets are determined, takes into consideration at least four objective factors: the priority of investment needs in a given country at a given time and the concerns of the three main protagonists of the investment system in order to reduce systemic tensions that generate frequent liquidity crisis of the financial markets in monetized economies.

   This is a novel mechanism to provide equality in access to both information and credit and thereby contributes to: *a stable increase in financial return on investments; an optimal allocation of human resources through the creation of employment in both hard and soft currency countries,* and *an environmentally optimal depletion of natural resources through the development of democratic model of service economies* in a continuous process. The implementation of the project is assisted by a computer program and a data base product, and monitored through an ethically coherent business organization method.

EP 1 684 224 A1

**Description**

**2. Background of the Invention**

**2.1. Basic assumptions regarding Prior art:**

**2.1.1. Ethical vision of prior art**: Prior art known as *ethical investments* represents a variety of methods of asset allocation, financial products and monitoring systems that seek to include or exclude companies and countries from a portfolio of investments. One of the initial objectives of *ethical investments* has been to alleviate organized slave trade and bonded labour in all parts of the world. The ethical criteria for investments applied to alleviate slave trade and bonded labour practices have contributed to the evolution of monetized economies and a global investment industry in which both intellectual and physical labour are remunerated with money. The fact that human labour is remunerated with money, makes it possible to have greater freedom to decide on how, where and on what to spend or to save. The essential feature of remunerating work with money rather than in-kind contributions is that it liberates human beings from bondage to any set pattern of exchanges or domination. Therefore, remunerating human labour with money is assumed as a critical systemic requirement of a basic ethical vision and objective of the prior art. The lack of an ethically coherent and scientifically logical method to integrate the said ethical vision and objective as a basic condition for sustaining economic life in monetized economies often evokes new tensions between the disciplines of Ethics and Finance in contemporary economies.

**2.1.2. Visibility of tensions:** The said tensions became increasingly visible with the split between the *World Economic Forum* and the *World Social Forum* as well as with the opposition to other global and regional summits on finance and economics. Moreover, the prevailing economic climate of job losses and financial losses experienced by individuals, institutions and nations have revived the historical tensions and hostilities between the agents of the for-profit and non-profit Sectors, and between the peoples in hard and soft currency countries, leading to growing instability of the global financial system.

**2.1.3. Moral personality status:** The incorporation of enterprises and formation of institutions with a capital structure is a process that gained a new momentum in *hard currency* countries after the Second World War. The need for reconstruction in the post Second World War period and economic expansion are seen as two of the key factors that escalated the incorporation of both *for-profit* and *non-profit* enterprises. However, those who were inspired by the vision of the Human Rights Charter see this institutional formation process as an opportunity to prevent the violation of human rights and organized crimes because of the potential that institutional formation processes give to monitor the purposes for which enterprises are financed. In other words, legally incorporated entities, irrespective of whether they are governmental or non-governmental enterprises, and regardless of whether they operate on a for-profit or non-profit logic, acquire the status of a moral/natural person and can be legally pursued and sent out of business, if their particular mission undermines public interest and the well being of humanity.

**2.1.4. Investors in a global industry:** The development of the global investment industry after the Second World War through implementation of projects related to common wealth production, decolonization and democratization of all kinds of political systems in different parts of the world has led to the formation of economically interdependent Nation States. This also means that the primary purpose of financing incorporated enterprises is to be able to meet the legitimate economic needs of all individuals, institutions and nations, and thereby sustain social cohesion, environmental security, and peace that comes with financial stability at local, national, regional and global levels. For these reasons, this invention presumes that what is referred to as Investors in a global investment industry today are individuals and institutions, that operate at local, national, regional or global levels.

**2.1.5. Nature of wealth in monetized economies:** In contemporary economies what is referred to as wealth consists of key concepts such as capital, labour, knowledge, power, etc. that are part of a technical vocabulary, which has been developed to articulate critical social and humanitarian relationships. In monetized economies, the value of these concepts are expressed in monetary terms. Therefore, this invention presumes that the costs and prices of capital, labour, knowledge and power, are key aspects of the technicalities of the global investment industry in which lenders and borrowers operate.

**2.1.6. Role of investments:** Investment processes, today, are intended to facilitate the production and distribution of wealth and thereby enable the physical, mental and spiritual development, which are necessary for the effective organization of human life in society. The wealth, which investment processes produce and the financial return that is delivered to investors are together expected to ensure the continuity of production and distribution of goods and services and of the financing mechanisms. Therefore, this invention assumes that in monetized economies, there is a direct correlation between positive financial return on investments and continuity of wealth production and distribution.

**2.1.7. Prevalent tensions and time gaps:** However, a confluence of several combinations of systemic factors, which are initiated through the transactions between lenders and borrowers during investment processes often leads first to a concentration of wealth (meaning capital, jobs, knowledge, power etc.) in the hands of few individuals, institutions and nations and then to its redistribution; furthermore, the pace at which concentration of wealth takes place seems to be much faster than the pace at which production and distribution of wealth takes place; the *time gaps* between the processes that lead to wealth concentration and the processes that lead to wealth production are increasing with successive financial systemic crises. The absence of an ethically coherent and scientifically logical method/process to address the said systemic nature of the problem further increases the prevalent tensions between: *religion and science, capital and labour, charity and economic justice,* for-profit and non-profit enterprise leading to growing hostilities between the peoples of hard and soft currency nations. For this reason this invention assumes that alleviating the said tensions is a critical factor in terms of alleviating hostilities between hard and soft currency countries.

**2.1.8***. Technological gap:* The said critical systemic tensions often prolong or fuel organized crimes, violence, wars, poverty, unemployment and debt failures which escalate during the said time gaps. These realities make it clear that there is no inbuilt mechanism within investment processes to correct or prevent critical systemic tensions. In other words, there seem to be no solution at the technical level to deliver the objectives and goals concerning the financial and economic securities, which incumbent governments make at the beginning of investment processes. As a result many governments are unable to regulate the economy in a way that allows the generation of employment with fair income for all those who are able to work, which is essential to meet basic economic needs in monetized economies; Increasingly incumbent governments are unable to deliver positive financial return on investments to ensure the continuity of financing mechanisms.

Above all, they are unable to deliver fair pensions for the retired people, who have been contributing to both social and health security schemes during their entire professional life. As a consequence, the cost of treatment for old and new diseases that emerge from the development and testing of biological and nuclear products become unaffordable for a significant part of the population. Therefore, this invention presumes that the said *technical gaps* and critical systemic tensions make it impossible for the incumbent governments to regulate the economy in a way that can alleviate these technical gaps and tensions to sustain environmental securities that comes with stability of financial markets.

## 2.2. Various Forms of Ethics of Investments

**2.2.1. Multiple missions and codes of conduct:** What is referred to as ethics in contemporary societies is a set of moral principles or rules of conduct, which are recognized as appropriate to a particular community, profession, or an area of life. In democratic model of societies in which there is freedom of association, there are possibilities to address a multiplicity of causes of the systemic crises including economic injustices and consequent violence in multiple ways. In other words, there can be as many sets of moral principles or codes of conduct (i.e. rules and self regulatory principles), which individuals, institutions or members of a particular community or professions may follow to achieve their specific missions, including the causes or the symptoms of the economic and financial crises they seek to address. This also means that there can be as many forms of ethics of investment as there are institutions to address the economic challenges of our day. This explains why there are hundreds of thousands of member serving organizations and institutional clusters in many nations of the world today.

**2.2.2. Distinct organizations of the Third Sector:** The said member-serving organizations and institutional Gusters often multiply in times of economic and financial systemic crises. These organizations are known today as the institutions of civil society or organizations of the Third Sector. They can either be *non-governmental non profit organizations or non-governmental for-profit organizations.* In monetized economies these organizations are often classified as *Member Serving Associations* that cater to the needs of their own members and are self regulated, and *Public Serving Associations* that serve the common interests and concerns and usually operate under a regulatory framework stipulated by the incumbent national Government.

## 2.3. Prior Art and Related Systemic Tensions

**2.3.1. Survival ethics and tensions between capital and labour:** If continuity of production and distribution of goods and services is a pre-condition for meeting economic needs, then many institutions affected by the crisis can claim that the dominant practice of investments which institutions make today to survive an economic crisis is one form of ethic in the area of investments. For example, the organizations, which operate on a for-profit basis, claim that their survival is to be achieved through investment processes known as mergers and acquisitions. In the case of acquisitions, the financially stronger company often seeks to take control of other companies which are sometimes in totally unrelated industries and business activities. The aim in this case seems to be to either enhance the parent company's profits or to balance its losses in order to be solvent and continue the business. In the case of mergers, enterprises within the same industry come together to survive the crisis but this can often lead to monopolies and cartels. Many of the conglomerates and multinational companies with complex capital structures that exist today in different parts of the world have emerged as responses to the previous economic crises marked by debt failures in the 1980's when many national economies in Africa, Asia and Latin America became technically insolvent according to the rules and regulations of the global financial system established after the Second World War.

Whatever the motivations are for the different methods of investments that enable corporations to survive a given financial systemic crisis, such processes are often accompanied by an increase in the value of capital of a company and decrease in its labour costs marked by layoff of many employees, leading to increased tensions between capital and labour.

**2.3.2. Tensions between charity and economic justice:** The consequent loss of jobs and of steady income which individuals experience during investment processes that protect the survival of institutions, often set into motion a reduction in consumption in monetized economies. This process continues until such time many institutions that operate on a for-profit logic become technically insolvent and thus unable to deliver the products and services including basic economic needs of a significant part of the population. At such times, the progressive taxation policies which incumbent Governments introduce to reduce social disparities have little effect. Therefore, many governments are compelled to provide tax concessions or fiscal incentives on donations to Charities rather than depending on corporation tax, for the fear of corporations relocating their production units and their benefits in other countries. The said fiscal incentives increasingly encourage for-profit enterprises to respond to the basic needs of the people by creating private non-profit Foundations with massive capital, which is largely reinvested in enterprises that operate on a for-profit logic. In other words, the incumbent national Governments, for the lack of being able to collect taxes appear to expect the for-profit enterprises to enter the Charity Sector. This indirect way of instrumentalising Charity as a management tool for regulating economies often increases the said *technical gaps* of the lending and borrowing system and thereby not only produces rich and poor nations, but often deprive the Poor of their basic needs leading to increased *tensions* between *charity and economic justice.* The consequent human upheaval and violence generated through the said tensions lead to the familiar conflict over how to provide the basic needs of society. It provokes a continuous debate on whether the enterprises, which provide basic needs such as food, energy, shelter, water, health, education, communication, transportation and financial services should be privatized or nationalized.

**2.3.3. Tensions between for-profit and non-profit enterprises:** Despite inconclusive debates many governments seek to survive their financial crises through expediting the sale of public property, be it real estate or equity shares of companies in which a Nation-State is a major shareholder. Although this process may help an incumbent government, in the short-term to balance the national budget or to reduce its budget deficits, it has not proven to be sufficient to bring long-term economic and financial stability in an era of globalization of financial markets. The said process of selling public property known as privatization of public goods, however, deters state monopolies and accelerates the formation of a new generation of for-profit enterprises that would deliver the goods and services previously provided by the Nation State. In the best case, the said privatization process of certain public goods and services can meet the specific needs of groups because *one size does not fit all* in many domains of production and distribution. In the worst case, such a privatization process not only denies equality in access to basic economic needs induding information and credit to small and medium size enterprises, but also often increases the prevalent *tensions* between *for-profit and non-profit enterprises.*

**2.3.4. Tensions between Nation States and non-profit NGOs:** The member serving organizations that operate on a non-govemmental non-profit logic often serve a particular economic need because it is not served by the Nation State Sector or there is no equality in access to opportunities for a particular product or service that is being provided by dominant economic agents, or what is being provided is unaffordable for the budgets of certain members of the society. These organizations also advocate for equality of opportunities to women, children, youth, the aged, etc. In this sense, the said non-profit NGOs known as the institutions of the *Third Sector,* often address the concerns of justice and freedom related to economic life in society. However, in times of global economic and financial crises the said Third Sector institutions are unable to function due to lack of adequate financing for the services or products they provide. Despite this fact the public is often reluctant to encourage the nationalization of non-profit NGOs, a solution which is often recommended for institutions that operate on a for-profit logic. Why? Past experiences during major economic crises remind us that whenever a Nation-State attempted to integrate the role and function of any particular ideological, philosophical or religious enterprise which operates on a non-profit logic, it was not sustainable; such integration often culminates in deprival or curtailing of finance to projects initiated by individuals and institutions, that do not correspond with the tradition integrated by the Nation-State.

As a consequence of such discrimination, the authority and legitimacy of both the Nation State and of the particular theology, philosophy or ideology was often put into question. Furthermore, the lack of an adequate financing model to pursue the projects of non-govemmental non-profit enterprises, escalates the tensions between the incumbent Government and non-profit NGOs leading to misinterpretation of the role and motivations of *non-profit NGOs.*

**2.3.5. Tensions between religion and science:** A noteworthy feature concerning the non-profit enterprises be it religious or secular, is that their restructuring processes are often accompanied by conflicts and divisions even when they continue to refer to their founding charter, philosophy or principles on which they were constituted: For example, in the case of religious institutions, unlike for-profit enterprises, crises are often accompanied by an emergence of a multiplicity of religious movements and sects. This trend can be observed in all countries, where those affected by the incumbent economic and financial crisis look to new movements for their mental and spiritual development. While new religious movements are able to help individuals to look beyond the crisis affecting them through engaging them in more charitable activities and by helping them to come to terms with the past, they also contribute to the formation of a culture which is more comfortable with the future than with the present. Despite the fact that charitable spending initiated through said religious movements helps to stimulate monetized economies for a short period, a combination of facts such as negative experiences related to loss of financial income and the said emphasis on the future reduces the level of income available for present consumption. The emphasis on the future has also opened doors for the invention of insurance schemes, which utilize the savings of an increasing number of individuals from many hard and soft currency countries, but these insurance schemes are unable to deliver the compensation claims made during recurrent unemployment crises, health crises, environmental disasters, organized crimes and robberies.

In the case of secular non-profit NGOs, the divisions arise from the tensions between the new solutions emerging from research and the preservation of continuity based on convictions related to previous negative experience of different socio-economic groups. In the worst scenario the divisions result from the suspicions of people regarding preserving continuity of inappropriate financing models based on delivering life-time privileges promised by successive governments for workers of certain industries and professions. The said suspicions prevent the achievements in science and technologies from improving the quality of life for all. Such suspicions delay the introduction of ethical correctives to bring sustainable solutions to the inadequacies of the financing mechanisms and of the technical gaps of interdependent monetary systems of the world; the conflicts generated through these suspicions often increase the *tensions between religion and science.*

**2.3.6. Anti-monopolistic feature of the Third Sector:** Whatever the reasons are for the divisions that accompany the restructuring processes of non-profit NGOs, be it religious or secular enterprises, their restructuring processes deter monopolistic attitudes; but the lack of an ethically coherent and scientifically logical model for both financing their projects and for monitoring the purpose for which they are financed often deprives the global financial system of an inbuilt independent anti-monopolistic sector, which can contribute to the stability of the financial system.

In observing and studying several cases of human upheavals, wars, environmental disasters and revolutions, what became clear was the fact that causes for the financial systemic tensions often result from the lack of adequate interpretations and of implementation of the vision of a *global economy based on justice and freedom* for all. The fact that there is a necessity to finance the distinct products and services provided by the agents of the Nation-State Sector, the Corporate for-profit Sector and the Third Sector in a way that allows each economic Sector to perform its respective role and function without confusion appears to be not understood yet.

Above all the fact that there is a need for a consistent diagnosis of the level of economic freedom and of economic injustices in order direct its anti-monopolistic logic towards alleviating critical systemic tensions appears to be not accepted yet.

**2.3.7. Tensions between competition for clients and networking:** Moreover, the proliferation of for-profit enterprises during restructuring of industries are often accompanied by a quest for securing clients or consumers. Similar attitudes infiltrate the institutions of the non-profit NGO Sector during systemic crises that accompany the national sovereign debt restructuring processes. These attitudes often relate to recruiting consumers for the particular products or services they offer; The attitude of competing for clients, however, obscures the vision of networking needed among humanitarian institutions, which is a pre-requisite to sustain an economic development process based on freedom and justice for all. In the worst case, the competition for clients, customers or adherents is based on preventing members from acquiring knowledge of other traditions or relating to them. Such deliberate isolation of communities increases the level of communal tensions and violence until it reaches a point at which civilizations begin to clash and engage in activities that lead to the destruction of all kinds of educational and basic infrastructure service that are required for achieving democratic model of service economies at local, national, regional and global levels.

**2.3.8. Tensions between peoples of hard and soft currency countries:** Furthermore, the economic divide between *hard and soft* currencies with which the global economic and financial system was founded after the Second World War has created an inequitable operating framework for all financial transactions. On one side, the hard currency countries seeking to benefit from the strength of their currencies attract both technically skilled and unskilled labour from soft currency countries to come and develop their national economies. On another side the soft currency Nations seeking to benefit from the weakness of their currencies, often balance national budgets through devaluation of their currencies because it increases the revenue that those who work in hard currency countries repatriate for their dependants; moreover, the weakness of their currencies also attract both for-profit and non-profit enterprises from hard currency countries to invest in their economies. In both cases the said economic divide diminishes the value of human labour and capital in soft *currency countries.* The lack of sensitivity of the prior art to the *hard-soft currency divide* not only brings frequent job losses within both *hard* and soft currency countries, but also leads to an increasing gaps between the values of currencies fuelling speculative investment trends. Above all, the superiority and inferiority complexes generated through the said economic divide often reaches a point at which they begin to breed violence and destroy the progress of all kinds of civilizations and Nations.

**2.4. Shifting the Ethical Focus in Finance**

**2.4.1. Global financial context:** The recurrent social, environmental and financial systemic crises have generated exclusion, economic hardships and humiliation for millions of people in every part of the world. Each successive wave of economic crisis experienced over the last three decades seem to only lead to increasing poverty, unemployment and debt failures, which nurture violence, social unrest and tyrannical behaviour. In such an environment, many institutions that seek to address the situation at local, national, regional and global levels see their own viability and their humanitarian missions under threat. This is a matter of concern to all who are committed to contribute to a Global economy based on freedom and justice for all.

**2.4.2. Globalization of securities exchange market:** Furthermore, the various methods of alleviating slave trade and bonded labour in all parts of the world have also opened the way to an extension of the capital and loan markets across national and regional boundaries, known as globalization of securities exchange markets. However, for those individuals, institutions or nation states, who out of conviction or more often out of obligations find themselves outside this particular globalization process, there seems to be no fitting instrument to alleviate the consequences of their exclusion from the financial system.

**2.4.3. Obstacles to common agreement on ethical standards :** The said lack of an adequate facility to complement the intra-governmental and inter-governmental political processes in an increasingly interdependent world economy has serious financial consequences leading to imbalances or collapse of all types of economic, social, environmental and political systems. This recurrent reality not only threatens the present and future economic security of all peoples and nations by bringing frequent job losses and negative financial returns on investments, but also sets into motion an ever increasing loss of confidence in the global investment industry. Such an environment often breeds suspicions and distrust, making it difficult to reach a common agreement on how and by whom should the ethical standards for asset allocation be determined, in order to achieve the aims of an economic development for all peoples based on freedom and justice as envisaged by the international human rights charter adopted after the Second World War and reviewed at major global summits that established the millennium goals. (See: Prior Art documents: *http:/lwww. ev-akademie-boll.de/tagungen/details/760101.pdf,* dated 2002, and *http://www.wcc-coe.org/wcc/what/jpc/echoes/echoes-21-07.html,* dated 2002, incorporated herewith by reference).

**2.4.4. Preferred Method for shifting ethical focus to fairness:** The diagnostic research on the evolution of the global ethical investment industry shows that, given the inter-dependence of national economies for both human and natural resources, the dominant practice of defining ethical criteria for either including or excluding a given nation state or a corporation from a portfolio of investments, as the financial tools of the prior art *Socially Responsible Investment (SRI)* often do, is not sufficient to sustain social cohesion and peace that comes with environmental security and financial stability in the context of globalization of securities exchange markets. In other words, defining ethical policies for asset allocation on the bases of speculations or cultural values expressed in terms of good and bad (or positive and negative criteria) is inadequate to alleviate systemic dimensions of the crises at the financial level. Above all, such a basis has proven to be insufficient to solicit cooperation that is needed between the peoples of rich and poor nations, and between for-profit and non-profit Sectors to address the ever widening insolvencies of individuals, institutions and the liquidity crises of the financial markets, which eventually nurture undemocratic practices and organized crimes. Given the complexity of the critical systemic tensions related to financial investments, and the diversity of values in contemporary societies, it led to the conclusion that the ethical focus on finance needs being shifted from the concept of assessing what is good to a concept of assessing what is just and fair. Why? because on the one hand an individual's or an institution's opinion of what is good may differ from another; those opinions may be respectable but in the context of pluralism, they may probably never resolve in an agreement that is sustainable. On the other hand, when it comes to the question of assessing what is a just/fair financial investment, it would be difficult for any one individual or institution to assess the fairness of a given financial investment without taking into consideration the opinions of all the other concerned parties that operate in monetized economies; It would need a discussion or methodical debates conducted within an agreed framework. For this reason, an approach known as *discursive ethic* based on mutual responsibility was selected as a preferred option to decide on what is a fair investment in a given context.

**Ethical background on mutual responsibility and discursive-ethic:**

- *Moral Consciousness and Communicative Action,* Habermas J., translation Lenhard C., DEKR Corp., 1990, ISBN 0-262-08192-X
- *"The theory* of *communicative action",* Habermas J., translation McCarthy, T., Beacon Press, 1984-87, Boston, MA, ISBN 0-8070-1506-7
- *http://www.msu.eduluser/robins11/habermas/*

- *Diskurs und Verantwortung. Das Problem des Ubergangs zur postkonventionellen Moral,* Apel K-O, Surkamp Vertag. 1988, ISBN 351857924 X
- *One self* as *another,* Ricoeur, P, translation Blancy K., Chicago University Press, 1992, ISBN 0226713288
- *Les puissances de l'expérience,* Ferry, J-M, Cerf, 1991, ISBN 2204043710.

**3. Prior Art Methods and Products**

Prior art represents a variety of financing methods, monitoring methods, mutual funds and ethical investment products.

**3.1 References:**

**3.1.1 Publications and Websites**

- Education index:

  - UNESCO Documentation

  - Publications (UNDP)

    - Fleming, Michael C.; Nellis, Joseph G., *International statistics sources: Subject guide to sources of international comparative statistics;* INSTAT: International statistics sources, 1995.
    - *Financing Education - Investments and Returns, Analysis of the world education indicators,* 2002 edition, UNESCO Institute for Statistics, Organization for Economic Co-operation and Development, World Education Indicators Program.

- Health index:

  - *The World Health Report 2002:* WHO Health indicators: *http://*www.who.int/ whr/2002/en/whr2002_annex5.pdf

- Employment Index:

  - ILO: *World Employment Report 2001*
  - ILO: *Key Indicators of the Labour Market* (ICMT) (since 1980). Third edition, CD-ROM , 2003, ISBN 92-2-113377 X
  - ILO: Yearbook of *Labour Statistic 2003,* 61st edition , xvi+1659 p., ISBN 92-2-011377-5

- Financial indexes:

  - *http://www.nasdaq.com/*
  - *http://www.better-investing.org/static-/pdf/style-descriptions.pdf*
  - *http://www.datastream. net/*

- References of Prior art in SRI (Socially Responsible Investment):

  - *http://www.etatsgeneraux.org/economie/debats/ethique.htm. May 15, 2001*
  - *http://www. arese-sa. com*
  - *http://www.arese-sa.com/site.php?rub=4&lang=fr*
  - *http://www.ethinvest.asso.fr/onenparle/oenparle6.htm*
  - *http://www.social.gouv.fr/htm/pointsur/economie-solidaire/inv_ethiq.htm*
  - *http://www.socialinvest.org/areas/research/Moskowitz/2002_full.pdf*
  - *http://www.dia-mart.fr/documents/Plaquetteethique.pdf*
  - *http://www.novethic.fr/novethic/images/upload/novethic_english.pdf*
  - *http://www.globalreporting.org*
  - *http://cei.sunderland.ac.uk/ethsocial/orgs.htm*
  - *http://www.finansol.org/*

- *http://www.terra-nova.fr/*
- *http://www.socialinvestment.ca/*
- *http://www.socialinvest.org/*
- *http://www.forbes.com/philanthropy/*
- *http://www.goodmoney.com/directry_pros.htm*
- *http://www.greenmoneyjoumal.com/*
- Russell Sparkes, 2002, *SRI: A Global Revolution,* John Wiley & Sons
- *http://www.uksif.org/*
- Susan Meeker-Lowry, *Economics* as *If the Earth Really Mattered: A Catalyst Guide to Socially Conscious Investing,* New Society Publisher, Philadelphia, 1988, ISBN 0-86571-120-8
- David Skinner, *The Ethical Investor. A guide to Socially Responsible Investing in* Canada, Stoddart, Toronto, 2001, ISBNO-7737-6179-9
- John Hancock, *The Ethical Investor. Making gains with values ,* FT, London, 1999, ISBN 0 273 63299 X
- Examples:
- *http://www.ethicalmoney.org/Ethical%20Fund.pdf*

**3.1.2. Investment management methods and strategies:** The prior art is composed of a variety of investment management methods and monitoring systems often called Socially Responsible Investment, which involves investing money in traditional funds or ethical funds based on cultural values expressed in terms of good and bad or positive and negative criteria: Since several decades, financial products integrating an ethical dimension have appeared on the financial market. These funds have professionally managed portfolios using one or more of the three core socially responsible investment strategies known in the prior art, as screening, shareholder advocacy, and community investing (See: *Eurosif SRI* report and Russell Sparkes, 2002, *SRI: A Global Revolution,* John Wiley & Sons).

**a**. The first ones function on the principle of excluding stocks or financial products judged immoral. *Screening* is the practice of including, excluding, or evaluating securities traded in the financial markets from investment portfolios or mutual funds based on social and/or environmental criteria. Generally, social investors seek to own profitable companies that make positive contributions to society. "Buy" lists include enterprises with above average to best in class employer-employee relations, strong environmental practices, products that are safe and useful, and operations that respect human rights around the world. Conversely, they avoid investing in companies whose products and business practices are harmful.

**b**. The following ones tried to privilege the enterprises that had proper environmental and social ethic (positive discrimination). *Shareholder Advocacy* describes the actions many socially aware investors take in their role as owners of corporate America. These efforts include engaging in dialogue with companies on issues of concern, as well as filing, co-filing, and voting on proxy resolutions. Proxy resolutions on social issues and corporate governance issues are generally aimed at influencing corporate behaviour toward a more responsible level of corporate citizenship, steering management toward action that enhances the well-being of all the Corporation's stakeholders in alignment with improving financial performance over time.

**c**. Another principle that is often applied is to provide capital to local communities not financed by traditional financial services (Community Investing). *Community Investing* is capital from investors to communities that are considered underserved by traditional financial services. It provides access to credit, equity, capital, and basic banking products that these communities would otherwise not have. In the U.S.A. and around the world, community investing makes it possible for local organizations to provide financial services to low-income individuals, and to supply capital for small businesses and vital community services, such as child care, affordable housing, and healthcare. This is however a local strategy and fails to take into account the interrelation and globalisation of finance, for example the investment decisions taken in a country may have impacts on other countries.

**d**. *Monitoring systems:* Several organizations such as *Social Investment Organization* and *Jantzi Research Associates* in Canada, *EIRIS,* and *Social Investment Forum* in the UK, *ARESE/VIGEO* in France, *Good Money, Progressive Asset Management, Social Investment Forum* in the US, *Centrinfo* in Switzerland, publish ethical finance indicators (e.g. *ASPI, Domini Social Index, Dow Jones Sustainability Index).* Bank funds indicators, stock market indexes (e.g. *Dow Jones, Sustainability Index Euro STOXX)* that are intended to help the institutions to perform directly their asset allocations based on screening, shareholder advocacy, or community investing.

**3.1.3. Patents**: *United States patent US200210116211 A1* defines a method of investment management but does not involve ethical fund, nor ethical considerations, nor model parameters nor organization foundation for defining asset allocation decisions vectors. *US Patent 6,154,731,* Monks. *et al.,* 28th November, 2000 teaches a computer program product for performing a process. The program product includes a recording medium readable by the computer, and computer instructions stored thereon instructing the computer to perform the process. The instructions and the process include determining and storing at least one enterprise attribute data, customer attribute data, shareholder attribute data and government attribute data, and implementing an enterprise computer simulation model that utilizes the attribute data and generates enterprise performance data. The enterprise simulation model evaluates the enterprise performance data with respect to at least one of each other and predetermined criteria. The data from evaluated enterprise performance is then used for ranking, indexing, decision making, enterprise controlling and/or investment purposes, manually and/or electronically. It fails to teach an ethical model of the financial market, nor a global ethical fund. Furthermore, its data bases are not adapted for managing a fund based on discursive ethics.

**3.1.4. Articles:** *http://www.wcc-coe.org/wcc/what/jpc/echoes/echoes-21-07.html,* dated June 2002, also published in *http://www.ev-akademie-boll.de/tagungen/details/760101.* pdf : this document, written by one of the inventors of the present application, is describing the background for this invention but does not describe the practical details of implementation of the invention.

## 3.2. Focus on the Drawbacks and Required Solutions:

**3.2.1. Impact of de-correlated financial activity:** It is clear that there are numerous investment management methods, financial products, monitoring systems and strategies related to prior art. However, none of these methods, products and systems related to prior art is addressing the systemic nature of problems, or considering the global aspects of ethical finance and the worldwide social and environmental implications of local investments. Several drawbacks can still be seen from the prior mutual funds, ethical investment methods and *SRIs.* The repeated crises of the world financial system show that it is not sustainable in its present form. The losses incurred by numerous investors confirm this diagnosis. Inequalities are too large between geographic areas, activity sectors and the type of economic agents that attract investments and the others. Thus the financial activity de-correlates from the real world; the uncertainties fuel speculation and investments become too volatile. Hence new modes of ethical interventions in the financial system are necessary.

**3.2.2. Impact of conflicting ethical references:** There is often disagreement on what can be considered ethical in the area of financial investments: A corporation, or a Nation-State considered ethical by some may not be ethical for others. Such contradictory opinions in the area of financial investments often lead to a practice of addressing economic crises, through methods that seek to eliminate a single source, be it a cluster of institutions, nation state or a professional community. Such a practice fails to recognize that poverty, unemployment and debt failures are often caused through combinations of systemic tensions related to technical gap factors (See: 2.3). Because of these approaches that disregard systemic tensions, many asset managers are able to adopt a variety of marketing techniques to attract investors. For example, they may offer to feminist groups that seek to protect women's rights, the possibility of investing in pharmaceutical companies that produce contraceptives for birth control. But the same asset managers could also offer to groups that are against artificial means of contraception, the possibility to invest in pharmaceutical companies that do not produce such drugs. While these product differentiation techniques satisfy the preferences of individuals or particular traditions or missions of groups, they fail to address the fundamental ethical motive of allocating assets to meet the basic and legitimate economic needs of all members of society. Hence an ethical asset allocation model that can address systemic tensions is necessary.

**3.2.3. Impact of protectionist codes of conduct on financial security:** There are codes of conduct and moral principles, which seek to protect a particular culture, profession, ideology or religion. In a world in which national economies are dependent on one another for both human and natural resources, protectionist codes have proven to be insufficient to sustain social cohesion that comes with environmental and financial securities for all. Above all, protectionist codes of conduct do not leave space for discussions on strategies to achieve an economic development process within the framework of both justice and freedom for all. It leads to the conclusion that ethical policies for asset allocation, defined or refined only on the bases of personal or communitarian opinions, or on the basis of speculations regarding the socio-economic realities or cultures of different nations, or societies would further increase the prevalent tensions between, *capital and labour, charity and economic justice, for-profit and non-profit sectors* and *hard and soft currency nations, religion and science (See:* 2.3) leading to further violence and conflicts. Given the inequitable operating framework for financial transactions initiated through the hard-soft currency divide, an ethical policy development process that can entrust equal responsibilities to both hard and soft currency nations is necessary to alleviate the growing gap between hard and soft currencies.

**3.2.4. Conditions for sustainable structural solutions:** There are also several ethical initiatives that seek to address the symptoms of financial and economic systemic crises:
Several non-profit NGOs are engaged in projects which call for the introduction of currency transaction tax to deter speculative investments, the discontinuity of money laundering, and tax havens and for the removal of corruptive means of acquiring business contracts outsourced by national governments. Unless the national governments, which are committed to develop a *global economy based on justice and freedom for all,* are able to provide space for the non-profit NGOs to conduct their particular missions in monetized economies, the tensions between non-govemmental non commercial enterprises and the projects initiated through national governments can increase public suspicions regarding particular missions of the Third Sector, thus leading to further imbalances and discrepancies of the financial system. In the worst case, the persistence of ethical initiatives that are frustrated, if or when they culminate in violence and destruction of lives, the legitimacy and the authorities of those who propagated them and of those who tolerated them will be put into question. Hence securities exchange models that can distinguish the respective roles of the non-profit NGO Sector and the sovereign Nation State Sector is necessary to build trustworthy relationships between the said two Sectors, and thereby contribute to sustainable structural solutions which can lead to a sustainable economic development process based on justice and freedom for all.

**3.2.5. impact of public distrust on fiscal policies:** Ethics of investment is a subject matter which attracts wide spread public attention only when dominant social, environmental, political, economic and financial systems are on the verge of collapse. In times of such systemic deterioration, the public loses confidence in the prevalent social, economic and financial institutional mechanisms and thus people become less responsive to fiscal incentives or deterrents, which an incumbent government introduces to stimulate or regulate an economy to reduce economic disparities.

**3.2.6. Importance of a credible Third Sector:** At times of public distrust if the members of the organizations that function with non-profit logic in the Third Sector that advocate equality in access to opportunities are unable to practice what is being advocated, the public tends to remain sceptical and suspicious about the potential of such ethical initiatives to contribute to peace that comes with social cohesion, environmental security and financial stability. In other words, there is a direct correlation between the policies and practices gap of Third Sector institutions and the level of credibility among the public regarding the underlying ideological, philosophical or theological frameworks within which such initiatives and advocades are launched. Therefore, an ethically coherent financing model that can reduce the gaps between stated policies and practices of the institutions of the Third Sector is necessary to build confidence in such institutions. Such a financing model requires having a framework that enables to develop suspicion-alleviating theologies and philosophies on which ethical initiatives could be launched.

**3.2.7. Developing financing mechanism for the Third Sector:** The absence of an ethically coherent model for financing the activities of the Third Sector is detrimental to the smooth functioning of the financial system. Why? It is difficult to advocate equality in access to information and credit for all, when there is a lack of financial independence for such work. The present trend of competing for grants and sponsorship from the budgets of National Governments, and of Endowment Funds created to largely invest in enterprises that function on a for-profit logic and then to finance humanitarian missions that function with non-profit logic exposes this limitation. The absence of a direct democratic mechanism for financing the activities of the Third Sector, allows this Sector to be often instrumentalized for all kinds of legal and even illegal activities, which include evading taxes and concealing peace destroying practices such as organized crimes, violence, robberies etc. It leads to the conclusion that the Third Sector requires a transparent financing model that not only can deter practices that undermine peace and justice for all, but also a model that can build trustworthy relationships between different professional communities of the Third Sector that address the same global economic and financial crises from the perspective of their specific analyses.

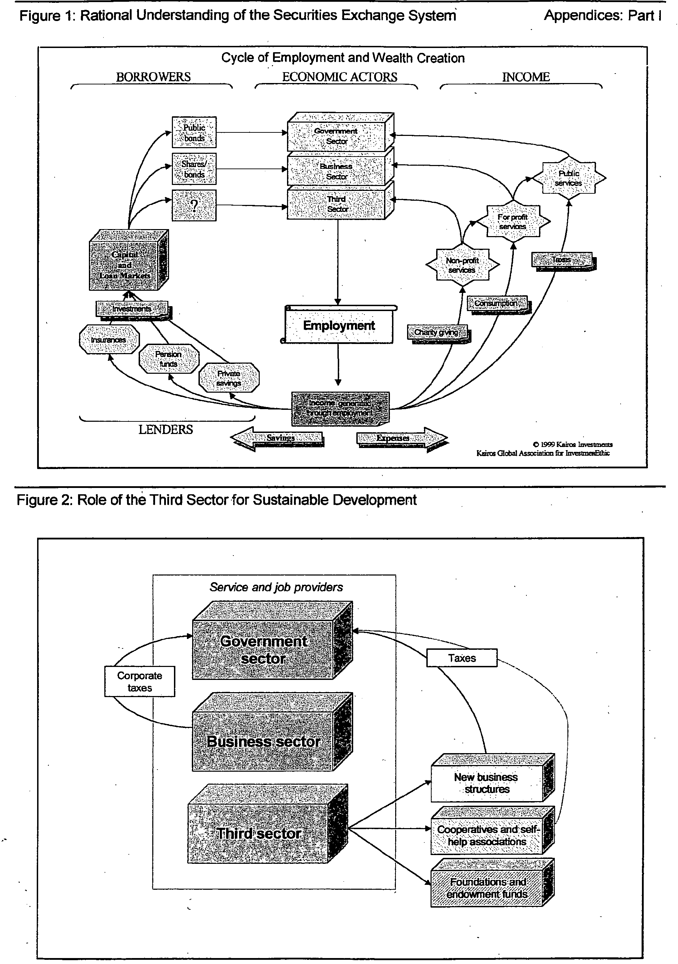

**3.2.8. Sustaining Third Sector as a Reserve Sector:** The Third Sector, which is composed of organizations such as self help Associations, Cooperatives, endowment funds etc. often develop rapidly into new business structures that add value and produce wealth, hence supplying additional taxes that will in turn fuel the activities and budgets of the Nation-State Sector. However, the said transition processes are often accompanied by tensions between Third Sector and the other two sectors namely the non-govemmental for-profit Sector and the non-profit Nation State Sector. In order to facilitate the smooth transition of the Third Sector into credible business structures a complementary facility that can treat the Third Sector, as a reserve/resource Sector for other two economic sectors is necessary. Such a facility needs to have the capacity to harness the anti-monopolistic nature of the Third Sector in a way that the credibility of its specific role and missions and of the sovereign authority of the Nation State Sector can be sustained in monetized economies. (*See: Figure 2*)

## 4. Summary of the Invention

### 4.1. The Invention

**4.1.1. Scope of the invention:** The present invention provides a new method for developing ethical policies for allocating assets in portfolios of investments and a model Fund that applies this method to alleviate critical systemic tensions and thereby contribute to socially cohesive, environmentally secure and financially reliable economic systems at local, national, regional and global levels. The said method and the model Fund product together seek to contribute to an economic development process based on freedom and justice for all, as envisaged by the various instruments related to human rights and peace which have been adopted and ratified after the Second World War and reviewed at major global Summits, which established the millennium goals.

One of the main objectives of the said method is to alleviate systemic tensions that occur, for instance, after a series of *Mergers and Acquisition* activities and structural adjustments initiated through international and intra-state programs and their financial Institutional mechanisms. In the present invention, the said objective of alleviating critical tensions is achieved through a complementary structure (See: *4.2 Institutional tools*)*,* which facilitates the diversification of the activities of the Third Sector in a way that allows the anti-monopolistic character of the institutions of the Third Sector to prevent the conjunction of critical systemic tensions. The said complementary structure will seek to reduce the gaps between the policies and practices of diverse institutions of the Third Sector through steady flows of cash and an ethical policy development method that rationalises the international securities exchange system to link lenders and borrowers within a common ethical framework. This would enable democratically elected national governments to deliver a stable increase in financial return on investments; an optimal allocation of human resources through the creation of employment in both hard and soft currency countries, and an environmentally optimal depletion of natural resources through the development of democratic model of service economies in all countries.

**4.1.2. Critical parameters of the system:** An in depth analysis of the interactions between the agents of the three main economic Sectors, made it clear that solving the systemic nature of the problem in an ethical way is to define the critical parameters of the *lending and borrowing system* as well as to provide a visual representation of the said system so that algorithms can be continuously established to enable the economic agents from all three Sectors to perform their respective roles and functions without one Sector being instrumentalized by another. The critical parameters of the *lending and borrowing system,* aim at addressing the concerns of prior art and at achieving the basic ethical vision and objective of freeing human beings from bondage to any set pattern of exchanges or domination. However, many confusions arise from misunderstanding the languages of resistance to unjust economic and financial systems. For this reason providing a rational understanding of the securities exchange system was regarded as the first step for achieving the said basic ethical vision of prior art. (*See: 6.3*)

**4.1.3. Critical paths to achieve the aims:** The second step of the invention was to identify the critical paths, including the focus on investments, which aim at optimising the allocation of both human and natural resources to achieve sustainable human development. However, sustainable human development involves a multitude of parameters difficult to evaluate. Therefore, rather than constructing a portfolio of investments only on the bases of Corporation and Country ratings, the *New Investment Ethic Project* prefers to include reflections on the conditions of sustainability of the lending and borrowing system based on outcomes of diagnostic research and analysis on the levels of economic freedom and of economic justices in each country. It also takes into account the priorities of investment needs specific to each country.

**4.1.4. Ethical format of a preferred embodiment:** The third step was to define a basic ethical format of a preferred embodiment to which the novel ethical policy development method can be applied to determine portfolio mixes for alleviating critical systemic tensions in a continuous process: In a preferred embodiment, the ethical policy development method is applied to a model investment fund product referred to as the *Kairos Investment Fund (KIF),* launched within several continents comprising both hard and soft currency countries. (12 countries representing 5 continents in a first step but any number of continents and countries is also within the scope of this invention), Each of these countries represents a local compartment of the fund. The method is thus materialized in at least one said global investment fund, which is composed of said plurality of local compartments, one per country. (*See: 6.4.6*.) The model will be gradually reproduced in any country having an established securities exchange market.

**4.1.5 Critical parameters for discussing strategies:** Given the level of distrust among different economic actors in times of escalating systemic tensions, the fourth step was to identify the critical parameters of a model for discussing strategies to alleviate said tensions and thereby achieve an economic development process within the framework of justice and freedom for all. The four key objective factors that have been identified as critical parameters for discussing strategies are:

The priority of investment needs in a given country at a given time, and the concerns of the three main protagonists of the investment system.
The three protagonists of the investment system and the main concerns that are taken into consideration are:

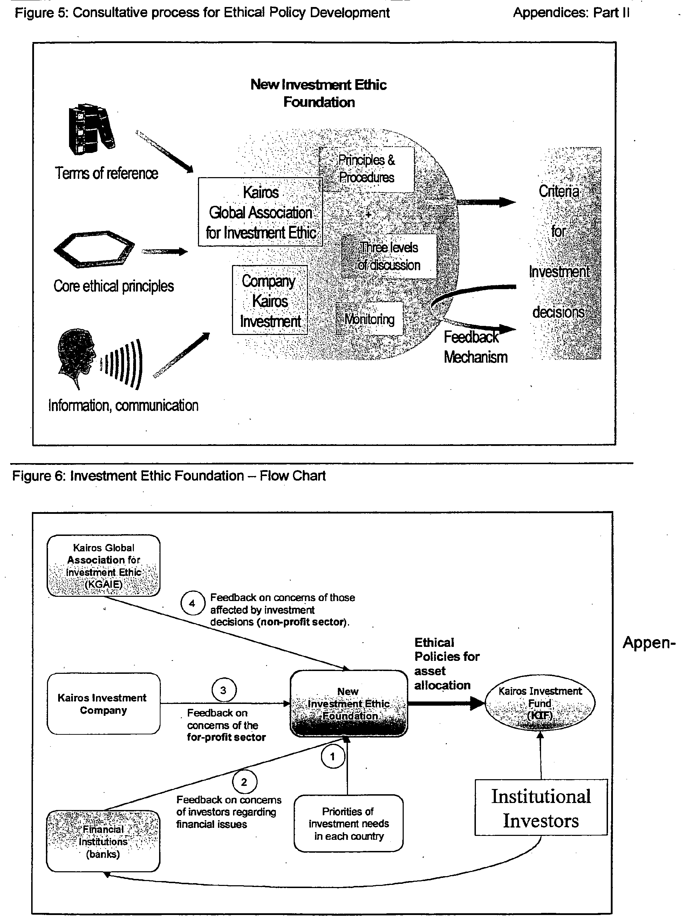

- The concerns of *the Investors* regarding financial return;
- The concerns of *the individuals and institutions that benefit from securities exchange system,* regarding cash flow for financing their activities and projects;
- Concerns of those affected by an investment decision regarding social, environmental, economic and financial securities. (*See*: *Figure 6*)

**4.1.6. Adapting the discursive ethic model:** Given the complexity of the systemic tensions in the area of ethical investments, the fifth step was to invent a model that can resolve non-agreements during the discussions among the said protagonists in order to arrive at conclusive asset allocation recommendations. Towards this end, a concept known as *discursive ethic* had to be adapted in a way that is appropriate to link lenders and borrowers within a common ethical framework. Why? The concept of *discursive ethic* is part of the technical vocabulary that German philosophers Karl-Otto Apel and Jürgen Habermas have been developing in their attempt to give "an ultimate rational foundation to morality and to its normative content" (Apel). This concept provides a more solid ethical basis for the implementation of the *New Investment Ethic Project* when compared to other ethical conceptions, whether deontological, substantive, virtue-oriented or utilitarian. However, the concrete implementation of a discursive ethic model pre-supposes the universal validity of principles of justice and co-responsibility in the current ethical context of increasingly inter-dependant societies, each carrying its own history and ethical values. Given the inequitable operating framework for financial transactions initiated through the hard-soft currency divide which constantly diminishes the value of human labour and capital in soft currency countries, a concrete model that can address the specific power relations between lenders and borrowers that operate at different local, national and regional levels, had to be invented to resolve non-agreement during the discussions among the said protagonists of the investment system. Several aspects of the philosophy of Paul Ricoeur and other philosophers, concerning hermeneutics, ethics and reconstruction were also used to address the suspicions and the inequitable power relations in the contemporary financial system, in order to be able to define ways of conducting and concluding ethical discussions prior to issuing conclusive asset allocation recommendations. The aim is to alleviate mutual suspicions of lenders and borrowers initiated through economic hardships caused by unjust loss of creditworthiness in monetized economies.

## 4.2. Institutional Tools

**4.2.1. Brief description of the complementary structure:** The ethical policy development process is driven by a navigational facility and two distinct operational structures one functioning on *for-profit* logic, and the other on *non-profit* logic. The navigational facility is referred to as the *New Investment Ethic Foundation.* The two distinct operational structures are *Kairos Investments,* which seeks to represent the concerns of the for-profit sector, and the *Kairos Global Association for Investment-Ethic,* which seeks to represent the concerns of those affected by investment decisions through a non-profit logic.

**4.2.1. *New Investment Ethic Foundation (NIEF):*** The *NIEF,* which defines ethical policies for asset allocation and refines them based on the actual results of investments in a pilot model Fund is intended to be a complementary non-governmental non-commercial structure. The purpose of incorporating this structure is to provide a formal space within which different levels of discussions, which aim at alleviating systemic tensions, and linking lenders and borrowers within a common ethical framework, can be conducted. The Foundation is incorporated in Geneva, Switzerland, with individuals and institutions committed to nurture fair economic relationships and entrust equal responsibility to all national governments based on equal access to information and credit for all. The Foundation with its particular focus and activities seeks to serve the well being of humanity in an interdependent world.

In order to avoid unintended consequences to peoples' lives, *NIEF* has the responsibility to continuously develop the framework for conducting ethical debates and to monitor the diagnostic research that seek to alleviate systemic tensions in contemporary societies prior to issuing conclusive asset allocation recommendations.

In each country compartment within which the model Fund *Kairos Investment Fund* invests, a local *Kairos Global Association for Investment Ethic* branch and a local *Kairos Investment* branch are established to monitor the implementation and the development of the *New Investment Ethic model:*

**4.2.2. *Kairos Global Association for Investment Ethic (KGAIE):*** The *KGAIE* has the mission to propose strategies to diversify the activities of non-governmental non-profit Sector within the framework of the model Fund *Kairos Investment Fund.* The *KGAIE* is responsible for pursuing the diagnostic research and analysis on the *role of investments in social and environmental concerns* from the perspective of non-profit logic and to produce substance/input for ethical debates among the said protagonists of the investment system. (See: 4.1.6) It is also responsible for monitoring the financial flows from hard to soft currency countries that are invested in non-profit enterprises in which the model Fund *Kairos Investment Fund* invests, and to propose investment strategies that do not diminish the value of both human labour and capital in weak currency countries. The *KGAIE* also proposes methods to monitor the interactions between the Government Sector, Business Sector and the Third Sector within the framework of the investments in the model Investment Fund *Kairos Investment Fund.*

**4.2.3**. ***Kairos Investments (KI):*** The *KI* has the mission to propose algorithms for asset allocation per three main economic sectors, per type of activity, which are within the priorities of a given country and in accordance with the asset allocation recommendations of the *NIEF.* These algorithms are aimed at enabling economic agents from all three Sectors to perform their respective roles and functions without one Sector being instrumentalized by another.

The *KI* is responsible for pursuing the diagnostic research and analysis on the role of investments in social and environmental concerns from the perspective of the for-profit logic, and to produce substance/input for ethical debates among the said protagonists of the investment system. (*See: 4.1.5*)

It is also responsible for monitoring the financial flows from hard to soft currency countries that are invested in *for-profit enterprises* in which the model Fund *Kairos Investment Fund* invests, and to propose investment strategies that do not diminish the value of human labour and capital in weak currency countries.

*4.2.4. Kairos Investment Fund (KIF):* The model investment Fund, *KIF*, the preferred embodiment to which the new ethical policy development method is applied is a separate structure. The said Fund is launched as a Pilot model in the market in order to demonstrate the viability of the ethical policy development method in terms of achieving its ethical and financial objectives and goals. This viability is expected to allow the retail financial Sector to duplicate the Fund model or to adapt the model in a way that it can multiply the factors that alleviate systemic tensions in an era of globalisation of securities exchange markets.

*Co-management model:* The model fund, *KIF,* has a co-management structure:

- KI, which is the interface between the *KGAIE* and the Banks, is responsible for achieving the ethical objectives of each compartment of the Fund *KIF*
- Renowned financial partners are responsible for achieving the financial objectives of the fund and to guarantee the financial performance;

### 4.3. Computer Program Product

A computer program enables simulation and prediction of the performance of the model fund *KIF* and facilitates the ethical policy development process through its distributed databases and knowledge based information flow.

The Solution is as defined in the section on *computer simulation and program architecture* of the present document (*See: 6.9*)

### 5. Brief Description of Drawings

### 5.1. Ethical Matrix: Human Dignity Based System (*See: 6.3.*)

**Figure 1**: is a block diagram that illustrates a rational understanding of the *Securities Exchange System* within the parameters of the cycle of employment and wealth creation.

**Figure 2:** is a chart showing the role of the third sector in providing services and jobs for sustainable development within a given country.

**Figure 3**: is a block diagram that illustrates the critical paths through which the new ethic model optimises the allocation of human and natural resources in monetized economies to sustain a democratic model of Society. (*See: 6.3.7*)

**Figure 4**: is a chart showing the economic, financial and ethical dimensions of the *Kairos* Vision for achieving a bias free asset allocation in monetized economies.

### 5.2. Operations and Organizations: Ethical Policy Development (*See: 6.4.*)

**Figure 5:** is a block diagram showing the multiple parameters of the consultative process for ethical Policy Development within the *New Investment Ethic Foundation.*

**Figure 6**: is a block diagram showing the combination of the critical objective factors and their respective operational logic taken into consideration for developing ethical policies for asset allocation in KIF.

**Figure 7**: is a chart showing the various Interfaces of the *Kairos Investments* company.

**Figure 8**: is a chart showing the functional links, which activate the pilot model Fund, KIF.

### 5.3. Model Fund: Portfolio Construction (*See: 6.5.*)

**Figure 9:** is a block diagram illustrating the non-speculative asset allocation mechanism that detracts the systemic tensions initiated through the hard-soft currency divide, which diminishes the value human labour and capital in soft currency countries.

**Figure 10:** is a chart showing the global view of the geographical repartition of assets between hard and soft currency countries.

**Figure 11:** is a chart showing an example of geographical diversification of assets within country compartments of the Fund, KIF.

**Figure 12:** is a chart showing the portfolio diversification by asset classes.

**Figure 13:** is a block diagram showing the portfolio diversification by Economic Sectors per country. It illustrates the ethical innovation of initiating a model of financing for the Third Sector in the financial markets seeking to rectify the technical gaps in security instruments and thereby sustain the stability of the financial system. (See 6.3.6.-b and 6.5.2.-h)

**Figure 14:** is a chart showing the asset class risk diversification within the Business Sector per country compartment of KIF.

### 5.4. Repartition of Management Functions and Decision Making Process (*See: 6.6.*)

**Figure 15:** is a block diagram showing the repartition of management Functions whereby ethical functions are dissociated from the financial functions to achieve an ethical coherence in the implementation of the diverse concerns of the civil society in the investment industry.

**Figure 16:** is a block diagram illustrating the communication Flow within the asset management model

**Figure 17:** is a block diagram illustrating the repartition of responsibilities of the financial partners within the management structure of the Fund

**Figure 18:** Decision-making Matrix

**Figure 19:** is a chart showing the portfolio building process

**Figure 20:** is a block diagram that illustrates the sequence of ethical decision-making procedure and respective role of participants.

### 5.5. Computer Simulation and Program Architecture (*See: 6.9.*)

**Figure 21:** Consultative Method (3): Quantitative

**Figure 22:** illustrates the computer databases, both local and global, linked via the internet

Data Bases (DB) product

**Figure 23:** illustrates the computer databases Foundation Weight Vector FWM

**Figure 24:** illustrates the Countries Reference Matrix CRM computer database.

**Figure 25:** illustrates the Geographic Participation Vector GPV (1) computer database.

**Figure 26:** illustrates the Geographic Participation Vector GPV and Countries Needs Matrix CNM computer databases.

**Figure 27:** illustrates Foundation Ethical Asset Allocation Matrix FAAM computer databases,

**Figure 28:** illustrates details of the Countries Needs Matrix CNM computer database,

**Figure 29:** illustrates details of the Countries Monitoring Matrix CMM computer database, .

**Figure 30:** is a diagram illustrating the Countries Ethical Monitoring Matrix.

**Figure 31:** is a diagram illustrating macro economic details of the countries Ethical Monitoring Matrix $EMM_{macro}$

**Figure 32:** Details of *KI* Country Monitoring Vector $CMVi_{macro}$ and Financial Fund Manager Actual Investment Vector (Feedback)

**Figure 33:** is a diagram that illustrates the KI Countries Monitoring Vector CMVi: Details of a Sector (2)

### 5.6. Country Studies (*See: 6.9.*)

The following figures illustrate for each country, the performance of the computer-simulated evolution of the KIF fund over 5 years. They include a table that illustrates the performance of the computer-simulated evolution of the KIF fund over 5 years. There is a low correlation with external events such as financial crisis or wars.

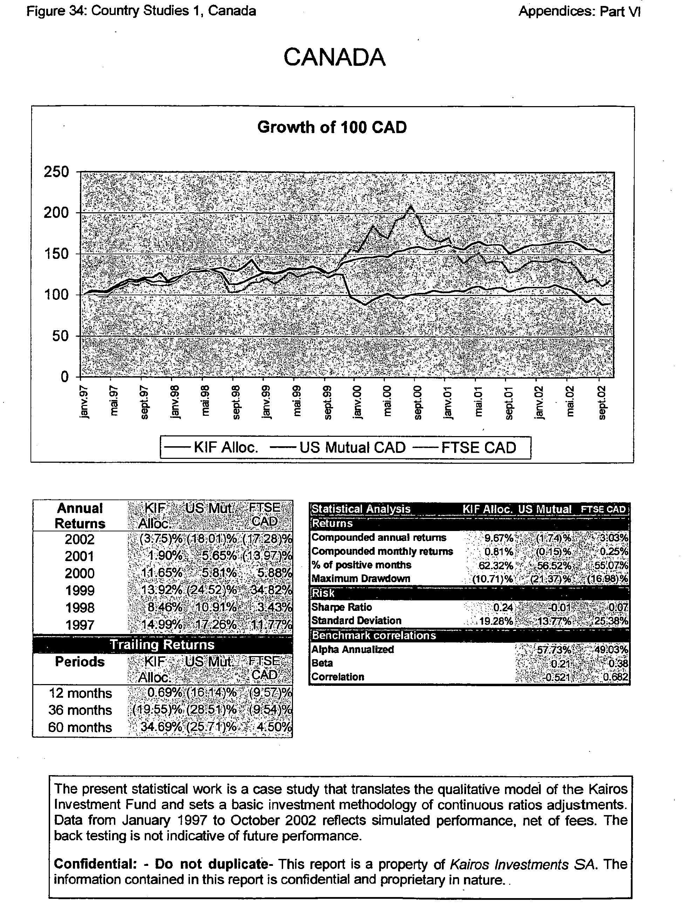

**Figure 34:** Canada

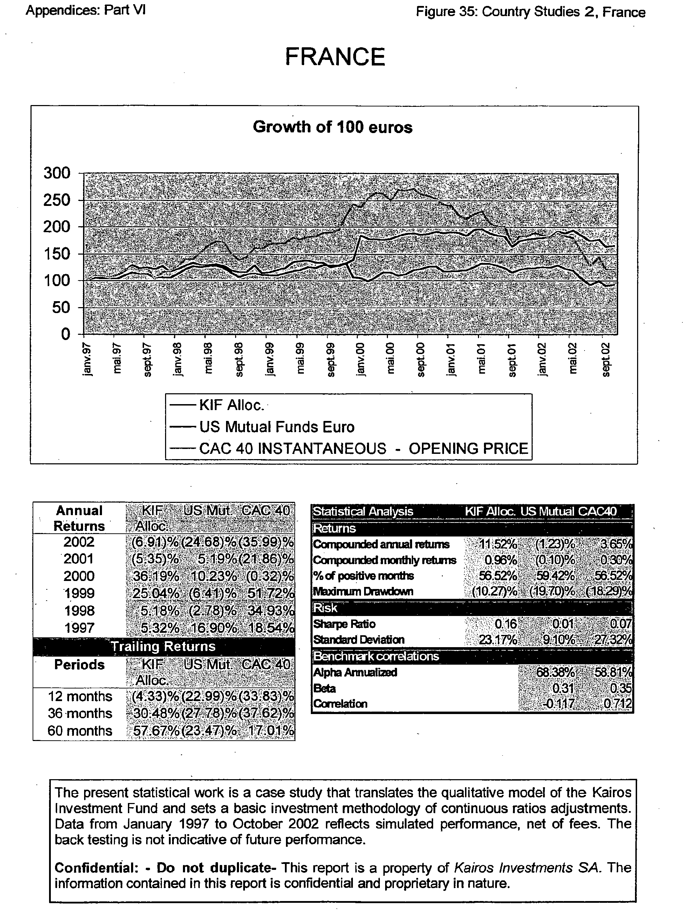

**Figure 35:** France

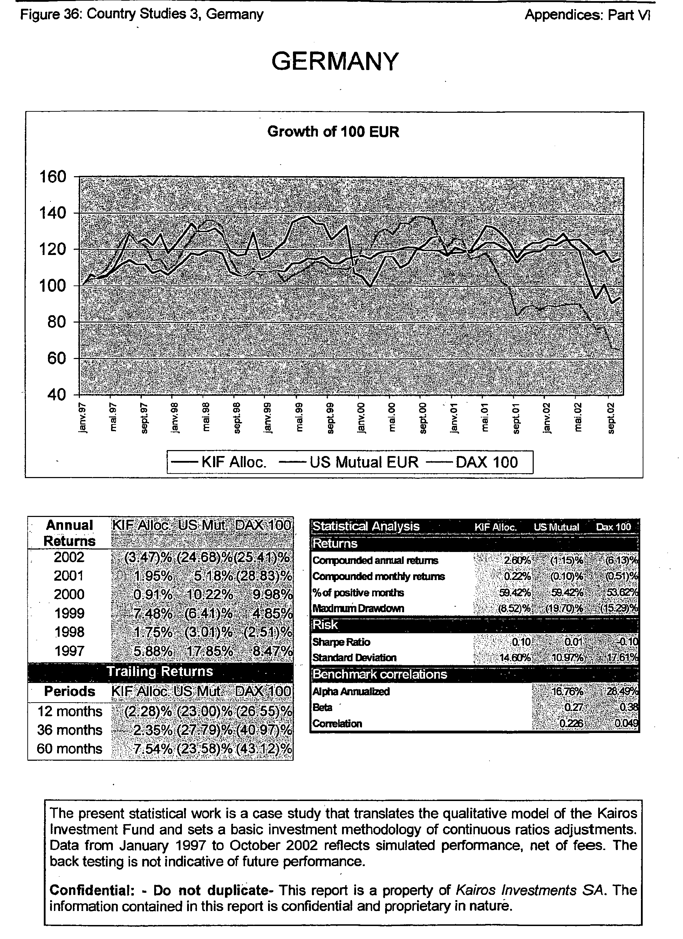

**Figure 36:** Germany

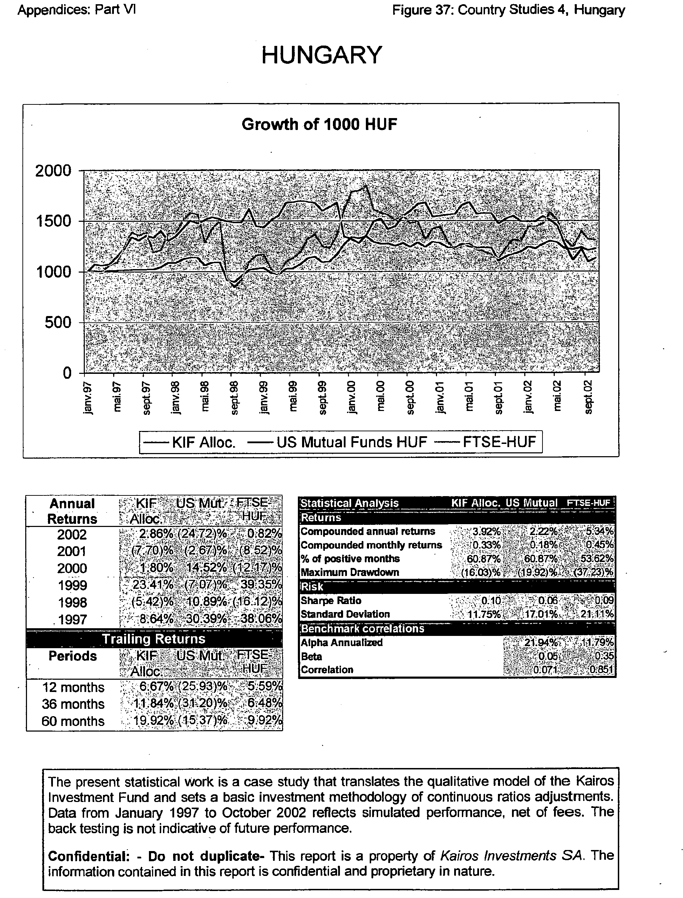

**Figure 37:** Hungary

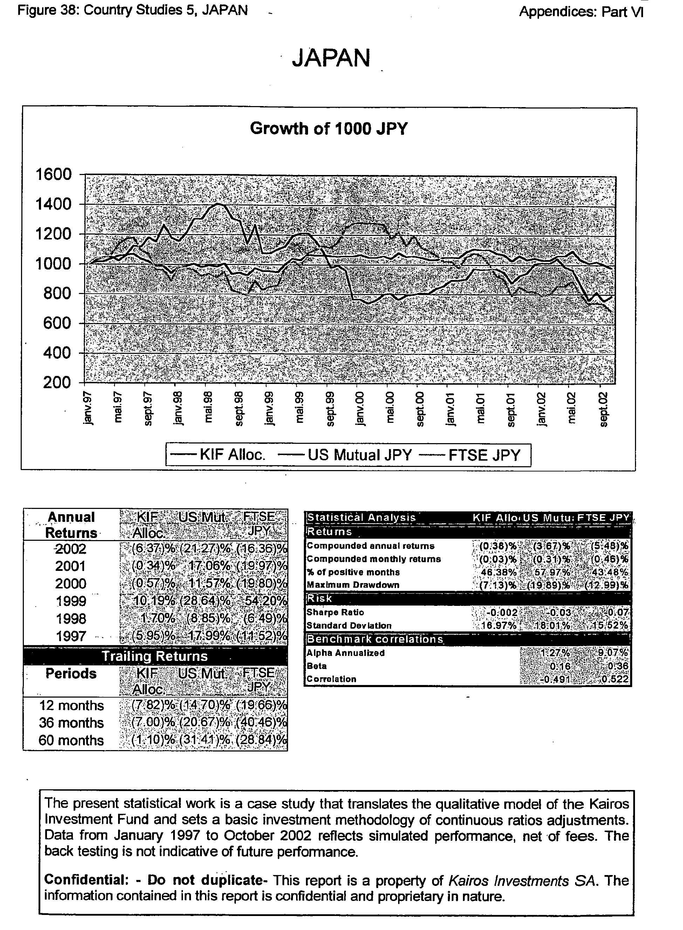

**Figure 38:** Japan

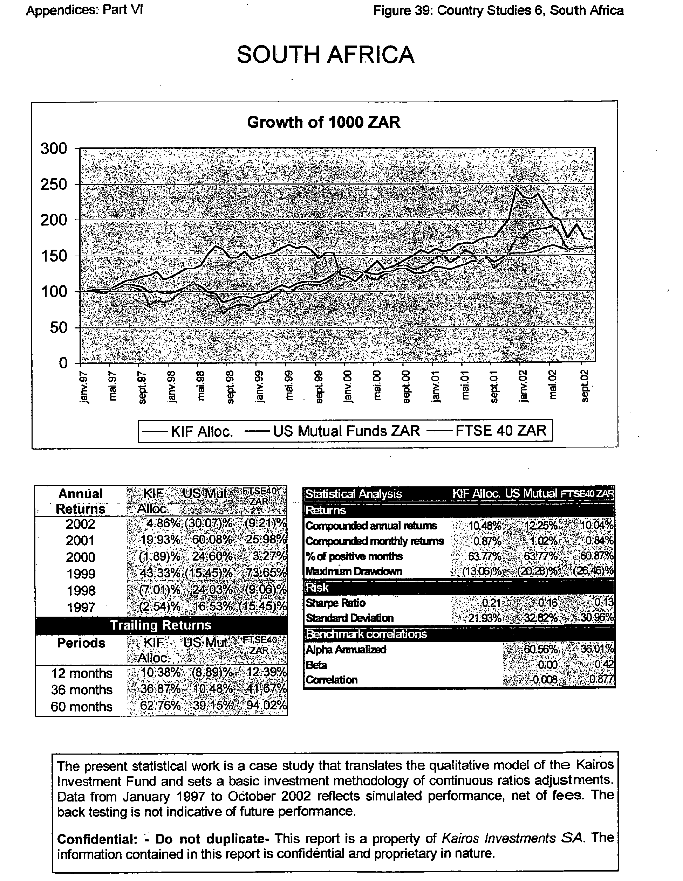

**Figure 39:** South Africa

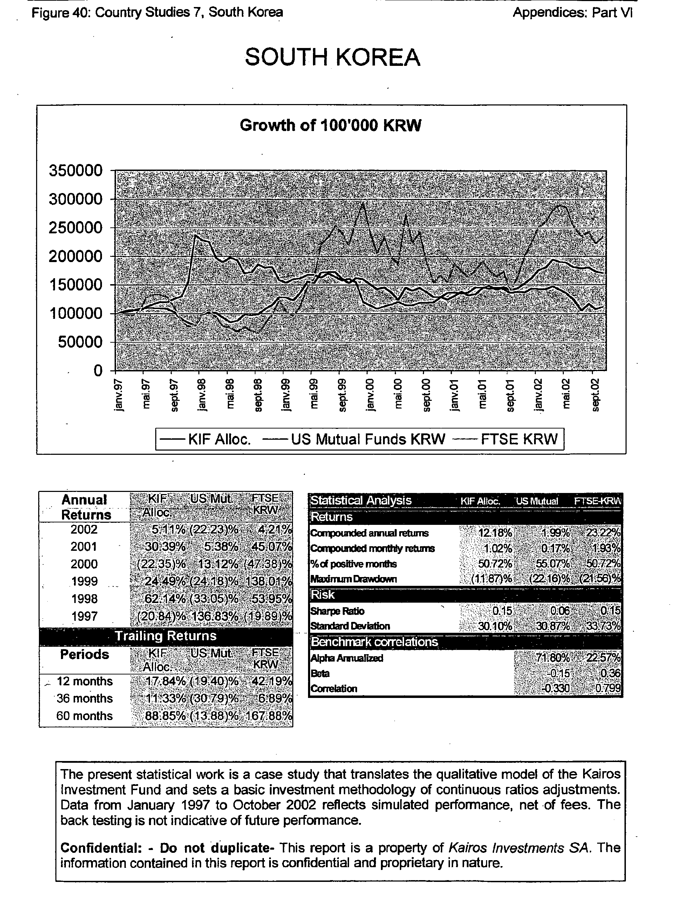

**Figure 40:** South Korea

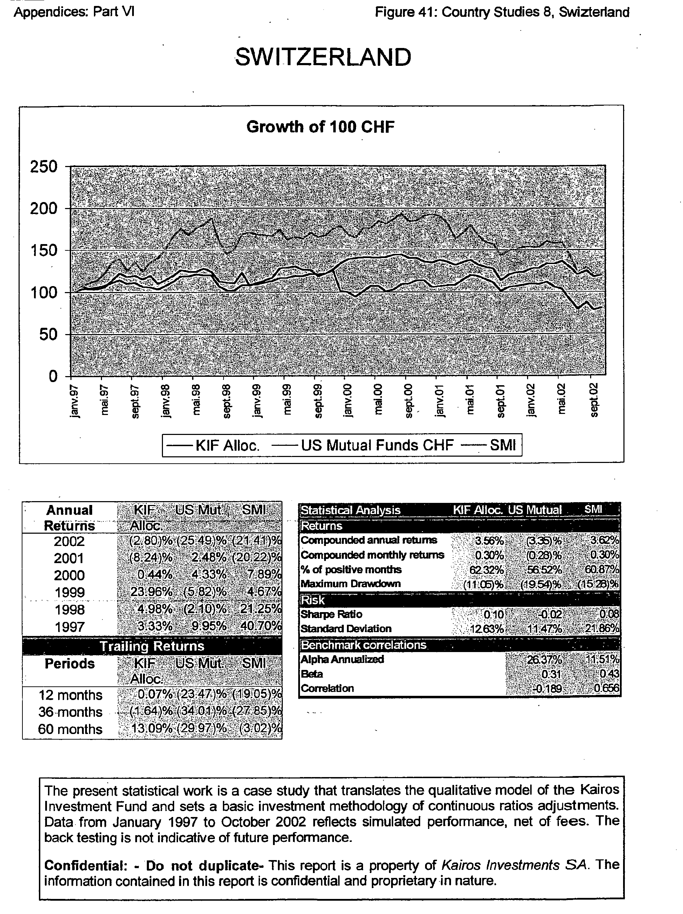

**Figure 41:** Switzerland

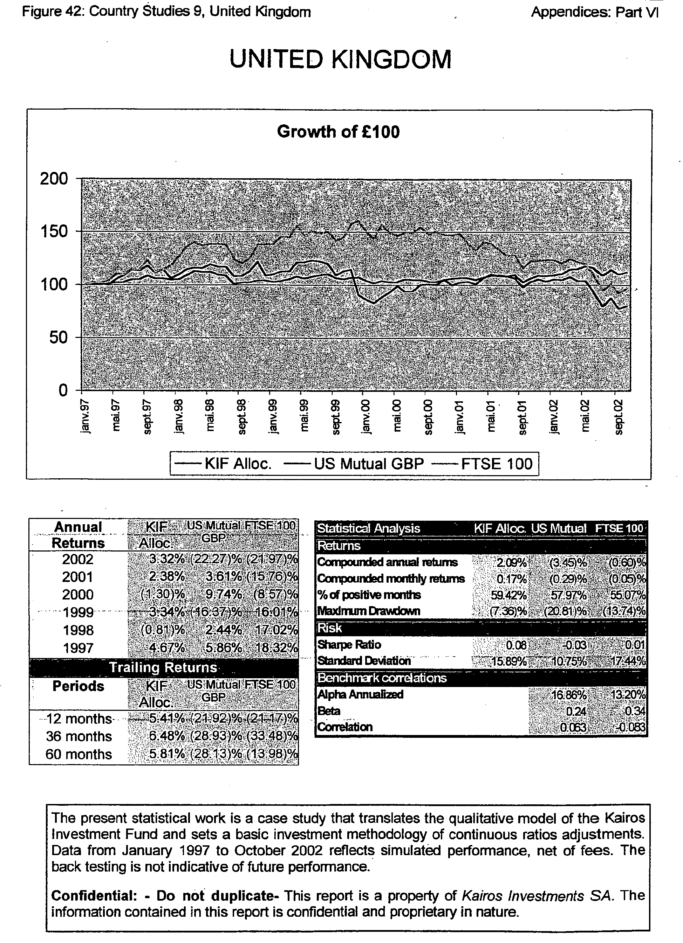

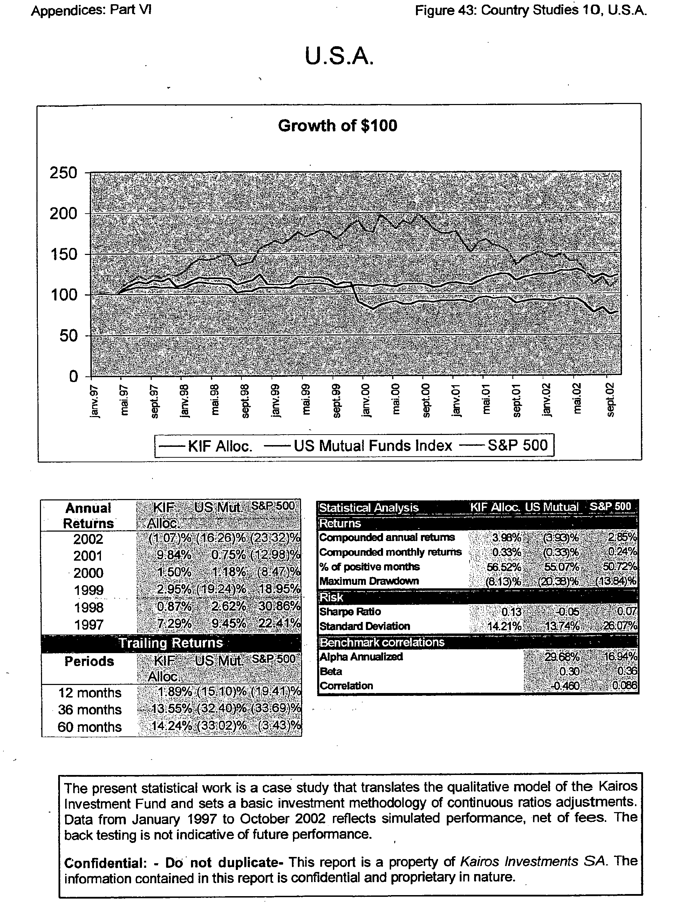

**Figure 42:** United Kingdom
**Figure 43:** U.S.A.

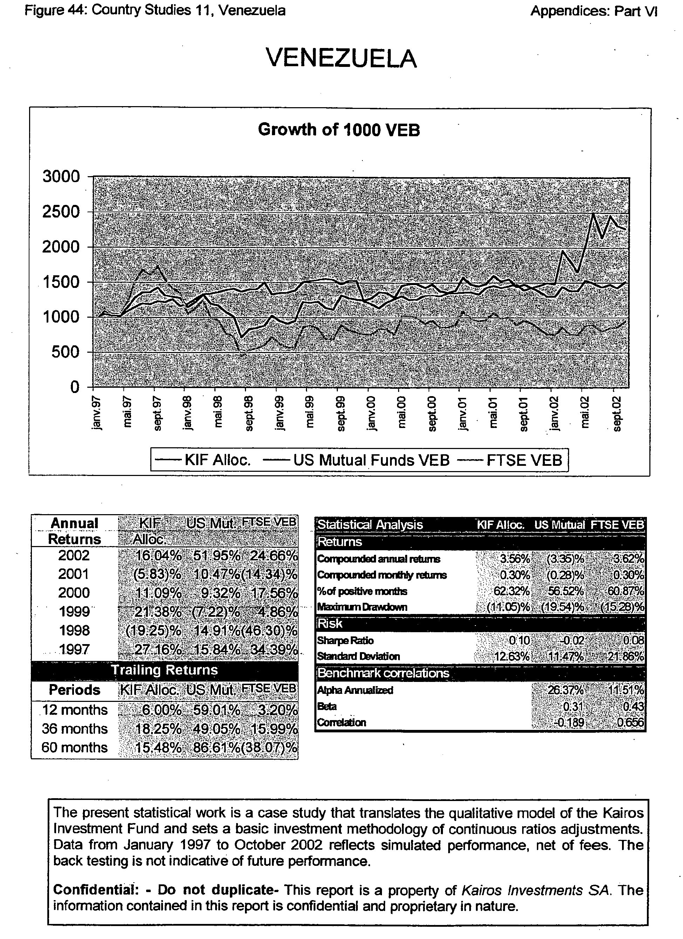

**Figure 44:** Venezuela

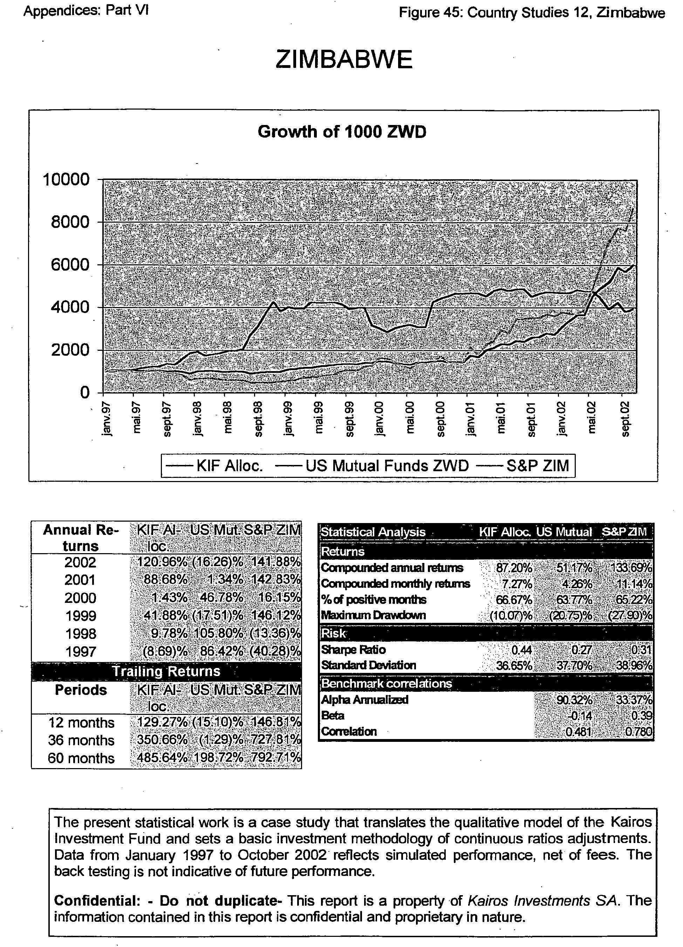

**Figure 45:** Zimbabwe

## 6. Detailed Description

### 6.1. Evolution of the Ethical Investment Industry

**6.1.1. From Ethos to Ethics:** Ethics broadly means a set of principles of conduct governing an individual or a group. The word *ethics* is derived from the Greek word *ethos,* which means habits or customs. The ethics of persons or groups do not consist only of what they habitually believe or customarily do, but also with what they think is fitting, right or obligatory to do in order to maintain the very possibility of life in society. In reality, persons often engage in habitual and customary conduct without any reflective thought. Ethics, however, calls for reflective evaluation concerning the conduct or action in question. The fundamental characteristic of ethics is its potential for transformation. It can prevent a breakdown of the social, economic, environmental and financial systems.

**6.1.2. The first generation approach to ethical investments** was to set up "negative criteria" indicating where not to invest. Examples are: refusing to invest in the production and sales of weapons, tobacco, alcohol and development of the nuclear industry. Actions based on negative criteria include organising campaigns to boycott products and services of companies, and sanctions against national governments.

**6.1.3. The second generation approach to ethical investments** was to establish "positive criteria", moving from what one does not want to what one wishes to encourage and promote. The actions based on positive criteria include advocacy for more transparency, Corporate citizenship, campaigns for charities, and setting up alternate investment vehicles like Micro Credit, (*Grameen Bank, Ecumenical Development Cooperative Society*)*,* that aim at serving those not served by the mainstream economic system.

The ethical investment industry became well known with the breakdown of the socio-economic system based on apartheid in South Africa. The examples of South Africa, Burma, Cuba and Iraq confirm the fact that sanctions and negative investment criteria can eventually lead to a breakdown of the social, political and economic systems, causing more damage to the Poor than to the Rich. The campaigns for charities, needed as they are to face the most urgent crises, can also prolong economic injustices.

### 6.2. A New Ethic of Investments

**6.2.1. The new Investment Ethic approach** seeks to move beyond the concepts of "ethical investments" that are expressed in the first and second generation approaches in order to develop a *new ethic of investment* that can address systemic issues and is relevant to the context of globalisation of financial markets. The said new ethic discloses the fact that financial investments in so far they affect people's lives have a relational dimension and therefore, investment decisions should take into account the concerns of those affected by investments. The *new investment ethic* approach emphasizes new responsibility of investors in a context where the traditional regulative mechanisms of the States in reducing social inequalities have become less effective. Investing according to this ethic means to take into account the particularities of investment needs in each country and to define continuously macro and micro economic investment as subservient to ethical principles in a global and diverse community. A discursive approach with various concerned parties is pursued in the decision making process. Therefore the New Investment Ethic Project chooses a consultative approach rather than a speculative one.

**6.2.2. Ethical constraints**: According to the said new ethic, Charity cannot replace the core ethical principles of liberty, dignity, economic justice, equality, equity and mutuality. Those who have to meet their basic economic needs through charity or welfare cannot have liberty, dignity or equity. Charity perpetuates dependency based on superiority of the donor, thus violating the principles of equality and mutuality. Therefore, Charity should come in addition to these principles. Furthermore, the global socio-economic system hinges on a monetized technique that functions on a credit expansion logic based on savings of individuals and institutions. Because of this reality, the token cancellation of debts in itself, needed as it may be to ease the burden of poorer nations, cannot transform the socio-economic system. Moreover, the core ethical principles *like liberty, justice, dignity of work, equity, equality and mutuality* are inter-related and interdependent. They cannot be separated from one another. It is only through the creation of conditions that can hold all these ethical principles together, that it would be possible to anticipate a viable and sustainable social, environmental, economic, and financial systems at the local, national, regional and global levels. The inseparability of the said core ethical principles and the non-substitutability and non tradability of charity for both economic injustices and economic freedom are regarded as critical ethical constraints (pre-condition) for implementing the *New Investment Ethic Project* in monetized economies.

**6.2.3. Democratising the global financial system:** One critical objection to the integration of the global financial markets is that those who advocate extending the market beyond national boundaries proceed without consulting those who are affected by these decisions. *The new investment ethic* seeks to address this problem through a unique decision-making procedure based on a model called *Discursive-Ethic.* The said model moves beyond the understanding of ethics as only a matter of personal or communitarian opinion; the discussions on ethical criteria for investments take into account a variety of perceptions and priorities on issues and situations that are often complex.

The discussions are conducted with each distinct protagonist of the investment system at three separate levels prior to convening common ethical debates among the said protagonists. The substance for these debates is generated through an ongoing diagnostic research and study on the causes and symptoms of the recurrent systemic crises.

*The first level* of discussion is between investors who acknowledge that the legitimacy to expect a financial return on investments implies a responsibility to ensure just considerations towards those affected by investment decisions.

*The second level* of discussions is with Corporation managers and representatives of institutions who are the immediate beneficiaries of these investments and are responsible for the allocation of resources. The purpose of this discussion is to interpret to them the ethical concerns and expectations of the investors.

*The third level* of discussion is with organised groups in the civil society and people directly affected by investment decisions, who are in a position to verify and provide feedback on the validity of investment criteria and their consequences.

This unique decision making method that is concluded with corrective and preventive criteria based on core ethical principles and procedures, enables to involve all concerned parties in ever-widening discussion and debates. It would eventually contribute to the democratisation of the global finance system.

**6.2.4. International Framework for discussion:** History and experience shows that attempts by religions, philosophies and ideologies to universalize, standardize or homogenize the diverse expressions of ethics have eventually led to confrontation and conflicts between nations, cultures, religions and ideologies related to their respective professional codes of conduct. Therefore the search for a relevant and coherent ethic of investment, requires taking into account the findings of these three levels of discussions, as well as the particularities and priorities of investment needs of different nations and cultures that are drawn into an inescapable reality of interdependency. It is out of this realization among concerned individuals and institutional investors that an international framework for discussion was born. It is called the *New Investment Ethic Foundation* (*NIEF*). The new ethic of investment developed through this Foundation and the related *Kairos Investments* (KI) - *Kairos Global Association for Investment- Ethic (KGAIE) (See: 6.4)* is referred to as the *new investment ethic Project.*

**6.2.5. Basic assumptions of the *KI- KGAIE* (in formation)**

**a***. Morality of Investments in monetized economies:* There is no financial investment that is morally unquestionable; neither is there any perfect individual or perfect institution: The interest of the workers in an armament factory does not coincide with those of the victims of these armaments. The peasant who sprays pesticides on his field does not see his action in the same way as an environmentalist or ecologist who measures its consequences for the fish of the river or for the water reserves. The company manager who is confronted with international competition, and lays off employees does not see things in the same way as the worker who is laid off or the Union leader. Each one is in a different logic that cannot be ignored even if they cannot all be accepted.

**b***. Technological innovations:* The dramatic shifts in patterns in employment provoked by major breakthroughs in technological innovations disrupt previous models of social organisation. While some forms of employment become redundant, new forms are created. The enormous investments diverted towards developing new technologies to improve the standard of living or quality of life neglect large parts of the population who lose their jobs and thus the dignity of life that comes with work. In such transition periods those who are excluded from new technological developments cannot be left to depend on charity or aid to meet their basic needs. The practice of meeting basic needs through charity defeats the purpose of technological advancements that seek to ease the burden of human labour. Therefore the retraining and reorganisation of societies in transition, which aim at preserving human dignity, should also be financed through investments.

**c***. Particularity of contexts and order of priorities:* Priorities of a State of India are not the same as that of a Swiss Canton. The urgencies for transportation and distribution of goods are not the same in the USA and South Africa.

The working conditions of workers in factories of Vietnamese sub-contractors are not the same as those in big Japanese companies. An approach that ignores the needs and the specific situation in each context, as well as the enormous inequalities between and within nations, only leads to further violence and confrontations between national governments and socio-economic groups.

**d**. *Multilateral and Discursive Ethics approach:* Throughout history deteriorating economic conditions have evoked ethical responses from a variety of economic actors. Whether it was supplying basic needs as public utilities, or the development of business ethics, or the rise of social movements, they all sought to correct the distortions of socio-economic system. However, normative and ideological approaches to ethical codes of conduct gradually develop into ethos of communities. The commercial logic that seeks to satisfy the diverse cultural and habitual needs often reinforces the understanding of ethos as ethics. The political philosophies that protect particular interests of socio economic groups have obscured the essential difference between ethos and ethics. For this reason questions such as what is ethical? Who decides what is ethical? For whom is it ethical? etc. remain unresolved. There fore, normative and static approaches to ethics in the field of investments cannot address the recurrent socio economic problems; thus the new investment ethic approach cannot be only static or normative. It should be dynamic, inductive and initiate a movement. It cannot be unilateral based only on protecting one's own interest, but must be multilateral and *discursive.* It should be recognized that each of the concerned parties has a responsibility and role in the solution. Therefore cooperation should be sought from all to reach agreement so that the legitimate economic needs of all may eventually be met.

**6.2.6 Ethical Basis and Horizon:** As mentioned in 4.1.6 the concept of *discursive* or *discourse ethic* that is used in the present invention is referred to the work of the philosophers Karl Otto Apel and J. Habermas. The intention of their particular model of discourse ethic is to provide a rational foundation to morality and not to develop an applied ethic. Many elements of the said model offer a useful theoretical framework for the purpose of implementing the *New Investment-Ethic Project,* as it does for making decisions in various sectors concerned with public policies (*deliberative democracy*).

**a**. *Noteworthy elements of this reflection for implementing the Project include:*
The critic, developed by J. Habermas in his important work "Theory of Communicative Action" published in 1981, of the dominant "instrumental rationality" and his arguments in favour of a "communicative rationality" and of a "communicative action";
The priority given to what is *right* over what is *good* in defining norms, thus providing a way, through formal and procedural approaches, to deal with the conflicts between the various conceptions of the *good life* that necessarily arise in a globalising economy.
The dialogical approach to justice and the conditions for the "ideal" or "undistorted" speech situation and for norms of a just action to be validated, as formulated in principle D: "Only those norms can claim to be valid that meet (or could meet) with the approval of all affected in their capacity as participants in a practical discourse" (Habermas, 1990, *Moral Consciousness and Communicative Action,* p.64).
The goal of the discursive process, which is to obtain a consensus around the better *argument,* is completed by the *rule of argumentation U:* "For a norm to be valid, the consequences and side effects that its *general* observance can be expected to have for the satisfaction of the particular interests of *each* person affected must be such that *all* affected can accept them freely." (Habermas, *ibid* p.120)
**b**. *Practical dimension:* The said noteworthy elements provide a path and a *horizon* for ongoing definitions of procedures, norms, policies and criteria to be applied to investments. Nevertheless, several additional factors needed to be taken into consideration to use the *Discursive Ethic model* and to implement the *New Investment Ethic Project*. A number of questions remain unanswered in the said model. These questions include:

- Can the issue of representation of others who, for various reasons, are not in the position of speaking for themselves be avoided?
- How can the distortions of power between the participants invited to be part of the discourse be avoided? What are the pre-requirement from participants and the concrete conditions necessary for the "ideal" speech situation to be met?
- How can the tension between the search for a universal validity of a norm and the historicity of each particular situation be taken into account?
For this reason, a complementary perspective was required to adapt this *neo-Kantian* model, in a way that would allow to carry on a consultative and deliberative process, leading to the required decisions and taking into account the particular nature of the project and of the local and global financial contexts. The search for a *practical wisdom* -a *phronesis* in *Aristotelian* terms- as advocated by Paul Ricoeur in the "Small ethic" included in *Oneself* as *another* (1990, Studies 7 to 9) was called upon, together with several other ethical sources, including Adam Smith, Max Weber, Emmanuel Levinas, John Rawls, Amarthya Senn, etc.... as well as concrete experience of international organisations confronted with ethical decision-making procedures in a global environment.

**6.2.7. Terms of Reference:** Despite the efforts of J. Habermas, H. Kung and others to provide a common ground for moral actions, there is no undisputed basis, whether philosophical, or theological, for a universal code of ethic. Neither are there universal standards that could be applied in the same way to diverse contexts with different priorities. Nevertheless, international instruments like the *Universal Declaration of Human Rights* and agreements reached in concerned international for a like the *Earth Summit, Social Summit, Beijing Women's Conference* and the *International Labour Organization* can serve as terms of reference. Why? Because these statements show the emergence of a common ethical consciousness and tradition in the international community even if they reflect particular historic realities in the context of political negotiation. The damage to human society caused by the ravages of wars and recurring economic disorders in recent times has led participants in these negotiations to recognize the lack of justice and trust and thus make statements that aim at restoring human dignity and rights. Therefore these statements will be used when verifying the order of priorities and defining investment criteria for implementing the *New Investment Ethic Project. (See: Figure 5)*

## 6.3. Ethical Matrix: human dignity based system

**6.3.1. Absolute pre-condition for implementing the project**: The various disciplines related to Ethics and Finance, often develop a variety of language mixes and technical vocabulary according to their own traditions of resistance to unjust economic and financial systems. The distrust and suspicions that arise due to misunderstanding of such languages of resistance often prevent the human faculties of reasoning from developing rational foundations for moral actions. In other words, such suspicions and distrusts prevent the mental, emotional and spiritual faculties of reasoning from recognising the fairest argument around which the *New Investment Ethic Project* seeks to build trustworthy relationships and resolve the systemic nature of the problem. Therefore, providing a rational understanding of the *Securities Exchange System,* was regarded as an absolute pre-condition for adapting the discursive ethic model for implementing the *New Investment Ethic Project.* (the securities exchange system is also known as the financial system or as the lending and borrowing system).

**6.3.2. Overcoming suspicions and distrust:** In monetized economies, however, the unresolved tensions between *Charity and economic justices,* and between *Charity and economic liberty/freedom* often breed another kind of suspicion which is to regard the use of charity and aid as a management tool, as a way of concealing the inequities of the global economic and financial systems. This kind of suspicion (which is different from the previous kind mentioned in *6.3.1.*) provokes contradicting ethical convictions, leading to further communal and religious violence and retrenchment. Given that the main motivation for providing a rational understanding of the financial system is to remove suspicions and enable human faculties of reasoning to recognise the fairest argument in ethical debates, it was important to identify a common ground that can sustain transactions among parties with conflicts of interests including diverse ethical convictions even in times of economic crises.

**6.3.3. Common ground for concluding ethical debates:** There is something about money that raises critical questions to philosophers and theologians in times of major economic crises. People from different communities, who don't share the same belief, can still make financial transactions. Furthermore, in the heat of religious and communal conflicts, a common currency can still be used. A commodity like money is able to maintain a common ground between parties in conflict, when what ought to be much more powerful and unifying factors such as belief in God and respect for human life are falling. Therefore, a verbal articulation and a visual representation of the various relationships and inter-actions between the three main economic Sectors that engage in deliberate financial transactions was regarded as the first step for providing a rational understanding of the system. The said understanding would also assist in sustaining a suspicion-alleviating common ground between parties with conflict of interests, even in times of major social, economic political and financial systemic crises. This articulation includes the financial relationships between the parties with conflict of interests, namely, between the Lenders and Borrowers on the one hand and the generators of income, employment and services on the other. In other words, a rational understanding of the critical financial links is presumed as a common ground for enabling the parties with conflict of interests to recognise the fairest argument, which is necessary for concluding ethical debates. (*See: 6.3.4. and Figure 1*)

**6.3.4. Rational understanding of the *Securities Exchange System:*** The constant advocacy to sustain the core-ethical values of human dignity and human rights has today led to the evolution of a financial system in which three types of institutional Sectors (the *Government, Business* and the *Third Sectors)* are required to function with three kinds of logic (*See: 6.3.6 and Figure 1*). These institutions are both service and job providers in societies that seek to transform into democratic models of service economies. Ensuring a simultaneous flow of both services and employment remunerated with money (providing a decent living income), alongside deploying the savings and taxes generated through employment, is a pre-condition to sustain the stability of a people-centred economic and financial system. The three types of institutional Sectors are pre-requisites for preventing systemic concentrations or structural injustices in every country. This, in turn, can ensure social cohesion and peace or systemic balance at local, national, regional and global levels. In other words, the three types of institutions also have a collective responsibility to facilitate the smooth flow of employment and wealth creation, within the global investment industry, and thus prevent economic collapses or the system reverting back to monopolistic and undemocratic governance practices.

In democratic societies that refer to human dignity as a core ethical value, a money remunerated employment system is considered a superior one compared to previous systems of slave/forced or bonded labour. A significant part of the taxes and savings generated through money remunerated employment today are re-deployed as either equity and loan capital, or both, in the production and distribution processes of goods and services. The savings, which individuals and institutions put aside for future consumption needs, are considered as legitimately earned capital compared to the previous systems of forced expropriation of capital or the capital accumulated through slave trade and the deployment of bonded labour. In the present system of legitimate capital deployment, it is recognised that the capital belongs to the investor but the benefit of its use is deferred. It is also assumed that the investor by entrusting the capital to a third party is taking a risk that should be compensated. This also means that the viability or the sustainability of human dignity and human rights oriented financial system is dependent on the financial return that is offered to the investor for the risk that is taken.

**6.3.5. Democratic model of service economies:** Moreover, the income generated through private savings, pension funds and other insurance schemes including health care and education schemes, form the basis for what are known as financial investments. The said investments are channelled to finance the activities of enterprises regardless of whether they operate on a for-profit logic or non-profit logic. All those who get an income for their work or get a pension for sustaining life in monetized economies have become capital and loan providers to the securities exchange markets in which the relevance and complementary nature of specific missions of the three economic Sectors is required to be recognised. Therefore, the fundamental purpose of the securities exchange system is to continuously finance the legitimate and distinct missions of the three types of economic Sectors that have a collective responsibility to generate employment, income, services and thereby contribute to democratic model of service economies.

**6.3.6. Parameters and gaps of the investment industry:** The parameters of the investment industry are identified according to the kinds of logic in which the interdependent economic Sectors generate employment, income, services and savings to both sustain investment flows and systemic stability:

　　　　a. *Three kinds of logic:* The Nation State Sector, (also known as the Government/Public Sector), which is the supreme governing authority of a country, is required to function with a non-profit logic. The Commercial Sector (known as the Business Sector), functions with a for-profit logic. The non governmental organisations of Civil Society (known as the Third Sector/ or NGO Sector) functions with non-profit logic. They are the main employment and income generators; Income is generated through various non-profit and for-profit services including public services.

　　　　b. *Technical Gaps in security instruments:* The Lenders and Borrowers are using shares and bonds of the Government Sector, and of corporate Private Sector/Business Sector as security instruments; but there is no equivalent model for the Third Sector, which is already contributing largely to human development in monetized economies. Until today, the Third Sector has no easy access to securities exchange markets although the institutions of the Third Sector are always put under pressure to respond to the recurrent economic and financial systemic crises (*See the question mark "?" in Figure 1)*

　　　　c. *Note*: The Securities of Corporations of a given country in which a democratically elected nation state owns at least 51% of the core equity share capital, are regarded as financial assets of the Government Sector. Securities of Corporations in which a nation state owns less than 50% of the core equity share capital are regarded as a financial assets of the Business Sector. securities of Incorporated NGOs which function with non-profit logic are regarded as financial assets of the Third Sector.

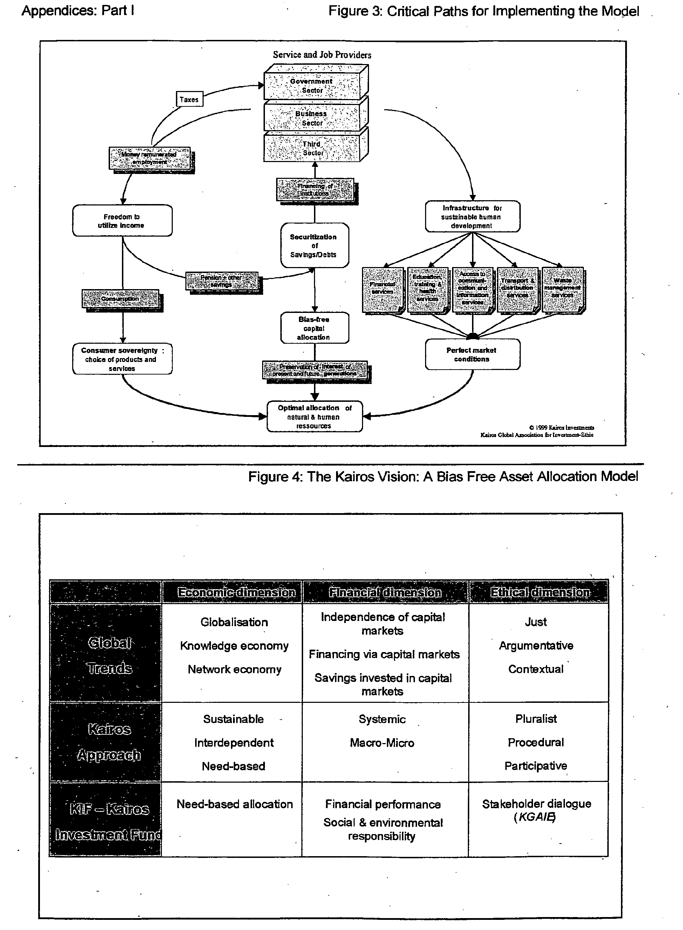

**6.3.7. Brief description of critical paths:** The New Investment Ethic Project pursues three critical paths, which together seek to optimise the allocations of both human and natural resources (*See*: *Figure 3*) and thereby contribute to democratic model of service economies. A brief description of the three critical paths is given below:

　　　　a. *The first path* seeks to facilitate the process of generating employment and financial income within both hard and soft currency countries in order to enable consumers in monetized economies to decide on what is the best product and service according to their own needs and budgets. The purpose of this path is to deter monopolies through economic freedom and consumer sovereignty for both products and services generated by the agents of the three economic sectors.

**b**. *The second critical path* has two cutting edges: On one edge, it seeks to securitise the savings that individuals and institutions put away for future consumptions in order to give moral personality status to institutions that address the diverse concerns of those affected by investment decisions. In other words, one edge of the path seeks to mobilise savings to initiate the formation of new kind of institutions that are able to deliver products and services relevant for the context of globalisation of financial markets. The other cutting edge of the second critical path seeks to propose bias free asset allocations based on a set of objective criteria, referred to as *shared value criteria* (*i.e.: The shared value criteria comprises shared responsibility, shared wealth/return, and shared risk between hard and soft currency countries, and between for-profit and non-profit Sectors).* The purpose of this edge is to introduce a shared value mechanism into the global investment industry, taking into consideration the interests of future generations (*See: 6.3.8.*).

**c**. *The third critical path* seeks to facilitate portfolio construction processes that focus on developing infrastructure services that facilitate sustainable human development. The purpose of this particular path is to create perfect market conditions through portfolio mixes that provide equal access to both information and credit.

**6.3.8. Practical implementation of shared value mechanism:** The various ways of expropriating capital and of deploying human labour (slave labour, migrant labour, women labour, child labour, prison labour etc), in the process of industrialization within both hard and soft currency countries have contributed to complex historical conflicts. Moreover, the hard-soft currency divide with which the global financial system was founded after the Second World War has initiated an inequitable operating framework for financial transactions for national economies that are dependent on one another for both human and natural resources. The analyses of the said historical conflicts and the inequities of the operating framework for financial transactions led to the conclusion that values in the field of economy are influenced by historical conflicts; therefore an effective implementation of the shared value mechanism in the global investment industry requires the following:

- Taking into consideration the complexities of interdependencies from the perspectives of the increasing gap between hard and soft currency countries
- Holding the agents of the three main economic Sectors within each national economy, collectively responsible for sustaining the stability of the economic and financial systems.

Therefore, three bottom line criteria for interdependence had to be formulated. The said bottom line criteria referred to as shared value criteria are:

**a**. There will be no investments in countries where there are no investors who have committed their own assets and thus contribute to the discussion and monitoring process.

**b**. The amount of assets allocated to a given country is dependent on the amount raised in that country; but the initial amounts allocated to soft currency countries will be proportionately larger than what the investors of these countries themselves have contributed.

**c**. The asset allocations within a country are dependent on enabling the three main economic Sectors to perform their distinct missions with corresponding logic and thereby assume collective responsibility for sustaining financial stability.

**6.3.9. Bias free asset allocation Model:** The bias free asset allocation model based on objective criteria (See: 6.3.7-b) has Economic, Financial and Ethical dimensions (*See: Figure 4*):

| **Economic dimension:** | **Financial Dimension:** | **Ethical dimension:** |
|---|---|---|
| Sustainable: long-term | Systemic | Pluralist |
| Interdependent | Macro-Micro | Procedural |
| Need-based: | Bottom-up approach | Participative |
| - Employment creation | | |
| - Service oriented | | |
| - Technological progress | | |
| - Inclusion | | |

## 6.4. Operations and Organizations

**6.4.1. Complimentary structure for ethical policy development:** The primary purpose of the *New Investment Ethic Project* (*NIEP*) is to identify and detract the conjunction of tensions that cause systemic collapses. It includes the alleviation of recurrent tensions that arise between ethics and finance, capital and labour, between peoples in hard and soft currency countries and between institutions, which operate on for-profit and non-profit logic. In view of effectively addressing the said systemic nature of the problem the ethical policy *development* structure requires being independent from the ethical policy *implementation* structure. The structure invented to develop ethical policies for allocating assets in portfolios of investments is called the *New Investment Ethic Foundation.*

**6.4.2. The New Investment Ethic Foundation (NIEF):** *The NIEF (See: Figure 5 and 6)* provides formal space for ethical debates that aim at alleviating systemic tensions and at linking lenders and borrowers are conducted. The *NIEF* is responsible for monitoring the interactions and transitions between the three main economic actors in order to nurture the anti-monopolistic nature of the Third Sector and thereby prevent one economic Sector being instrumentalized by another. A panel comprising the custodians of the ethical policy for allocating assets in portfolios of investments, issue recommendations based on the relevance of ethical choices and on feedbacks on the following:

- Country needs;
- For-profit and non-profit organisations;
- People who are directly or indirectly affected by the investment decisions in interdependent national economies;
- Individual and institutional concerns regarding financial return.

*a. Aims and tasks of the Foundation:*

- To link lenders and borrowers within a common ethical framework;
- To conclude ethical debates on the role of investments in the creation and distribution of wealth, with principles and procedures for allocating assets in portfolios of investments;
- To provide a space for an informed understanding of the relational and interdependent dimensions of investments, economy, society, environment and of the various economic actors and financial institutions;
- To develop educational tools and programs for advocating the New Investment Ethic;
- To generate recommendations on ethical policies for asset allocation.

*b. Who are the Members?*
The members of the Foundation are men and women who come from the non-profit, for-profit and academic Sectors and have adequate knowledge of the relevance of professional codes of conduct. They include Ethicists, University Professors, Jurists, Representatives of humanitarian institutions, Philosophers, Business consultants and Financial Analysts. A core group referred to as *custodians of the ethical policy,* enable the development the theoretical model of *new investment ethic on the basis of* the actual results from practical implementation of the model. The custodians of the ethical policy include scholars who are familiar with critical theological and philosophical thoughts and practices that have influenced the ethical interventions in the field of finance in major continents of the world, and scholars who are familiar with theories and practices related to asset allocation models, econometrics and financial analysis of asset classes.

*6.4.3. The Kairos Global Association for Investment-ethic (KGAIE):* KGAIE is a non-profit non-governmental organisation that aims at implementing and monitoring *the New Investment Ethic Project* from the perspective of the non-profit logic. It aims at advocating the new investment ethic through strategies that build trust between for-profit and non-profit enterprises and people in hard and soft currency countries. *KGAIE* is present in each country where the pilot model fund, *KIF,* is active. *KGAIE* is the interface between institutions of the Third Sector in which *KIF* invests and the *KI (Kairos Investments Ltd),* which translates strategies into an applicable mode in the investment industry.

*a. Aims and tasks of the Association:*

- To pursue the diagnostic research and study on the role of financial investments in social and environmental concerns from the perspective of non-profit logic;
- To identify both the causes and symptoms of economic injustices in each country in which the model Fund, *KIF,* invests;
- To propose strategies to diversify the activities of the non-profit NGO Sector within the framework of allocating the assets of the model Fund, *KIF;*
- To provide substance/input from the perspective of the non-profit logic for organised ethical debates;

- To set up processes for monitoring the financial flows from hard to soft currency countries that are invested in non-profit enterprises in which the *KIF* invests;
- To contribute to the democratisation of the global finance system through initiating a movement which enables to clarify the significance of implementing the *New Investment Ethic Project in an era of globalisation of securities exchange market;*
- To provide formal space for an informed understanding of the relational and interdependent dimensions of investments, economy, society, environment and of the various economic actors and financial institutions.

**b**. *Who are the Members?*

The ethically concerned individual and institutional investors often believe that the ethical concern for the human community does not belong to any particular religion, philosophy or ideology. Therefore the members of the Association are women and men who come from different religious, philosophic and humanistic traditions.

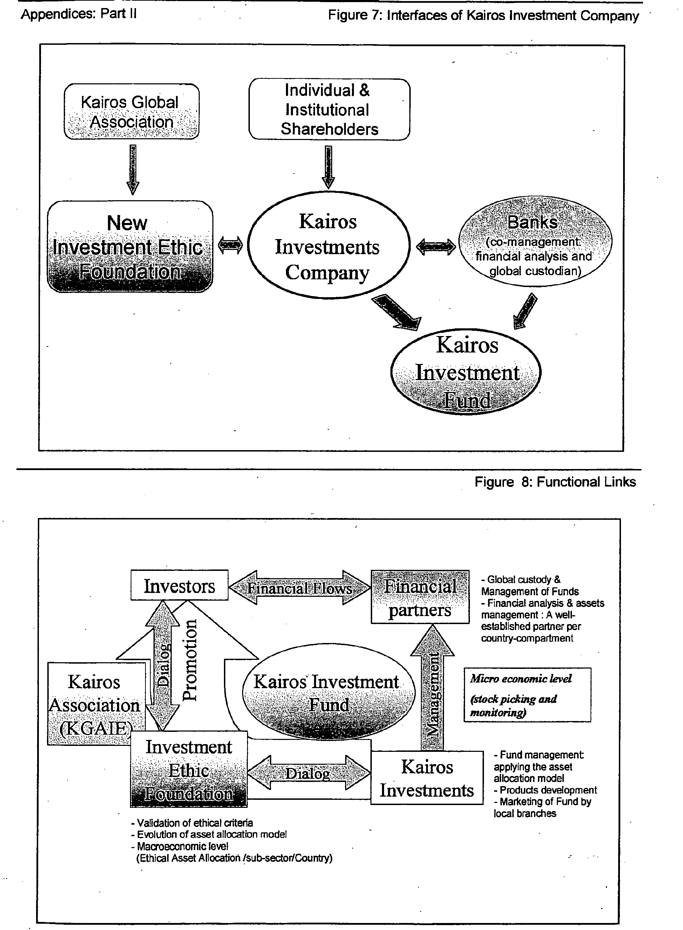

**6.4.4. The *Kairos Investments* company (*KI*):** The *KI* *(See: Figure* 7) is a limited liability company that provides formal space for conducting diagnostic research and analysis from the perspective of the for-profit logic in order to determine the level of economic injustices and of economic freedom in contemporary societies. The *KI* is present in each country where the model fund *KIF* is active. *KI* is the interface between institutions of the for-profit Sector in which *KIF* invests and the financial partners that are responsible for financial functions of the Fund. The *KI* is responsible for both monitoring the implementation and development of the *New Investment-Ethic Project,* as well as to represent the concerns of the for profit Sector in ethical debates that the *NIEF* convenes prior to issuing conclusive asset allocation recommendations. *KI* is the interface between the *NIEF,* and the *Pilot model* financial instrument *KIF,* which applies the *New Investment Ethic.*

**a**. *Aims and tasks of the KI*

- To pursue the diagnostic research on the role of investments in social and environmental concerns from the perspective of for-profit logic.
- To identify both the causes and symptoms of economic injustices in each country in which the model Fund, *KIF* invests.
- To generate substance/input for the ethical debates from the perspective of the for-profit logic.
- To provide feedback on the concerns of the for-profit Sector
- To specify algorithms and asset allocation strategies based on the ethical choices and recommendations of the *New Investment Ethic Foundation.*
- To set up processes for monitoring the financial flows from hard to soft currency countries that are invested in for-profit enterprises in which the *KIF* invests
- To propose investment strategies, which do not diminish the value of both human labour and capital in weak/soft currency countries.
- To promote the model in organisations that function with a for-profit logic.
- To provide formal space for an informed understanding of the relational and interdependent dimensions of investments, economy, society, environment and of the various economic actors that function with for-profit logic.

**b**. *Who are the Members?*

The Members of the *KI* are a local and global community of professionals from the industrial Sectors related to basic infrastructure structure services such as financial services, health and education services, communication and transport services, and waste management services which are relevant for sustainable human development. They specify algorithms and asset allocation strategies based on the ethical choices and recommendations of the *New Investment Ethic Foundation.* The members provide ethical financial engineering and computer program products to the *Kairos Investment Fund KIF* and to any other financial institution interested in the *New Investment Ethic.*

**6.4.5. Technical structure for implementing ethical policy:** Implementing a New ethic of investments requires a pilot financial instrument that can apply the ethic in the investment industry. The most fitting model of technical structure that provides investors the opportunity to participate with others who share a common ethical vision and investment objective, in a dynamic process is an open-ended investment Fund.

**6.4.6. Model Fund:** The *Pilot investment Fund produced* to serve this purpose is called the *Kairos Investment Fund (KIF).* The *KIF* is an open-ended multi-country investment fund. Each participating country is treated as a distinct compartment within the same Fund. It is a type of fund that is known as *Fonds Commun de Placement* in Continental Europe, *Unit Trust* in the UK and *Mutual Fund* in Canada and USA. The investments in the *KIF* are represented by *Units,* which require being issued and paid in the local currencies of the countries from which investors participate. Each Unit entitles an investor to participate proportionately in any distribution of net income and net capital gains made by the relevant compartments of the Fund. The pilot Fund *KIF* will apply the ethical policy for asset allocation recommended by the *New Investment Ethic Foundation (NIEF).*

    **a**. *Ethical mission and goal:* The core ethical mission of the Fund is to enable investors from both hard and soft currency countries to participate in the same Fund. The Fund seeks to replace the prevailing ethos of distrusts between various social, political or economic groups with an ethic based on trust and fair economic relations. The Fund, through this ethic, aims at contributing to a socially cohesive environmentally secure and financial reliable world for all.

    **b**. *Financial mission and goal:* The core financial mission of the *Kairos Investment Fund* is to provide its Unit holders with a sustainable rate of financial return through middle to long-term capital appreciation.

    **c**. *Who are the Investors of the Fund, KIF? :* The Investors of the Fund are individual and institutional investors who acknowledge that one person, one professional community, or a nation alone cannot decide on the relevance of one's ethical choices of investments without taking into consideration the opinions of others who are directly or indirectly affected by those investment decisions in an interdependent world. The investors are entitled to participate in developing tools of analysis and criteria for implementing the *New Investment Ethic Project.* They enable to advocate and implement the *New Investment Ethic* in which human well-being will remain the ultimate criterion and goal.

The functional links between the various organizations are illustrated in *Figure* 8 and the Asset management functions and Governance structure are presented below (*See: 6.6.*)

## 6.5. Guidelines and Reference for Portfolio Construction

**6.5.1. Bottom-up approach:** The Fund will seek to achieve its investment objective through an investment style that applies a bottom-up approach to both asset allocation and selection of shares and bonds. Bottom-up because the asset allocation policy starts from considering the needs of people of a given country within the priorities defined by democratically elected national governments at a given time:

- The fund will develop in each participating country and only in those countries where local investors participate in the model Fund;

- Three core ethical principles referred to as *shared-responsibility, shared-risk* and *shared-wealth* between hard and soft currency country compartments will govern the bottom-up asset allocation procedure and portfolio construction process of the Fund. Indices of references such as GDP per capita, employment index, human development indices will be applied to determine the level of participation and the level of asset allocation per country.

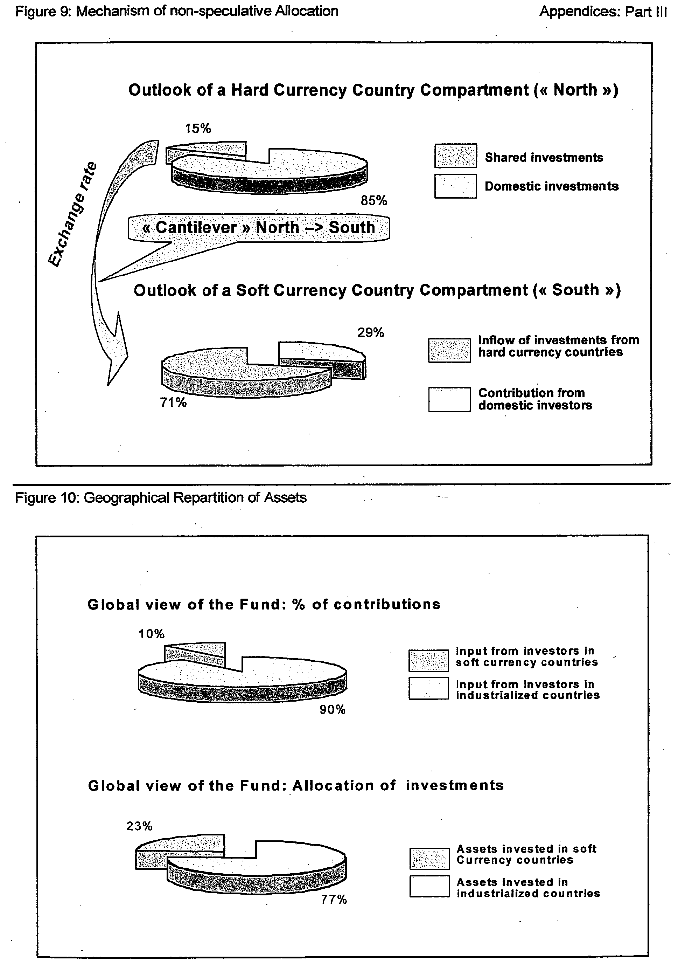

**6.5.2. Non speculative allocation:** An ethical innovation of the *New Investment Ethic Project* is to put in place a mechanism of shared responsibility between the various countries by allocating a percentage of the funds raised in hard currency countries in the first year to investments into the soft currency countries. (15% in a first step but any number is also within the scope of this invention). To the latter, this model guarantees sustainable investments, which are not subjected to speculative movements of funds that create recurrent social, political and economic crises in the soft currency countries. The exchange rate provides a de facto financial leverage on the amount of money invested and the 15% become equivalent to 71% once converted into the soft currencies. The mutual responsibility is guaranteed by the risk mitigation between the various compartments. (*See :Figures 9-11*)

    **a**. *Contributions :* The contribution of the soft currency countries will be set to 10%, and the contribution of the hard currency countries will be set to 90% of the fund. (*See*: *Figure 9*)

    **b**. *Allocation of the investments:* This global fund will be allocated for 23% in emerging countries and 77% in hard country countries. (*See: Figure 10*)

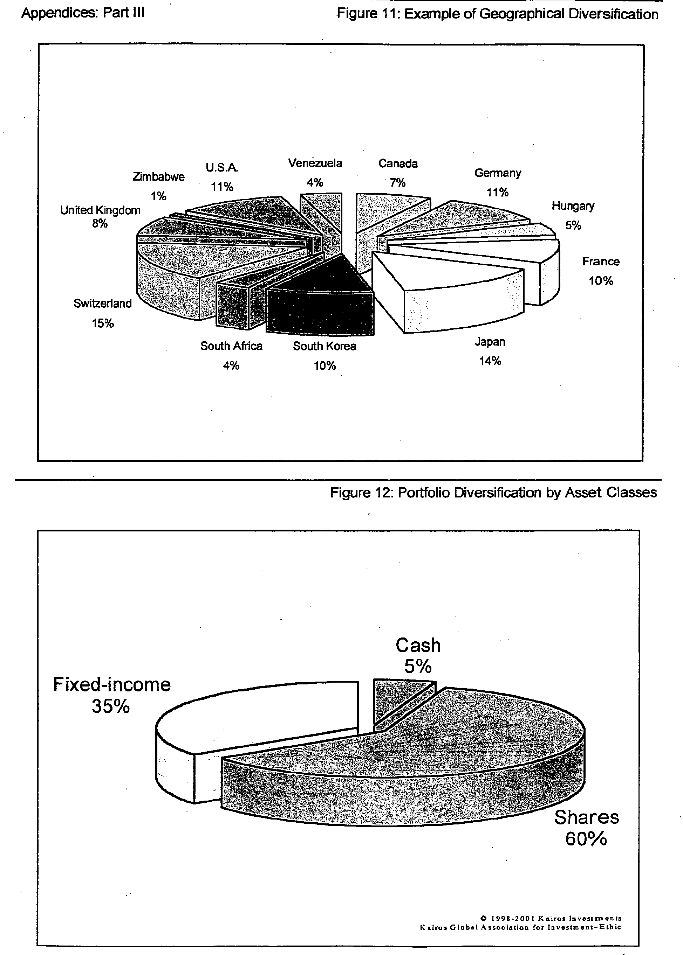

    **c**. *Geographical risk diversification:* The initial sample of twelve countries selected to launch the fund belong to North, South, the East and the West. This in itself provides a geographical risk diversification. (*See*: *Figure 11*)

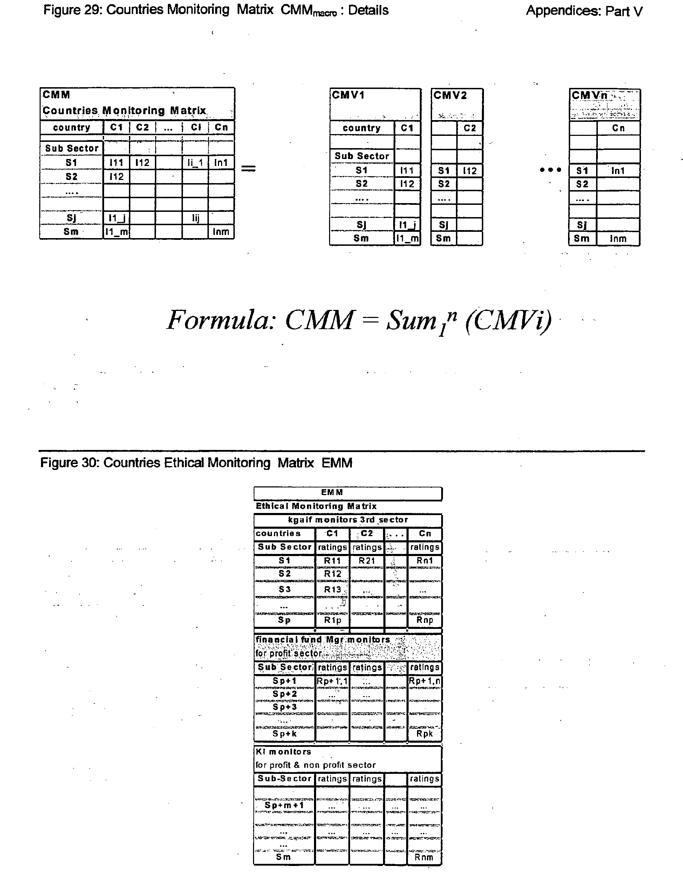

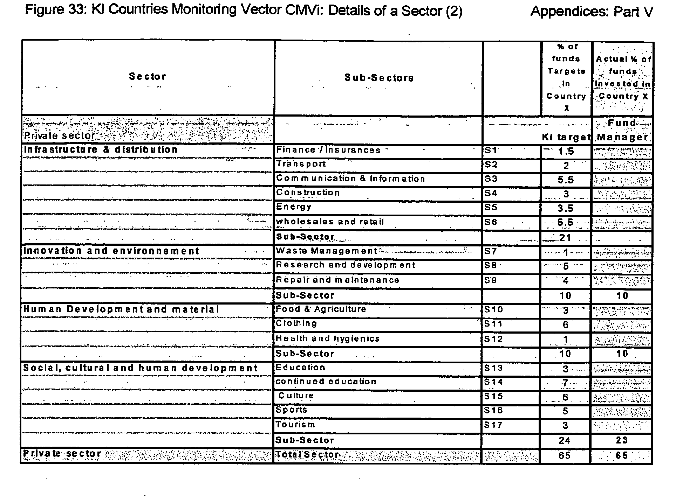

*d. Country needs :* In each country-compartment, allocation is a function of country needs. The allocation takes into account the needs of the three economic agents that interact in a country economy, the Government sector, the Private sector, the Third sector and cash is required by law to ensure some liquidity of the fund. A target vector of country needs VN is regularly issued by *Kairos Investments,* based on parameters of ethical matrix (*See*: *Figures 30*-33) and taking into account indicators such as human development, country economic indicators, including ethical indicators.

*e. Asset class risk diversification:*
The asset class diversification takes into account the consistency between economic activity and the agent that provides it. In addition, the consistency between the codes of conduct and practices of various economic agents are taken into account when selecting a given class of asset. The aim is to sustain the stability of the financial system as follows *(See: Figure 12):*

- *Bonds* (in the state public sector, in the private sector, by individuals, and more by associations and various representatives of the Third sector),
- *Stocks/Equity shares* (in the Business Sector and Third Sector, by small and midsize companies),
- *Monetary market* (in the state public sector).

The Fund will not be invested in speculative instruments.

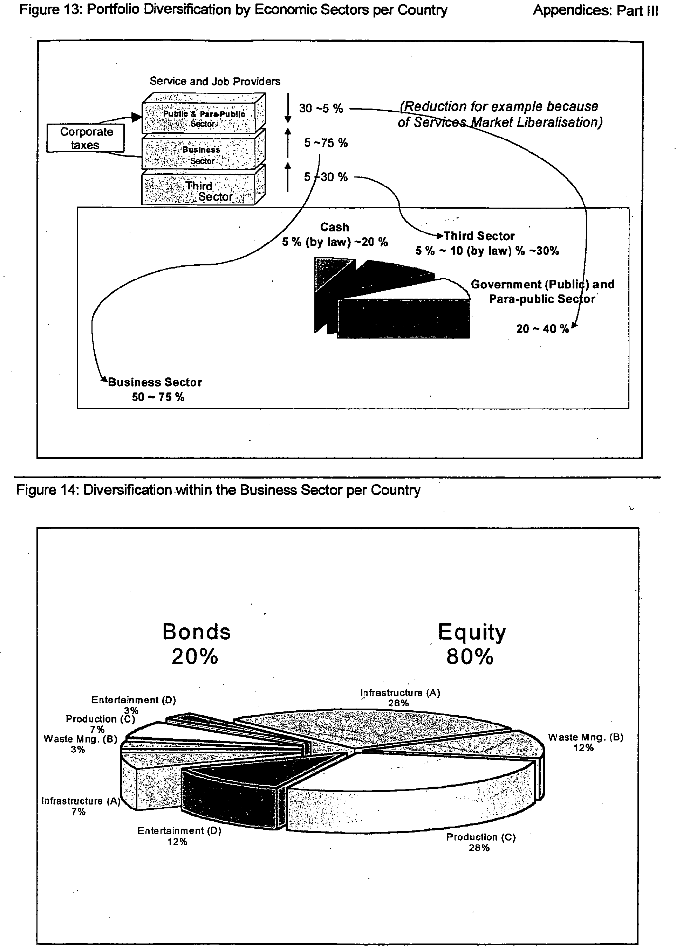

*h. Note on the Third Sector.* An ethical innovation of the project is to enable the *anti-monopolistic feature* of the Third Sector to sustain the stability of the financial system. This is addressed through a progressive increase of assets allocated to the third Sector (*See*: *Figure 13*). Within the framework of the *Kairos Investment Fund.* Thus the new model will help to achieve a stable financing for the projects of the third sector.

*I. Stocks and bonds picking.* The manager of financial functions of the fund will pick, within each sector, various stocks and bonds according to financial criteria and micro ethical criteria defined to select asset classes. (*See: 6.5.3.*) An "actual financial asset vector" will be established to enable *KI* to follow the actual asset allocation and compare it to the set target (Ethical Asset Allocation Vector).

**6.5.3. Micro ethical criteria for selecting asset classes:**

**a**. *Shares*

The Fund will give priority to shares of companies:

- Which do not distort competition through their strategies and activities (monopolies, corruption, etc.);
- In which the lines of accountability in view of structure and activities (core business) are clear and transparent;
- Which rely on the turnover method of profit-making rather than on the profit margin one, in the case of privatisation of basic needs and public goods such as staple food, water, housing, clothing, energy, security, transport, telecommunication, health, education etc..

**b**. *Bonds:*

The Fund will give priority to bonds that finance the missions of the public and para-public sectors towards:

- Education and retraining of skills and re-employment of personnel made redundant by the development of new technologies or by a change in political directions;
- Waste management and development of products and processes that prevent environmental degradation;
- In the case of justice oriented missions of the non-profit sectors or the Third Sector, the Fund will give priority to credible bond issuers that finance projects that are pre-requisite for sustaining equality of opportunity, reducing conflicts between genders, races, cultures and meeting social needs;
- In the case of corporate bonds or long term loans to companies, the Fund will give priority to projects of companies that finance products or services that serve the interests of a majority of the local community in the countries in which the companies are located.

**6.5.4. Micro ethical criteria for selecting industrial sectors:**

- *Government Sector:* In the case of the government sector, the Fund will give priority to providers of essential services that preserve public interest.
- *Business Sector:* In the case of the Business Sector, which functions on for-profit logic, the Fund will give priority to efficient economic agents and multipliers through decent wages and corporation tax.
- *Third Sector:* In the case of the case of the Third Sector, which functions with non-governmental non-profit logic, the Fund will give priority to providers of essential products and services that are not offered by the Government or Business Sectors or what is offered does not cater to specific economic needs.

**6.5.5. Micro economic criteria fro stock picking:** Within the above-mentioned framework of goods and service providers, the Fund will apply the following ethical criteria when selecting economic actors. The Fund will give priority to economic actors that:

- Follow efficient management practices and respect the interest of stakeholders (employees, consumers, subcontractors, etc.) and of the environment.
- Follow disclosure requirements that comply with generally accepted accounting and financial reporting practices so as to make fair economic comparisons possible.
- Make transparent the lines of accountability in terms of ownership and management.
- Make available the social and environmental practices in order to compare the consistency between their goals and the results of their mission.

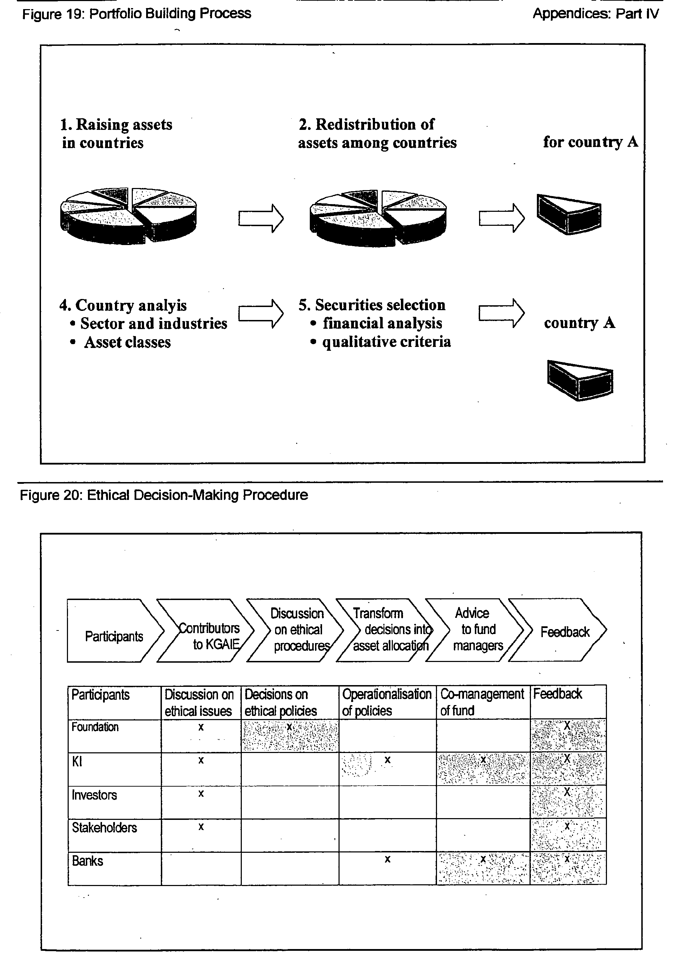

**6.5.6. Quantitative framework of the ethical portfolio mix:** The initial sample of twelve countries selected to construct the Model Fund belong to North, South, East and the West. The ethical mix and criteria seek to minimise market risk and to construct a portfolio that is diversified by geography, by economic sectors and by asset classes. (*See: Figure 19*)

**a**. *Mix of geographical regions and countries:* Initial amount of investments in a sample of 12 countries and 5 regions as a percentage of the total portfolio is as follows. It is regularly revised by the Foundation:

- Africa: 4.31 %
- South Africa: 3.52%, Zimbabwe: 0.79%
- Asia: 24.54%
- Japan: 14.24%, South Korea: 10.30%
- Europe: 49.15%
- France: 9.81%, Germany: 10.55%,
- Hungary: 4.95%, Switzerland: 16.06%,
- UK: 7.78%
- Latin America: 3.82%
- Venezuela: 3.82%
- North America: 18%
- Canada: 7.33%, USA: 10.85%

**b**. *Mix of industrial Sectors:* Guideline for investment in each economic sector/per country as a percentage of the total portfolio:
From the country GDP, human development, country economic indicators, ethical indicators, the Sectoral mix is calculated: Initial amount invested in each country and region as a percentage of the total portfolio.

- Government Sector: 10% - 20% (central, regional, para-public)
- Business Sector: up to 75% (listed companies; private equity)
- Third Sector: initially up to 10% (unlisted, micro credit, co-operatives)
- Cash: 5% -20%

**c**. *Mix of Asset Classes*
*Asset class mix within the 75% allocated to the Business Sector.* (*See: Figure 14*)
Shares: 70% - 90%

Bonds: 10% - 30%
*Asset class mix as a percentage of the total portfolio:*
<u>Shares:</u> 40% - 60%
<u>Bonds:</u> 30%-45%
<u>Cash:</u> 5% - 20%
*Shares mix within the 40% - 60% allocated to shares:*
<u>Big caps:</u> 20% - 50%
<u>Small/Mid caps:</u> 50%-80%

## 6.5.7. Guidelines and Reference for Feedback:

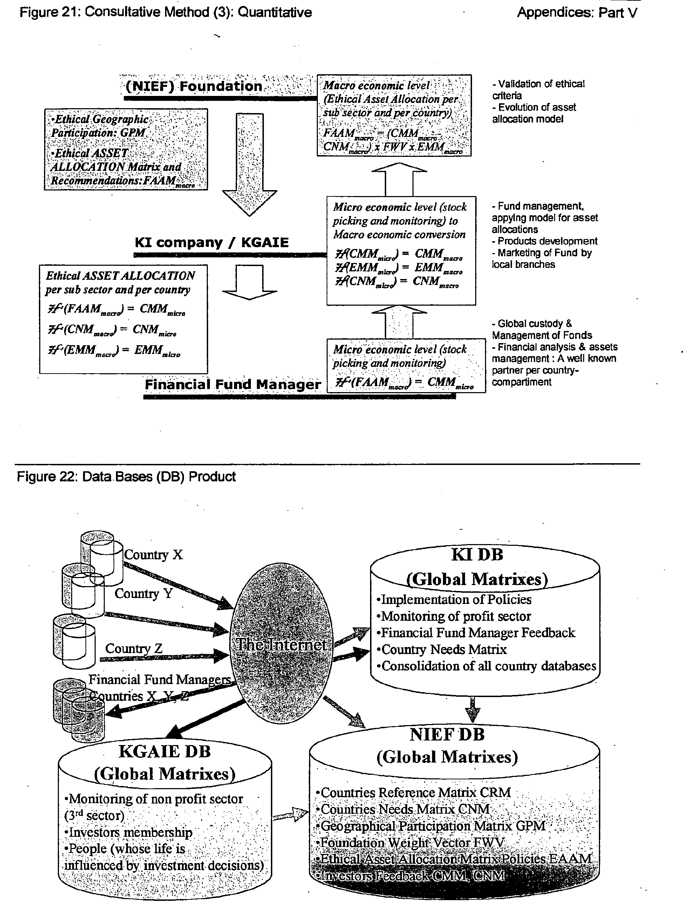

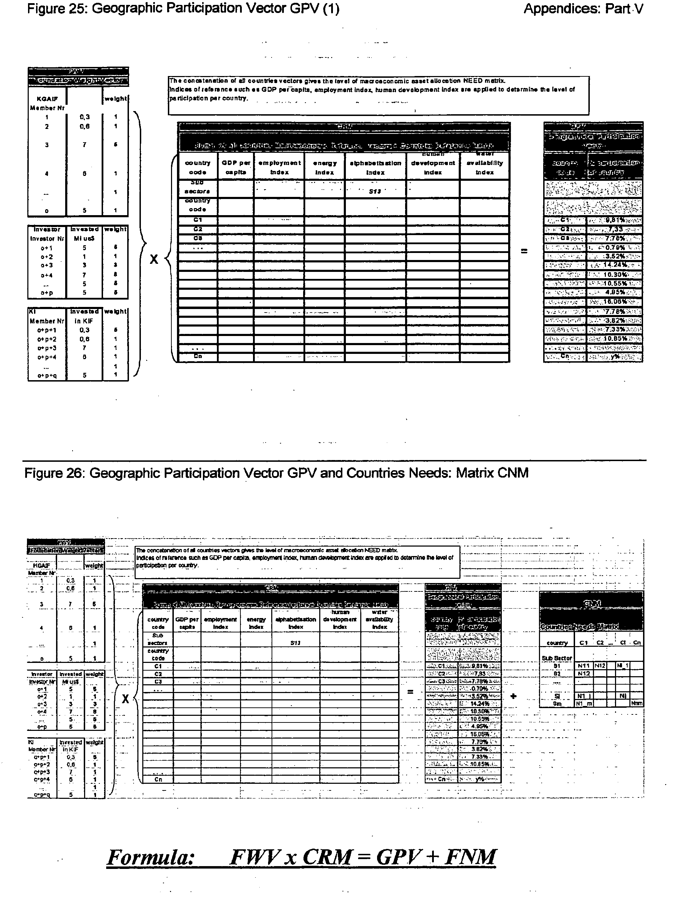

**a**. *Bottom-up feedback:* A bottom-up feedback is initiated through *Kairos Investments, Kairos Global Association for Investment-Ethic* and the financial analysts. This information is regularly fed back to the *New Investment Ethic Foundation (NIEF)* for reassessing the asset allocation targets (*See: Figures 21, 24-26).*

**b**. *Macro-Micro approach:* The *NIEF* works at a macro ethical and macro financial level. *KI* and *KGAIE* work on the macro ethical level and on the micro ethical level, thus being the interface between the financial manager of the Model Fund and the *New Investment Ethic Foundation.* (The financial manager works on the microeconomic level, doing the stock picking and selection of other asset classes). Several mechanisms for *feedback* are implemented:

- Monitoring the countries needs (macro-economic level)
- Monitoring the countries indicator (macro-economic level)
- Monitoring the allocation (macro-economic level)
- Monitoring the ethic of allocations (macro-economic level)
- Monitoring the allocations (micro-economic level)
- Monitoring the ethic of allocations (micro-economic level)

**6.5.8. Distribution and re-balancing of the Fund:** The net income and the net realised capital gains of all compartments of the Fund will be credited to each of the compartments in proportion to the Units, prior to calculation of the Net Asset Value of compartments. The income from investments and capital gains will be reinvested in the Fund in accordance with the investment objective and policy as described in this document. The re-balancing of the assets, between the countries of hard and soft currencies will be conducted annually in accordance with the quantitative framework of the ethical policy and the portfolio construction procedure of the Fund. Through this procedure the Fund seeks to sustain a steady employment creation in each country alongside minimising currency risk that is associated with the portion of capital outflow from hard to soft currency countries.

**6.5.9. Risk factor for Investors:** The value of the units of the Fund (ie: securities held in the portfolio) is influenced by the financial performance of the issuers of those securities, by interest rates and by financial market conditions, namely, the capital, loan and money market conditions of the countries in which the Fund is invested. However, the continuous feedback mechanism elicited through the *Kairos Global Association for Investment-Ethic and Kairos Investments,* can serve as an additional protection in terms of access to early warning signals. Thus it can help to minimise the risk of the Fund by the possibility it provides to take timely action.

## 6.5.10. Reporting:

**a**. *Financial reporting:*

External auditors who respect international accounting and reporting standards will be responsible for the financial report of the Fund. Copies of the audit report will be sent to Unit holders at their registered address three months after the annual dosing date of accounts of the Fund. Half-yearly financial reports of the Fund will also be sent to Unit holders. The frequency of valuation and calculation of Net Asset Value of the Units of the Fund will be conducted in accordance with regulatory requirements of the countries in which the Fund is invested. The Net Asset Value of each of the country compartments will also be published in economic newspapers in the respective countries.

**b**. *Ethical reporting*

Specific ethical issues concerning the portfolio of the Fund, and general issues related to the role of investments in social and environmental concerns will be communicated through a quarterly publication, entitled *Discursive-Ethic.* The evaluation of the social and environmental impact of the Fund, as a whole and for each country, will also be communicated through this publication. The discussions on specific ethical issues related to the different countries and entities in which securities are held will be initiated through a special website of the *Kairos Global Association for Investment-Ethic.*

## 6.6. Asset Management Functions and Governance Structure

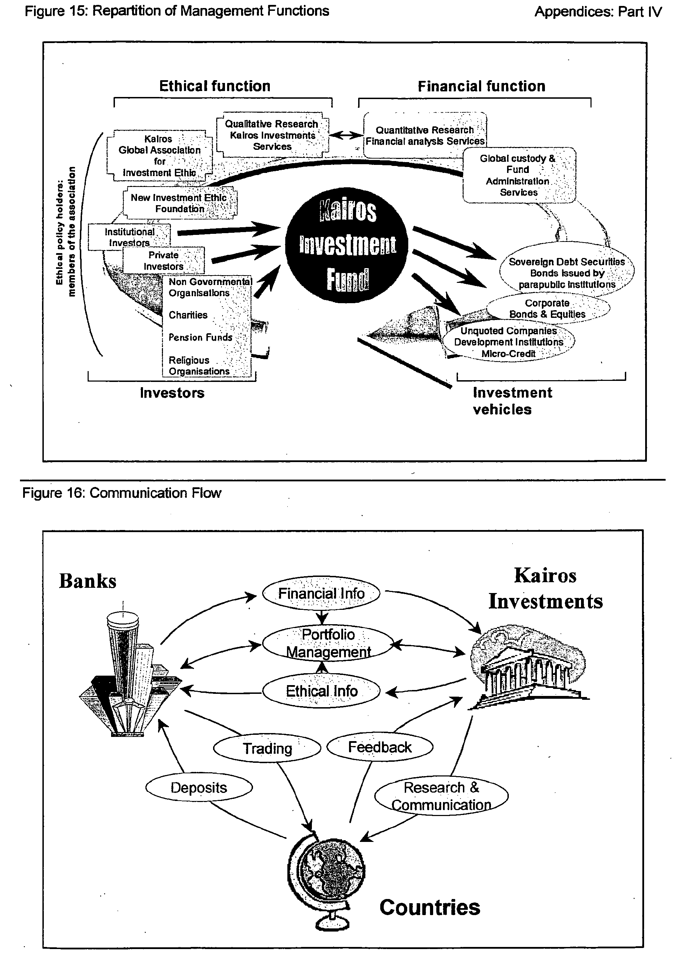

**6.6.1. Achieving ethical coherence:** The success of asset management today depends on an informed understanding of cultures, religions, nations, ideologies and of tensions related to ethical interventions in the financial markets. There are enormous differences in the distribution of natural resources around the world and in the development rate of different countries. Because of these geographical and historical differences, countries tend to specialize in particular sectors of activity. Most countries are dependent upon others for acquiring agricultural products, raw or processed material, technological equipment, energy or investments. The 1997 crisis in Asia and the earlier one in Mexico (1994) have confirmed the complexities related to increasing interdependency of the financial markets. The management of ethical functions involves a coherent implementation of the diverse ethical concerns of the civil society in the investment industry in an effective way. To achieve this coherence, the Fund management responsibilities are repartitioned between experts on ethical functions and on financial functions. (*See. Figure 16*)

**6.6.2. Organs of the Fund:** The governance structure of the *Kairos Investment Fund* is comprised of four independent organs. Each of the independent organs performs a distinct role and function in the management and governance process of the Fund. (*See: Figure 15*)

**6.6.3. Financial Managers:** The Financial Managers of the Fund will be responsible for financial controls of the Fund and selection of shares and bonds within the quantitative framework of ethical portfolio mix. The day-to-day tasks that involve quantitative research and analysis such as the level of cash flow, indebtedness and management competence of Security Issuers and brokerage will be conducted by reputable financial institutions/banks based in the countries in which the Fund invests and thus have a close knowledge of the local markets.

### 6.6.4. Custodian banks:

- Safekeeping, cash management, verification and control of assets, income collection from dividends and interest payments on holding of shares and bonds;
- *Fund administration Services:* Accounting, New Asset Value (NAV) calculation, maintaining the registry of investors.

**6.6.5. The Panel of custodians of the ethical policy:** A panel, comprising custodians of the ethical policy, participate as Concluders of formal ethical debates conducted within the framework of the *New Investment-Ethic Foundation.* The said Custodians do not address issues related to technicalities of finance or investments. They seek to clarify ethical issues that arise from investments within and among countries based in various geographical regions in which the model Fund, *KIF* is invested. Their main task is to animate the ethical debates convened among the three main protagonists of the investment system, with their input, until the fairest argument is recognised and on which a conclusive asset allocation recommendations can be issued. The Board of the Foundation is responsible for developing the ethical policy of the Fund and for monitoring the implementation of a given ethical policy at the pre commercial stage of the model.

**6.6.6. The ethical functions manager:** The manager of ethical functions of the Fund, *Kairos Investments,* Geneva, Switzerland, is responsible for defining the quantitative framework of the ethical policy of the Fund, the tasks related to bottom up asset allocation and monitoring the ethical dimensions of the portfolio. It includes diagnostic research and communication with subsidiaries of *KI* and ethical analysis essential for bottom-up asset allocation and feedback procedure.

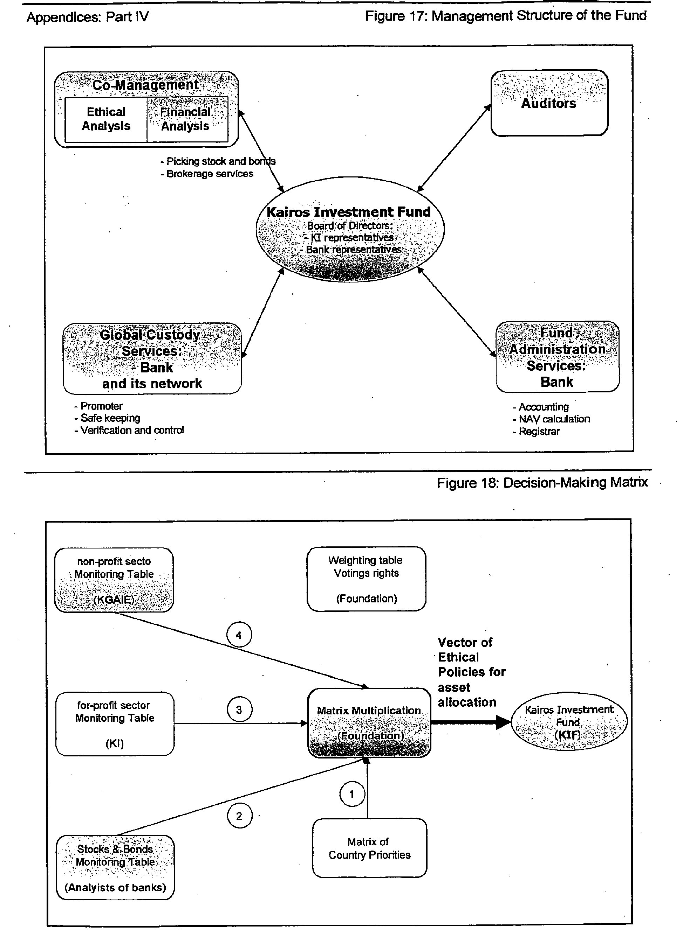

**6.6.7. The Board of Directors of the Fund:** The Board of Directors of the Fund, include representatives of each of the institutions that are responsible for the day-to-day tasks related to the portfolio management services, custodial services and the administration services of the Fund. (*See: Figure 17*) The Board meets regularly to review and assess the status of the multi-country portfolios of the Fund and its financial performance. The composition of the board is as follows:

Representatives from:  Ethical functions management services; Financial functions management services; Financial custodial functions management services; Fund administration functions management services.

**6.6.8. Decision-Making Process:** The decision process within the *Kairos Foundation* based on discursive ethics. An *Ethical Matrix of Asset Allocation Recommendations* will be issued by the foundation and implemented by *Kairos Investments company. (See Figure 18, 20)*

## 6.7. Kairos Investment Fund: Summary

| | |
|---|---|
| Type of fund: | Open-ended global investment fund |
| Type of portfolio: | Mixed portfolio of shares, bonds and cash |
| Expected return: | A return similar to a global mixed portfolio fund |
| Investment focus: | Infrastructure services development & employment creation |
| Size: | US$ 1 billion |
| investment objective: | Middle to long-term capital appreciation (3-5 years) |
| Host region of the Fund: | Europe |
| Investment universe at launch: | 12 countries: Canada, France, Germany, Hungary, Japan, South Africa, South Korea, Switzerland, United Kingdom, U.S.A., Venezuela, Zimbabwe. |
| Investment condition: | Investments only in countries in which local investors participate in the Fund. |
| Configuration of the Fund: | *The Kairos Investment Fund* is a multi-compartment fund consisting of 12 countries from the North, South, East and West. Each country is treated as a distinct compartment within the same Fund. |
| Entry & exit currency: | The units of the Fund are both sold and redeemed in the local currency of a given country (i.e.: Investors from each of the countries enter and exit the Fund with the respective local currency). |
| Reference currency: | US$ is used as a reference currency for the purpose of calculating the proportionate distribution of net income and capital gains made by all Compartments of the Fund. |
| Investment restriction: | The Fund will not invest in speculative instruments. |
| Portfolio management: | Financial services: |
| Ethical framework Manager: | *Kairos Investments,* Geneva, Switzerland. |
| Offer price per unit at launch: | US$ 100, SFr 100, (and multiples in local currencies) |
| Minimum initial investment: | US$ 100'000 at launch. |
| Initial Charge: | 2.5% of the offer price |
| Annual Charge: | 2% of the Net Asset Value |
| Publication of Net Asset Value | Economic press in the 12 countries. |

### 6.8. Distinct features and key benefits

**6.8.1. Employment creation:** One of the main aims of the *New Investment Ethic Project* is to develop asset allocation models that will contribute to stimulate economies through job creation in the countries in which the *KIF* invests. The programs initiated through *Kairos Investments company (KI)* and *Kairos Global Association for Investment Ethic (KGAIE)* seek to generate service and job providers that function on two distinct operational logic. This feature of the project is expected to double the employment creation potential of the investment fund industry as follows:

*KI-KGAIE products and services* (Operations on for-profit and non-profit logic)

- Marketing of the fund
- Financial Consulting
- *KIF* Co-management on the ethical side of the fund
- Discursive ethic (ethical reporting magazine)
- Link with *KGAIE* and with other *KI* entities in the world
- Interface with financial institutions
- Interface with the *New Investment Ethic Foundation*
- Coherence of the process
- Financial computer simulations
- Third sector monitoring
- Global Monitoring Data Bases (private public and third sector)
- Networking & Cooperation with other data bases / ranking organisations
- Publications of information gathered
- Corporate Governance evaluation / Bad governance prevention

- General Assemblies of for profit corporations allocated to the Model Fund, *KIF*
- General Assemblies of non-profit corporations allocated to the Model Fund, *KIF*

**6.8.2. Stability of the financial system:** The repartition of management Function between two independent organisations working on ethical and on financial analyses contributes to a dual reference and cross checking system. This feature enables to alleviate suspicions between the disciplines of ethics and finance that arise due to misunderstanding of the respective languages and technicalities involved in these disciplines and thus address the discrepancies of the economic systems. It will enable investors who have lost confidence in the ability of current financial mechanisms to sustain social cohesion, environmental security and global peace that comes with financial security to collaborate in sustaining the stability of the financial system.

**6.8.3. The way of applying ethics to finance:** The feature that distinguishes this Fund from other ethical funds is its way of dealing with the question of justice in finance. In other words, it provides a rational understanding of the *securities exchange system* to enable the mental, emotional and spiritual faculties of reasoning to recognise the fairest argument in ethical debates and thereby issue conclusive asset allocation recommendations.

### 6.9 Computer Simulations and Program Architecture

**6.9.1. Computer Program Product:** The computer program product comprises the following:

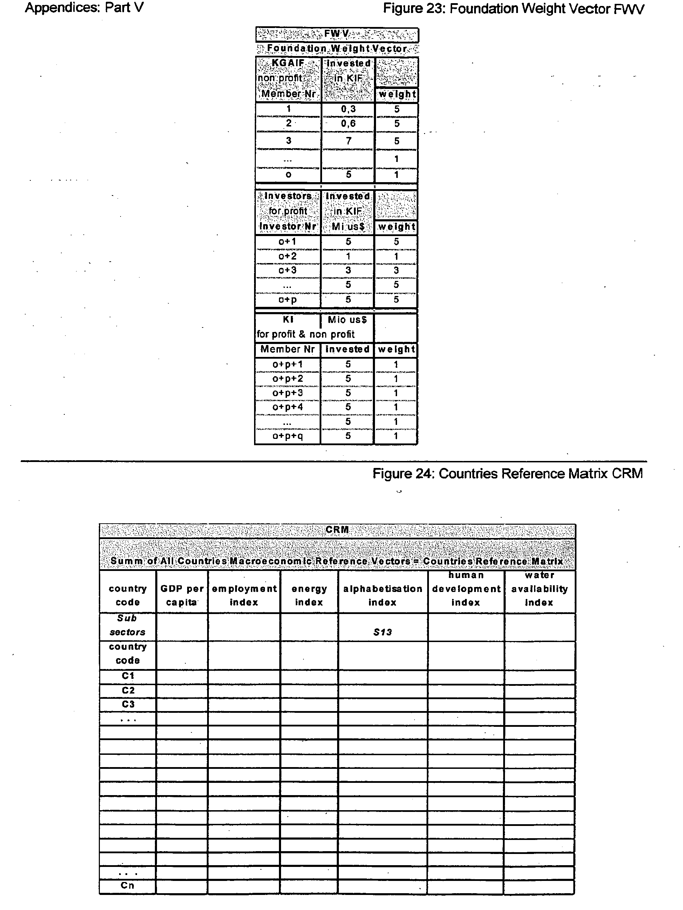

- The computer program for simulating the fund expansion according to the asset allocation method defined in the preceding section. This will be used to calculate the target of *KI* macro economic asset allocation vector in the future and be shared with the financial manager to assist in the actual micro economic investments (stock picking);
- The computer program data base product for analysing and regrouping of all sectors of a given country of the fund and all countries into a global allocation data base;
- A Monitoring software to monitor the tables with actual financial and ethical indicators;
- A Fund Data base consolidating each country and each sector of the fund, monitored by *NIEF* and by *KI* and/or by the bank: $DB_{KGAIE}$, $DB_{KI}$,... which is actualised day by day; (*See: Figure 22*)
- A Foundation Weighting Vector $FWV_{Foundation}$, updated regularly, for example yearly, including the matrix of voting rights of all investors; (*See: Figure 23*)
- The FWV multiplied with the matrix of feedbacks from 3rd sector, for-profit and non-profit organisations gives the country needs matrix, which represents the target macro economic asset allocation matrix per sector per country.

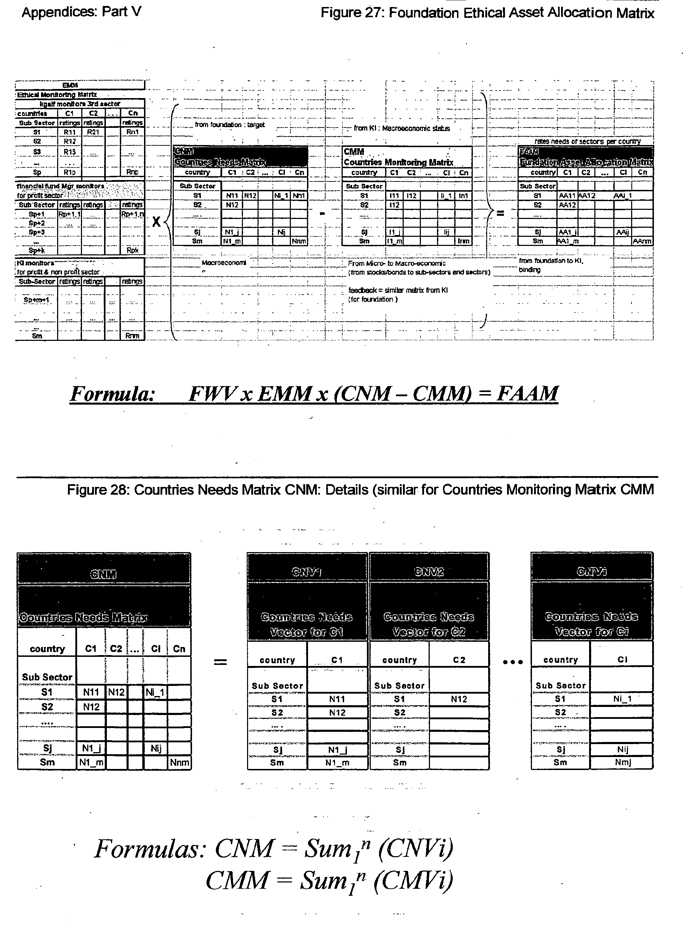

### 6.9.2. The computer Databases: (*See: Figure 28*)

### a. <u>Definitions:</u>

1. <u>Vectors and Matrixes</u>

Each country vector is consolidated into one global database Matrix for calculating the global fund performance and simulating its evolution (vectors becomes matrixes).

2. <u>Time scale</u>

Each database Matrix is dependent on time. For calculating the global fund performance and simulating its evolution, at least two time scales are taken into account:

- $T_{foundation}$ (e.g. Yearly) time scale for the Foundation *NIEF.*
- $T_{finance}$ (e.g. Daily) for the Financial Fund Manager.
- $T_{KI}$ (e.g. Daily or Monthly) for *KI*

### 3. <u>Two different levels/spaces:</u>

The same matrix can be employed at two different levels and are annotated accordingly by $_{micro}$ or $_{macro}$: These two levels define in fact two mathematical spaces: Microeconomic level (Micro-economic space) and Macro-economic level (macro-economic space): For example:

$CMM_{micro}(t)$ -> $CMM_{macro}(t)$. The matrixes are actually the same, the only difference is the level of resolution of the monitoring. The *NIEF* only monitors macroeconomic activities (at sub-sectors level), *KI* monitors microeconomic activities (at stock/bonds picking level) and consolidates it into the corresponding macroeconomic indicators (at sub-sectors level) for *NIEF.*

There is a homothetic transformation H from the micro-economic space into the macro-economic space performed by KI: H (CMM$_{micro}$(t) ) = CMM$_{macro}$(t), the fundation performes the asset allocation FAAM in the macro economic space CMM$_{macro}$(t$_1$). -> FAAM$_{macro}$ (t$_1$) and the reverse transformation is performed by KI+financial fund manager:

$$H^{-1} ( FAAM_{macro} (t_1) ) = CMM_{micro}.(t_{actual})$$

4. Derivates

Derivates will be employed to calculate trends and forecast evolutions. Derivates are noted with a " ' ", for example: CNM' or by the explicit reference to time for example: CNM' = d [CNM(t)] / dt.

**b. Matrixes, Vectors, Parameters and Equations:**

A Country Reference Matrix **(CRM)** is introduced in the database. The

Countries Geographical Participation Matrix (Country Mix **(GPM)** and the Country Needs Matrix **CNM** are the result of the Countries Reference Vectors (CRV) multiplied by the Foundation Weight Vector **(FWV)** (*See: Figure* ) according to the formula:

$$GPM(t) + CNM(t) = FWV(t) \times CRV(t) \qquad (1)$$

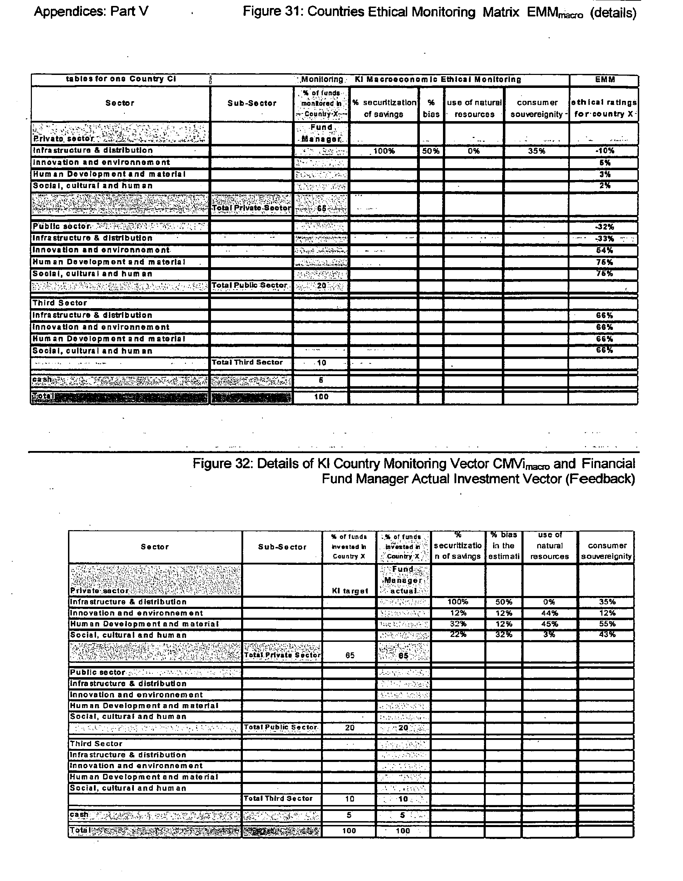

Monitoring Matrix of all Country Vectors **CMM:** A database is established in each country with all investors and members of KIAGF. A Need Vector is calculated for each country, based on the systemic model. All vectors build the Need and Feedback Matrix for the global fund. (*See*: *Figure 30,32*) Needs and Feedbacks share the same Matrix format. Monitoring of the financial fund manager actual stock picking is based on their feedback (in blue) into the Country Monitoring Vectors. (*See*: *Figure 30, 31*)

Foundation Weight Vector **FWV:** Weights are attributed to each investor and member of the foundation according to their number of shares and to their date of entry.

Reports / Feedback on for-profit and non-profit organizations are input into the database as a Ethical Monitoring Matrix of all Country Vectors **EMM.**

Multiplying the difference between Countries Monitoring Matrix CMM and Country Needs Matrix CNM with Foundation weight vector FWV and EMM Ethical Monitoring Matrix gives the Foundation Ethical Asset Allocation Matrix FAAM that allows computing the sub sectors. Based on which Recommendations from the Foundation to KI for asset allocation according to the principles set out in above. Equation for the ethical asset allocation matrix :

$$\{ CMM(t) - CNM(t) \} \times FWV(t) \times EMM(t) = FAAM(t) \qquad (2)$$

The macro economic fund actual trend at a given time t$_1$ is given by : CMM$_{macro}$'(t$_1$)

The macro economic fund actual ethical trend at a given time t$_1$ is given by : EMM$_{macro}$'(t$_1$)

The micro economic fund actual ethical trend at a given time t$_1$ is given by : EMM$_{micro}$'(t$_1$)

**6.9.3. Computer Financial Simulations & Technical effect:**

A statistical study has been undertaken to prove the viability of the fund. The Diagrams show the evolution of various publicly available financial performance indicators as a benchmark over 5 years in the past from 1997 to 2002 and in dark the computer-simulated indicator of said new *KIF* fund for the same period. (*See*: *Part VI, Countries Studies 1-12)*

*References:*

- The Benchmark that have been used are: local share index and US mutual Fund index; for example in case of France CAC 40 and US mutual Funds Euro
- Real data from *Datastream* has been used to perform the example stock picking.
- The data for simulating the *KIF* performance is taken from the macroeconomic *KI* asset allocation vector and from an assumed financial fund manager microeconomic stock picking vector.

The fund is expected to behave in a similar way in the future, due to the new model of ethical asset allocation and the specific structure of the fund.

The Figures show that the fluctuations of the claimed fund are often better or not worse when compared to the published indicators for the same period.

The Sensitivity Beta is smaller than 1 indicating that the fund is under-reacting with regards to the reference index. The large positive alpha lets expect a potential for the fund to exceed the expected performance.

*Qualities of the fund*

The computer statistic simulation suggest that:

- The balanced and diversified profile of the *KIF* Fond allows a performance less volatile compared to indices
- Ethical wisdom is compatible with a sustainable financial performance

The present invention has been described in detail with respect to preferred embodiments and it will be apparent to those skilled in the art that changes and modifications may be made without departing from the invention in its broader aspects and it is the intention therefore in the appended claims to cover all such changes and modifications as fall within the true spirit and scope of the invention.

**Claims**

1.  A method based on ethics for investing in the financial markets, **characterized by** the steps of:

    a. Articulating a rational understanding of the securities exchange system and defining an ethical systemic model of the cycle of employment and wealth creation in monetized economies. The said model relates the relative market size of the economic actors such as Government sector, private business and Third sector to an ethical asset allocation in which systemic macroeconomic parameters have been defined for each economic actor generating employment and wealth as well as for each borrower and for each income source. A specific parameter is assigned for loan and capital market access by the Third sector,
    b. Issuing on the financial market at least one pilot model global ethical Mutual Fund *(Kairos Investment Fund, KIF)* that has stable financial growth despite financial world *alea* and which asset allocation is based on said ethical systemic model;
    c. Defining for said Fund an ethical asset allocation policy involving the input and feedback of at least four entities: priorities of countries needs, investors, companies, those affected by the investment decisions;
    d. The ethical policies for assert allocation being based on systemic macroeconomic parameters defined by said model and not solely on microeconomic ethical ratings or considerations known from the prior art, which can still be used for stock picking;

2.  Said method of claim 1 and said Fund, whereby:

    a. The Fund is co-managed by a global ethical organisation (the company *Kairos Investment, KI*) and by a network of partner banks;
    b. The Fund global custody is assured by the partner banks;
    c. The Fund's financial management is performed by the partner international bank(s) and partner local banks;
    d. The management of ethical functions of the Fund is assured by a financial engineering and ethical consulting company (*KI*);
    e. The Fund's ethical policy recommendations to the ethical consulting company and to the financial Fund managers are issued by an independent foundation (the *New Investment Ethic Foundation, NIEF).*

3.  Said method and said Fund of any of the preceding claims and said fund where the management organisation is composed of a plurality of country-compartments, one compartment being defined for each country where said fund is active, whereby each country participation in the global fund is based on published ethical macroeconomic country indicators and on recommendations issued by an independent foundation.

4. Said method of any of the preceding claims and said fund where said compartments guarantee an inflow of investments from the *hard* currency countries to the *soft* currency countries, taking into consideration the *hard-soft* currency divide which diminishes the value of human labour and capital in *soft* currency countries. An example of such inflow is 15% but other percentages are possible.

5. Said method and said fund described in claim 1, whereby ethics is inbuilt in the Method and in the Fund and portfolio construction rather than in the selection ("stock picking") of particular securities assumed as ethical. The said method for ethical policy development is initiated through a complementary structure (*NIEF*) for detracting systemic tensions that arise in monetized economies in which the *pilot model Fund (KIF)* invests.

6. A systemic model of the cycle of employment, wealth creation and financial markets **characterized in that**:

   a. It relates the relative size of the economic actors such as government sector, private business and third sector to an ethical asset allocation of an ethical fund and **in that**:
   b. Systemic macroeconomic parameters have been defined for each economic actor generating employment and wealth as well as for each borrower and for each income sources.
   c. A specific parameter is assigned to loan and capital market access by the third sector.

7. An ethically coherent business organisation Method for investing money in the financial markets and monitoring its ethical performance, **characterized in that**:

   a. It manages an ethical fund according to the method of anyone of claims 1 to 5 and **in that**:
   b. It comprises at least three entities:

      i. A financial engineering and ethical consulting company (*KI*);
      ii. A global association (the *Kairos Global Association for Investment Ethic, KGAIE*) representing the interests of those affected by investment decisions, including investors of each country compartment of the *Fund,* and **in that**:
      iii. An ethical foundation (*NIEF*) regrouping renowned professional ethicists, philosophers, economists, and **in that**:

   c. It uses a *discursive ethic model* for ethical policy development, and **in that**:
   d. information, discussion and decision flows are oriented towards asset allocation decisions for the said ethical Mutual Fund.

8. A global ethical fund for investing money in the financial markets according to the method of anyone of claims 1 to 5, **characterised in that** it is:

   a. Present in a plurality of countries, induding both *hard* and soft currency countries;
   b. A certain percentage of investment flows from *hard* currency countries into soft currency countries;
   c. Co-managed both by a company (*KI*) and by a network of banks;
   d. Based on ethical consulting by all of a foundation *(NIEF),* a corporation *(KI),* and an association *(KGAIE)* of ethically minded people;
   e. Based on a model of *discursive ethic;*
   f. Present in each country and only in each country where there are investors for said fund and where *KI* personal are active;
   g. Developing an ethical asset allocation model within each country that seeks take into account the needs of each country and to maintain the coherence between the type of economic activities and the agents that provide it, with a deliberate recognition of the role of the Third sector;
   g. Shows sustainable financial performance, despite world financial hazards comparable to traditional, hybrid, indexed or global funds.

9. A global computer program product and a plurality of global data base products linked through internet for simulating the past and future expansion of an ethical fund according to the asset allocation method defined in the method according to claims 1 to 10 using real data from publicly available financial data as well as data gathered by the ethical and financial partners managing the ethical fund, especially data concerning the third sector which is not publicly available.

Each data base comprises a micro economic section managed by *KI,* consolidated by *KI* into a macro economic section and transferred to the *Foundation* data base.

**10.** A computer data base and program product for analysing and decision making,
**characterized in that** the data base regroups, in a given country, all sectors of the fund according to the method according to any of claims 1 to 11 and regroups all countries-compartments into a global allocation and whereby the data base comprises:

a. A Foundation Weighting Vector FWV, updated regularly, for example yearly, including the matrix of voting rights of all investors, of the members of the association and of the financial managers;

b. A Country Reference Matrix CRM based on macroeconomic country global publicly available indicators such as, and not limited to : employment rate, health rate, GNP, energy factor;

c. A country-compartment Geographical Participation Vector GPV resulting from multiplying the Country Reference Matrix CRM and the Foundation Weighting Vector FWV;

d. A macroeconomic Country Needs Matrix CNM resulting from multiplying the Country Reference Vector CRV and the Foundation Weighting Vector FWV. It is composed of indicators for each sub-sector relating the asset allocation needed by the countries. It is one of the basis of the actual asset allocation. It is managed by the foundation;

e. A Countries Monitoring Matrix CMM made of the macro-economic consolidation of all micro-economic feedbacks on investments made in 3rd sector, for-profit and non-profit organisations stocks and bonds, consolidating each country and each sector of the fund, monitored , depending on which sector, by KGAIF and by KI and/or by the bank (public, private, 3rd sector, ...) and which is actualised regularly on a short term basis, for example day by day;

f. A Countries Ethical Monitoring Matrix EMM made of the macro-economic consolidation of all micro-economic ethical feedbacks in 3rd sector, for-profit and non-profit organisations stocks and bonds, consolidating each country and each sector of the fund, monitored , depending on which sector, by KGAIF and by KI and/or by the bank (public, private, 3rd sector, ...) from publicly available financial and ethical microeconomic indicators, known in the prior art, and which is actualised regularly on a short term basis, for example day by day;

g. An algorithm to substract the Country Needs Matrix CNM from the Countries Monitoring Matrix CMM and multiply the result by the Ethical Monitoring Matrix EMM , obtaining the Foundation Ethical Asset Allocation Policies Matrix FAAM;

h. FAAM is based on real data for the parameters of the model according to claim 6 and forms the basis for the recommendations of the foundation and representing the target sector asset allocations based on Country Needs and on feedbacks from the financial market;

i. The Foundation Data base, through the Internet, regroups all data bases composed of Country specific data bases on macro-economic level;

j. The KI corporation Data base, through the intemet, regroups all country compartment data bases from the local branches of KI and composed of the Country specific data bases on micro- economic level;

k. A knowledge based program adapted to extract information from the publicly available financial and ethical ratings data bases and from the publicly available UN data bases to input into the foundation data base.

**Amended claims in accordance with Rule 86(2) EPC.**

**1.** An asset allocation Process based on a new ethic for investing in the financial markets and a Fund product of the said Process, **characterized by** the steps of:

a. Articulating a rational understanding of the securities exchange system and defining an ethical systemic model of the cycle of employment and wealth creation in monetized economies. The said model relates the relative market size of the three main economic actors, namely, the Government sector, the Private/Business Sector and the Third sector which function with three kinds of logic, to an ethical asset allocation in which systemic macroeconomic parameters have been defined for each economic actor generating employment and wealth as well as for each borrower and for each income source. A specific parameter is assigned for loan and capital market access by the Third sector,

b. Issuing on the financial market at least one pilot model global ethical Mutual Fund (*Kairos Investment Fund,*

*KIF*) that has stable financial growth despite financial world *alea* and which asset allocation is based on said ethical systemic model;

c. Defining for said Fund an ethical asset allocation policy involving the input and feedback of at least four categories: priorities of countries needs, investors, companies, those affected by the investment decisions;

d. The ethical policies for assert allocation being based on systemic macroeconomic parameters defined by said model and not solely on microeconomic ethical ratings or considerations known from the prior art, which can still be used for stock picking;

**2.** Said asset allocation process of claim 1 and said Fund product, whereby:

a. The Fund is co-managed by a global ethical organisation (the company *Kairos Investment, KI*) and by a network of partner banks;

b. The Fund global custody is assured by the partner banks;

c. The Fund's financial management is performed by the partner international bank(s) and partner local banks;

d. The management of ethical functions of the Fund is assured by a financial engineering and ethical consulting company (*KI*);

e. The Fund's ethical policy recommendations to the ethical consulting company and to the financial Fund managers are issued by an independent foundation (the *New Investment Ethic Foundation, NIEF*).

**3.** Said asset allocation process and said Fund product of any of the preceding claims and said fund where the management organisation is composed of a plurality of country-compartments, one compartment being defined for each country where said fund is active, whereby each country participation in the global fund is based on published ethical macroeconomic country indicators and on recommendations issued by an independent foundation.

**4.** Said asset allocation process of any of the preceding claims and said fund product where said compartments guarantee an inflow of investments from the *hard* currency countries to the *soft* currency countries, taking into consideration the *hard-soft* currency divide which diminishes the value of human labour and capital in *soft* currency countries. An example of such inflow is 15% but other percentages are possible.

**5.** Said asset allocation process and said fund product described in claim 1, whereby ethics is inbuilt in the process and in the Fund and portfolio construction rather than in the selection ("stock picking") of particular securities assumed as ethical. The said method for ethical policy development is initiated through a complementary structure (*NIEF*) for detracting systemic tensions that arise in monetized economies in which the *pilot model Fund (KIF)* invests.

**6.** A global computer program product and a plurality of global data base products linked through internet for simulating the past and future expansion of an ethical fund according to the asset allocation method defined in the method according to claims 1 to 10 using real data from publicly available financial data as well as data gathered by the ethical and financial partners managing the ethical fund, especially data concerning the third sector which is not publicly available.

Each data base comprises a micro economic section managed by *KI,* consolidated by *KI* into a macro economic section and transferred to the *Foundation* data base.

**7.** A computer data base and program product for analysing and decision making, **characterized in that** the data base regroups, in a given country, all sectors of the fund according to the method according to any of claims 1 to 11 and regroups all countries-compartments into a global allocation and whereby the data base comprises:

a. A Foundation Weighting Vector FWV, updated regularly, for example yearly, including the matrix of voting rights of all investors, of the members of the association and of the financial managers;

b. A Country Reference Matrix CRM based on macroeconomic country global publicly available indicators such as, and not limited to : employment rate, health rate, GNP, energy factor;

c. A country-compartment Geographical Participation Vector GPV resulting from multiplying the Country Reference Matrix CRM and the Foundation Weighting Vector FWV;

d. A macroeconomic Country Needs Matrix CNM resulting from multiplying the Country Reference Vector CRV and the Foundation Weighting Vector FWV. It is composed of indicators for each sub-sector relating the asset allocation needed by the countries. It is one of the basis of the actual asset allocation. It is managed by the foundation;

e. A Countries Monitoring Matrix CMM made of the macro-economic consolidation of all micro-economic feedbacks on investments made in 3rd sector, for-profit and non-profit organisations stocks and bonds, consolidating each country and each sector of the fund, monitored , depending on which sector, by KGAIF and by KI and/or by the bank (public, private, 3rd sector, ...) and which is actualised regularly on a short term basis, for example day by day;

f. A Countries Ethical Monitoring Matrix EMM made of the macro-economic consolidation of all micro-economic ethical feedbacks in 3rd sector, for-profit and non-profit organisations stocks and bonds, consolidating each country and each sector of the fund, monitored , depending on which sector, by KGAIF and by KI and/or by the bank (public, private, 3rd sector, ...) from publicly available financial and ethical microeconomic indicators, known in the prior art, and which is actualised regularly on a short term basis, for example day by day;

g. An algorithm to subtract the Country Needs Matrix CNM from the Countries Monitoring Matrix CMM and multiply the result by the Ethical Monitoring Matrix EMM obtaining the Foundation Ethical Asset Allocation Policies Matrix FAAM;

h. FAAM is based on real data for the parameters of the model according to claim 6 and forms the basis for the recommendations of the foundation and representing the target sector asset allocations based on Country Needs and on feedbacks from the financial market;

i. The Foundation Data base, through the internet, regroups all data bases composed of Country specific data bases on macro-economic level;

j. The KI corporation Data base, through the internet, regroups all country compartment data bases from the local branches of KI and composed of the Country specific data bases on micro- economic level;

k. A knowledge based program adapted to extract information from the publicly available financial and ethical ratings data bases and from the publicly available UN data bases to input into the foundation data base.

Figure 1: Rational Understanding of the Securities Exchange System          Appendices: Part I

Figure 2: Role of the Third Sector for Sustainable Development

Appendices: Part I                                    Figure 3: Critical Paths for Implementing the Model

Figure 4: The Kairos Vision: A Bias Free Asset Allocation Model

| | Economic dimension | Financial dimension | Ethical dimension |
|---|---|---|---|
| Global Trends | Globalisation<br>Knowledge economy<br>Network economy | Independence of capital markets<br>Financing via capital markets<br>Savings invested in capital markets | Just<br>Argumentative<br>Contextual |
| Kairos Approach | Sustainable<br>Interdependent<br>Need-based | Systemic<br>Macro-Micro | Pluralist<br>Procedural<br>Participative |
| KIF – Kairos Investment Fund | Need-based allocation | Financial performance<br>Social & environmental responsibility | Stakeholder dialogue<br>(KGAIE) |

Figure 5: Consultative process for Ethical Policy Development          Appendices: Part II

Figure 6: Investment Ethic Foundation – Flow Chart

Appendices: Part II                    Figure 7: Interfaces of Kairos Investment Company

Figure 8: Functional Links

Figure 9: Mechanism of non-speculative Allocation                                   Appendices: Part III

**Outlook of a Hard Currency Country Compartment (« North »)**

15%

85%

« Cantilever » North –> South

Shared investments

Domestic investments

Exchange rate

**Outlook of a Soft Currency Country Compartment (« South »)**

29%

71%

Inflow of investments from hard currency countries

Contribution from domestic investors

Figure 10: Geographical Repartition of Assets

**Global view of the Fund: % of contributions**

10%

90%

Input from investors in soft currency countries

Input from Investors in industrialized countries

**Global view of the Fund: Allocation of investments**

23%

77%

Assets invested in soft Currency countries

Assets invested in industrialized countries

Appendices: Part III

Figure 11: Example of Geographical Diversification

Figure 12: Portfolio Diversification by Asset Classes

Figure 13: Portfolio Diversification by Economic Sectors per Country          Appendices: Part III

Service and Job Providers

Corporate taxes

Public & Para-Public Sector

Business Sector

Third Sector

30 ~5 % ———— (Reduction for example because of Services Market Liberalisation)

5 ~75 %

5 ~30 %

Cash
5 % (by law) ~20 %

Third Sector
5 % ~ 10 (by law) % ~30%

Government (Public) and
Para-public Sector

20 ~ 40 %

Business Sector
50 ~ 75 %

---

Figure 14: Diversification within the Business Sector per Country

Bonds
20%

Equity
80%

Entertainment (D)
3%
Production (C)
7%
Waste Mng. (B)
3%

Infrastructure (A)
7%

Entertainment (D)
12%

Infrastructure (A)
28%

Waste Mng. (B)
12%

Production (C)
28%

42

Figure 15: Repartition of Management Functions

Figure 16: Communication Flow

EP 1 684 224 A1

Appendices: Part IV                    Figure 17: Management Structure of the Fund

Figure 18: Decision-Making Matrix

44

**1. Raising assets in countries**

**2. Redistribution of assets among countries**

**for country A**

**4. Country analyis**
- Sector and industries
- Asset classes

**5. Securities selection**
- financial analysis
- qualitative criteria

**country A**

Figure 20: Ethical Decision-Making Procedure

Participants > Contributors to KGAIE > Discussion on ethical procedures > Transform decisions into asset allocation > Advice to fund managers > Feedback

| Participants | Discussion on ethical issues | Decisions on ethical policies | Operationalisation of policies | Co-management of fund | Feedback |
|---|---|---|---|---|---|
| Foundation | x | x | | | X |
| KI | x | | x | X | X |
| Investors | x | | | | X |
| Stakeholders | x | | | | X |
| Banks | | | x | X | X |

Figure 21: Consultative Method (3): Quantitative $\qquad$ Appendices: Part V

**(NIEF) Foundation**

*Ethical Geographic Participation: GPM*
*Ethical ASSET ALLOCATION Matrix and Recommendations: FAAM$_{macro}$*

*Macro economic level (Ethical Asset Allocation per sub sector and per country)*

$$FAAM_{macro} = (CMM_{macro} : CNM_{macro}) \; x \; FWV \; x \; EMM_{macro}$$

- Validation of ethical criteria
- Evolution of asset allocation model

**KI company / KGAIE**

*Ethical ASSET ALLOCATION per sub sector and per country*

$$\mathcal{H}(FAAM_{macro}) = CMM_{micro}$$
$$\mathcal{H}(CNM_{macro}) = CNM_{micro}$$
$$\mathcal{H}(EMM_{macro}) = EMM_{micro}$$

*Micro economic level (stock picking and monitoring) to Macro economic conversion*

$$\mathcal{H}(CMM_{micro}) = CMM_{macro}$$
$$\mathcal{H}(EMM_{micro}) = EMM_{macro}$$
$$\mathcal{H}(CNM_{micro}) = CNM_{macro}$$

- Fund management, applying model for asset allocations
- Products development
- Marketing of Fund by local branches

**Financial Fund Manager**

*Micro economic level (stock picking and monitoring)*

$$\mathcal{H}(FAAM_{macro}) = CMM_{micro}$$

- Global custody & Management of Fonds
- Financial analysis & assets management : A well known partner per country-compartiment

Figure 22: Data Bases (DB) Product

Country X
Country Y
Country Z
Financial Fund Managers Countries X Y Z

The Internet

**KI DB (Global Matrixes)**
- Implementation of Policies
- Monitoring of profit sector
- Financial Fund Manager Feedback
- Country Needs Matrix
- Consolidation of all country databases

**KGAIE DB (Global Matrixes)**
- Monitoring of non profit sector (3rd sector)
- Investors membership
- People (whose life is influenced by investment decisions)

**NIEF DB (Global Matrixes)**
- Countries Reference Matrix CRM
- Countries Needs Matrix CNM
- Geographical Participation Matrix GPM
- Foundation Weight Vector FWV
- Ethical Asset Allocation Matrix Policies EAAM
- Investors Feedback CMM, CNM

46

Appendices: Part V

Figure 23: Foundation Weight Vector FWV

| FWV | | |
|---|---|---|
| Foundation Weight Vector | | |
| KGAIF non profit Member Nr | invested in KIF | weight |
| 1 | 0,3 | 5 |
| 2 | 0,6 | 5 |
| 3 | 7 | 5 |
| ... | | 1 |
| o | 5 | 1 |
| Investors for profit Investor Nr | invested in KIF Mi us$ | weight |
| o+1 | 5 | 5 |
| o+2 | 1 | 1 |
| o+3 | 3 | 3 |
| ... | 5 | 5 |
| o+p | 5 | 5 |
| KI for profit & non profit Member Nr | Mio us$ invested | weight |
| o+p+1 | 5 | 1 |
| o+p+2 | 5 | 1 |
| o+p+3 | 5 | 1 |
| o+p+4 | 5 | 1 |
| ... | 5 | 1 |
| o+p+q | 5 | 1 |

Figure 24: Countries Reference Matrix CRM

| CRM | | | | | | |
|---|---|---|---|---|---|---|
| Summ of All Countries Macroeconomic Reference Vectors = Countries Reference Matrix | | | | | | |
| country code | GDP per capita | employment index | energy index | alphabetisation index | human development index | water availability index |
| Sub sectors | | | | S13 | | |
| country code | | | | | | |
| C1 | | | | | | |
| C2 | | | | | | |
| C3 | | | | | | |
| ... | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| ... | | | | | | |
| Cn | | | | | | |

Figure 25: Geographic Participation Vector GPV (1)

Figure 26: Geographic Participation Vector GPV and Countries Needs: Matrix CNM

$$\textbf{\textit{Formula:}} \qquad \textbf{\textit{FWV x CRM = GPV + FNM}}$$

**Appendices: Part V**        Figure 27: Foundation Ethical Asset Allocation Matrix

$$\textit{Formula:} \quad \textit{FWV x EMM x (CNM - CMM) = FAAM}$$

Figure 28: Countries Needs Matrix CNM: Details (similar for Countries Monitoring Matrix CMM

$$\textit{Formulas: } CNM = Sum_1^n \ (CNVi)$$
$$CMM = Sum_1^n \ (CMVi)$$

Figure 29: Countries Monitoring Matrix CMM$_{macro}$ : Details          Appendices: Part V

| CMM | | | | | |
|-----|---|---|---|---|---|
| Countries Monitoring Matrix | | | | | |
| country | C1 | C2 | ... | Ci | Cn |
| Sub Sector | | | | | |
| S1 | I11 | I12 | | Ii_1 | In1 |
| S2 | I12 | | | | |
| ... | | | | | |
| Sj | I1_j | | | Iij | |
| Sm | I1_m | | | | Inm |

$=$

| CMV1 | |
|------|---|
| country | C1 |
| Sub Sector | |
| S1 | I11 |
| S2 | I12 |
| ... | |
| Sj | I1_j |
| Sm | I1_m |

| CMV2 | |
|------|---|
| | C2 |
| | |
| S1 | I12 |
| S2 | |
| ... | |
| Sj | |
| Sm | |

• • •

| CMVn | |
|------|---|
| | Cn |
| | |
| S1 | In1 |
| S2 | |
| ... | |
| Sj | |
| Sm | Inm |

## *Formula: CMM = Sum$_1^n$ (CMVi)*

Figure 30: Countries Ethical Monitoring Matrix EMM

| EMM | | | | |
|-----|---|---|---|---|
| Ethical Monitoring Matrix | | | | |
| kgaif monitors 3rd sector | | | | |
| countries | C1 | C2 | ... | Cn |
| Sub Sector | ratings | ratings | ... | ratings |
| S1 | R11 | R21 | | Rn1 |
| S2 | R12 | | | |
| S3 | R13 | ... | | ... |
| ... | | | | |
| Sp | R1p | | | Rnp |

| financial fund Mgr monitors for profit sector | | | | |
|-----|---|---|---|---|
| Sub Sector | ratings | ratings | | ratings |
| Sp+1 | Rp+1,1 | ... | | Rp+1,n |
| Sp+2 | | ... | | |
| Sp+3 | | | | |
| ... | | | | |
| Sp+k | | | | Rpk |

| KI monitors for profit & non profit sector | | | | |
|-----|---|---|---|---|
| Sub-Sector | ratings | ratings | | ratings |
| Sp+m+1 | ... | ... | ... | ... |
| ... | ... | ... | ... | ... |
| ... | | | | |
| Sm | | | | Rnm |

Appendices: Part V  •  Figure 31: Countries Ethical Monitoring Matrix EMM$_{macro}$ (details)

| tables for one Country Ci | | Monitoring | KI Macroeconomic Ethical Monitoring | | | | EMM |
|---|---|---|---|---|---|---|---|
| Sector | Sub-Sector | % of funds monitored in Country X | % securitization of savings | % bias | use of natural resources | consumer souvereignity | ethical ratings for country X |
| Private sector | | Fund Manager | | | | | |
| Infrastructure & distribution | | | 100% | 50% | 0% | 35% | -10% |
| Innovation and environnement | | | | | | | 5% |
| Human Development and material | | | | | | | 3% |
| Social, cultural and human | | | | | | | 2% |
| | Total Private Sector | 65 | | | | | |
| Public sector | | | | | | | -32% |
| Infrastructure & distribution | | | | | | | -33% |
| Innovation and environnement | | | | | | | 54% |
| Human Development and material | | | | | | | 75% |
| Social, cultural and human | | | | | | | 75% |
| | Total Public Sector | 20 | | | | | |
| Third Sector | | | | | | | |
| Infrastructure & distribution | | | | | | | 66% |
| Innovation and environnement | | | | | | | 68% |
| Human Development and material | | | | | | | 66% |
| Social, cultural and human | | | | | | | 66% |
| | Total Third Sector | 10 | | | | | |
| cash | | 6 | | | | | |
| Total | | 100 | | | | | |

Figure 32: Details of KI Country Monitoring Vector CMVi$_{macro}$ and Financial Fund Manager Actual Investment Vector (Feedback)

| Sector | Sub-Sector | % of funds invested in Country X | % of funds invested in Country X | % securitization of savings | % bias in the estimati | use of natural resources | consumer souvereignity |
|---|---|---|---|---|---|---|---|
| Private sector | | KI target | Fund Manager actual | | | | |
| Infrastructure & distribution | | | | 100% | 50% | 0% | 35% |
| Innovation and environnement | | | | 12% | 12% | 44% | 12% |
| Human Development and material | | | | 32% | 12% | 45% | 55% |
| Social, cultural and human | | | | 22% | 32% | 3% | 43% |
| | Total Private Sector | 65 | 65 | | | | |
| Public sector | | | | | | | |
| Infrastructure & distribution | | | | | | | |
| Innovation and environnement | | | | | | | |
| Human Development and material | | | | | | | |
| Social, cultural and human | | | | | | | |
| | Total Public Sector | 20 | 20 | | | | |
| Third Sector | | | | | | | |
| Infrastructure & distribution | | | | | | | |
| Innovation and environnement | | | | | | | |
| Human Development and material | | | | | | | |
| Social, cultural and human | | | | | | | |
| | Total Third Sector | 10 | 10 | | | | |
| cash | | 5 | 5 | | | | |
| Total | | 100 | 100 | | | | |

Figure 33: KI Countries Monitoring Vector CMVi: Details of a Sector (2)       Appendices: Part V

| Sector | Sub-Sectors | | % of funds Targets in Country X | Actual % of funds invested in Country X |
|---|---|---|---|---|
| Private sector | | | KI target | Fund Manager |
| Infrastructure & distribution | Finance / Insurances | S1 | 1.5 | |
| | Transport | S2 | 2 | |
| | Communication & Information | S3 | 5.5 | |
| | Construction | S4 | 3 | |
| | Energy | S5 | 3.5 | |
| | wholesales and retail | S6 | 5.5 | |
| | Sub-Sector | | 21 | |
| Innovation and environnement | Waste Management | S7 | 1 | |
| | Research and development | S8 | 5 | |
| | Repair and maintenance | S9 | 4 | |
| | Sub-Sector | | 10 | 10 |
| Human Development and material | Food & Agriculture | S10 | 3 | |
| | Clothing | S11 | 6 | |
| | Health and hygienics | S12 | 1 | |
| | Sub-Sector | | 10 | 10 |
| Social, cultural and human development | Education | S13 | 3 | |
| | continued education | S14 | 7 | |
| | Culture | S15 | 6 | |
| | Sports | S16 | 5 | |
| | Tourism | S17 | 3 | |
| | Sub-Sector | | 24 | 23 |
| Private sector | Total Sector | | 65 | 65 |

# CANADA

Growth of 100 CAD

— KIF Alloc.  — US Mutual CAD  — FTSE CAD

| Annual Returns | KIF Alloc. | US Mut. | FTSE CAD |
|---|---|---|---|
| 2002 | (3.75)% | (18.01)% | (17.28)% |
| 2001 | 1.90% | 5.65% | (13.97)% |
| 2000 | 11.65% | 5.81% | 5.88% |
| 1999 | 13.92% | (24.52)% | 34.82% |
| 1998 | 8.46% | 10.91% | 3.43% |
| 1997 | 14.99% | 17.26% | 11.77% |

| Trailing Returns | | | |
|---|---|---|---|
| Periods | KIF Alloc. | US Mut. | FTSE CAD |
| 12 months | 0.69% | (16.14)% | (9.57)% |
| 36 months | (19.55)% | (28.51)% | (9.54)% |
| 60 months | 34.69% | (25.71)% | 4.50% |

| Statistical Analysis | KIF Alloc. | US Mutual | FTSE CAD |
|---|---|---|---|
| Returns | | | |
| Compounded annual returns | 9.67% | (1.74)% | 3.03% |
| Compounded monthly returns | 0.81% | (0.15)% | 0.25% |
| % of positive months | 62.32% | 56.52% | 55.07% |
| Maximum Drawdown | (10.71)% | (21.37)% | (16.98)% |
| Risk | | | |
| Sharpe Ratio | 0.24 | -0.01 | 0.07 |
| Standard Deviation | 19.28% | 13.77% | 25.38% |
| Benchmark correlations | | | |
| Alpha Annualized | | 57.73% | 49.03% |
| Beta | | 0.21 | 0.38 |
| Correlation | | 0.521 | 0.682 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential: - Do not duplicate-** This report is a property of *Kairos Investments SA*. The information contained in this report is confidential and proprietary in nature..

# FRANCE

## Growth of 100 euros

— KIF Alloc.

— US Mutual Funds Euro

— CAC 40 INSTANTANEOUS - OPENING PRICE

| Annual Returns | KIF Alloc. | US Mut | CAC 40 |
|---|---|---|---|
| 2002 | (6.91)% | (24.68)% | (35.99)% |
| 2001 | (5.35)% | 5.19% | (21.86)% |
| 2000 | 36.19% | 10.23% | (0.32)% |
| 1999 | 25.04% | (6.41)% | 51.72% |
| 1998 | 5.18% | (2.78)% | 34.93% |
| 1997 | 5.32% | 16.90% | 18.54% |

| Trailing Returns | | | |
|---|---|---|---|
| Periods | KIF Alloc. | US Mut | CAC 40 |
| 12 months | (4.33)% | (22.99)% | (33.83)% |
| 36 months | 30.48% | (27.78)% | (37.62)% |
| 60 months | 57.67% | (23.47)% | 17.01% |

| Statistical Analysis | KIF Alloc. | US Mutual | CAC40 |
|---|---|---|---|
| Returns | | | |
| Compounded annual returns | 11.52% | (1.23)% | 3.65% |
| Compounded monthly returns | 0.96% | (0.10)% | 0.30% |
| % of positive months | 56.52% | 59.42% | 56.52% |
| Maximum Drawdown | (10.27)% | (19.70)% | (18.29)% |
| Risk | | | |
| Sharpe Ratio | 0.16 | 0.01 | 0.07 |
| Standard Deviation | 23.17% | 9.10% | 27.32% |
| Benchmark correlations | | | |
| Alpha Annualized | | 68.38% | 58.81% |
| Beta | | 0.31 | 0.35 |
| Correlation | | -0.117 | 0.712 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential: - Do not duplicate-** This report is a property of *Kairos Investments SA.* The information contained in this report is confidential and proprietary in nature.

# GERMANY

## Growth of 100 EUR

—— KIF Alloc.  —— US Mutual EUR  —— DAX 100

| Annual Returns | KIF Alloc. | US Mut. | DAX 100 |
|---|---|---|---|
| 2002 | (3.47)% | (24.68)% | (25.41)% |
| 2001 | 1.95% | 5.18% | (28.83)% |
| 2000 | 0.91% | 10.22% | 9.98% |
| 1999 | 7.48% | (6.41)% | 4.85% |
| 1998 | 1.75% | (3.01)% | (2.51)% |
| 1997 | 5.88% | 17.85% | 8.47% |

| Trailing Returns | | | |
|---|---|---|---|
| Periods | KIF Alloc. | US Mut. | DAX 100 |
| 12 months | (2.28)% | (23.00)% | (26.55)% |
| 36 months | 2.35% | (27.79)% | (40.97)% |
| 60 months | 7.54% | (23.58)% | (43.12)% |

| Statistical Analysis | KIF Alloc. | US Mutual | Dax 100 |
|---|---|---|---|
| Returns | | | |
| Compounded annual returns | 2.60% | (1.15)% | (6.13)% |
| Compounded monthly returns | 0.22% | (0.10)% | (0.51)% |
| % of positive months | 59.42% | 59.42% | 53.62% |
| Maximum Drawdown | (8.52)% | (19.70)% | (15.29)% |
| Risk | | | |
| Sharpe Ratio | 0.10 | 0.01 | -0.10 |
| Standard Deviation | 14.60% | 10.97% | 17.61% |
| Benchmark correlations | | | |
| Alpha Annualized | | 16.76% | 28.49% |
| Beta | | 0.27 | 0.38 |
| Correlation | | 0.226 | 0.049 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential: - Do not duplicate-** This report is a property of *Kairos Investments SA*. The information contained in this report is confidential and proprietary in nature.

# HUNGARY

## Growth of 1000 HUF

KIF Alloc. ——— US Mutual Funds HUF ——— FTSE-HUF

| Annual Returns | KIF Alloc. | US Mut. | FTSE-HUF |
|---|---|---|---|
| 2002 | 2.86% | (24.72)% | 0.82% |
| 2001 | (7.70)% | (2.67)% | (8.52)% |
| 2000 | 1.80% | 14.52% | (12.17)% |
| 1999 | 23.41% | (7.07)% | 39.35% |
| 1998 | (5.42)% | 10.89% | (16.12)% |
| 1997 | 8.64% | 30.39% | 38.06% |

| Trailing Returns | | | |
|---|---|---|---|
| Periods | KIF Alloc. | US Mut. | FTSE-HUF |
| 12 months | 6.67% | (25.93)% | 5.59% |
| 36 months | 11.84% | (31.20)% | 6.48% |
| 60 months | 19.92% | (15.37)% | 9.92% |

| Statistical Analysis | KIF Alloc. | US Mutual | FTSE-HUF |
|---|---|---|---|
| **Returns** | | | |
| Compounded annual returns | 3.92% | 2.22% | 5.34% |
| Compounded monthly returns | 0.33% | 0.18% | 0.45% |
| % of positive months | 60.87% | 60.87% | 53.62% |
| Maximum Drawdown | (16.03)% | (19.92)% | (37.23)% |
| **Risk** | | | |
| Sharpe Ratio | 0.10 | 0.06 | 0.09 |
| Standard Deviation | 11.75% | 17.01% | 21.11% |
| **Benchmark correlations** | | | |
| Alpha Annualized | | 21.94% | 11.79% |
| Beta | | 0.05 | 0.35 |
| Correlation | | 0.071 | 0.851 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential: - Do not duplicate-** This report is a property of *Kairos Investments SA*. The information contained in this report is confidential and proprietary in nature.

Figure 38: Country Studies 5, JAPAN  -

# JAPAN

Growth of 1000 JPY

—— KIF Alloc.   —— US Mutual JPY   —— FTSE JPY

| Annual Returns | KIF Alloc. | US Mut. | FTSE JPY |
|---|---|---|---|
| 2002 | (6.37)% | (21.27)% | (16.36)% |
| 2001 | (0.34)% | 17.06% | (19.97)% |
| 2000 | (0.57)% | 11.57% | (19.80)% |
| 1999 | 10.19% | (28.64)% | 54.20% |
| 1998 | 1.70% | (8.85)% | (6.49)% |
| 1997 | (5.95)% | 17.99% | (11.52)% |

| Trailing Returns | | | |
|---|---|---|---|
| Periods | KIF Alloc. | US Mut. | FTSE JPY |
| 12 months | (7.82)% | (14.70)% | (19.66)% |
| 36 months | (7.00)% | (20.67)% | (40.46)% |
| 60 months | (1.10)% | (31.41)% | (28.84)% |

| Statistical Analysis | KIF Alloc. | US Mutu. | FTSE JPY |
|---|---|---|---|
| **Returns** | | | |
| Compounded annual returns | (0.38)% | (3.67)% | (5.48)% |
| Compounded monthly returns | (0.03)% | (0.31)% | (0.46)% |
| % of positive months | 46.38% | 57.97% | 43.48% |
| Maximum Drawdown | (7.13)% | (19.89)% | (12.99)% |
| **Risk** | | | |
| Sharpe Ratio | -0.002 | -0.03 | -0.07 |
| Standard Deviation | 16.97% | 18.01% | 15.52% |
| **Benchmark correlations** | | | |
| Alpha Annualized | | 1.27% | 9.07% |
| Beta | | 0.16 | 0.36 |
| Correlation | | -0.491 | 0.522 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

Figure 39: Country Studies 6, South Africa

# SOUTH AFRICA

## Growth of 1000 ZAR

—— KIF Alloc.    —— US Mutual Funds ZAR    ——FTSE 40 ZAR

| Annual Returns | KIF Alloc. | US Mut. | FTSE40 ZAR |
|---|---|---|---|
| 2002 | 4.86% | (30.07)% | (9.21)% |
| 2001 | 19.93% | 60.08% | 25.98% |
| 2000 | (1.89)% | 24.60% | 3.27% |
| 1999 | 43.33% | (15.45)% | 73.65% |
| 1998 | (7.01)% | 24.03% | (9.06)% |
| 1997 | (2.54)% | 16.53% | (15.45)% |

| Trailing Returns | | | |
|---|---|---|---|
| Periods | KIF Alloc. | US Mut. | FTSE40 ZAR |
| 12 months | 10.38% | (8.89)% | 12.39% |
| 36 months | 36.87% | 10.48% | 41.67% |
| 60 months | 62.76% | 39.15% | 94.02% |

| Statistical Analysis Returns | KIF Alloc. | US Mutual | FTSE40 ZAR |
|---|---|---|---|
| Compounded annual returns | 10.48% | 12.25% | 10.04% |
| Compounded monthly returns | 0.87% | 1.02% | 0.84% |
| % of positive months | 63.77% | 63.77% | 60.87% |
| Maximum Drawdown | (13.08)% | (20.28)% | (26.46)% |
| Risk | | | |
| Sharpe Ratio | 0.21 | 0.16 | 0.13 |
| Standard Deviation | 21.93% | 32.82% | 30.95% |
| Benchmark correlations | | | |
| Alpha Annualized | | 60.56% | 36.01% |
| Beta | | 0.00 | 0.42 |
| Correlation | | -0.008 | 0.877 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential: - Do not duplicate-** This report is a property of *Kairos Investments SA*. The information contained in this report is confidential and proprietary in nature.

# SOUTH KOREA

**Growth of 100'000 KRW**

— KIF Alloc. — US Mutual Funds KRW — FTSE KRW

| Annual Returns | KIF Alloc. | US Mut. | FTSE KRW |
|---|---|---|---|
| 2002 | 5.11% | (22.23)% | 4.21% |
| 2001 | 30.39% | 5.38% | 45.07% |
| 2000 | (22.35)% | 13.12% | (47.38)% |
| 1999 | 24.49% | (24.18)% | 138.01% |
| 1998 | 62.14% | (33.05)% | 53.95% |
| 1997 | (20.84)% | 136.83% | (19.89)% |

| Trailing Returns | | | |
|---|---|---|---|
| Periods | KIF Alloc. | US Mut. | FTSE KRW |
| 12 months | 17.84% | (19.40)% | 42.19% |
| 36 months | 11.33% | (30.79)% | 6.89% |
| 60 months | 88.85% | (13.88)% | 167.88% |

| Statistical Analysis | KIF Alloc. | US Mutual | FTSE-KRW |
|---|---|---|---|
| **Returns** | | | |
| Compounded annual returns | 12.18% | 1.99% | 23.22% |
| Compounded monthly returns | 1.02% | 0.17% | 1.93% |
| % of positive months | 50.72% | 55.07% | 50.72% |
| Maximum Drawdown | (11.87)% | (22.16)% | (21.56)% |
| **Risk** | | | |
| Sharpe Ratio | 0.15 | 0.06 | 0.15 |
| Standard Deviation | 30.10% | 30.87% | 33.73% |
| **Benchmark correlations** | | | |
| Alpha Annualized | | 71.80% | 22.57% |
| Beta | | 0.15 | 0.36 |
| Correlation | | -0.330 | 0.799 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

Figure 41: Country Studies 8, Swizterland

# SWITZERLAND

## Growth of 100 CHF

KIF Alloc.　　US Mutual Funds CHF　　SMI

| Annual Returns | KIF Alloc. | US Mut. | SMI |
|---|---|---|---|
| 2002 | (2.80)% | (25.49)% | (21.41)% |
| 2001 | (8.24)% | 2.48% | (20.22)% |
| 2000 | 0.44% | 4.33% | 7.89% |
| 1999 | 23.96% | (5.82)% | 4.67% |
| 1998 | 4.98% | (2.10)% | 21.25% |
| 1997 | 3.33% | 9.95% | 40.70% |

| Trailing Returns | | | |
|---|---|---|---|
| Periods | KIF Alloc. | US Mut. | SMI |
| 12 months | 0.07% | (23.47)% | (19.05)% |
| 36 months | (1.64)% | (34.01)% | (27.85)% |
| 60 months | 13.09% | (29.97)% | (3.02)% |

| Statistical Analysis | KIF Alloc. | US Mutual | SMI |
|---|---|---|---|
| Returns | | | |
| Compounded annual returns | 3.56% | (3.35)% | 3.62% |
| Compounded monthly returns | 0.30% | (0.28)% | 0.30% |
| % of positive months | 62.32% | 56.52% | 60.87% |
| Maximum Drawdown | (11.05)% | (19.54)% | (15.28)% |
| Risk | | | |
| Sharpe Ratio | 0.10 | -0.02 | 0.08 |
| Standard Deviation | 12.63% | 11.47% | 21.86% |
| Benchmark correlations | | | |
| Alpha Annualized | | 26.37% | 11.51% |
| Beta | | 0.31 | 0.43 |
| Correlation | | -0.189 | 0.656 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential: - Do not duplicate-** This report is a property of *Kairos Investments SA*. The information contained in this report is confidential and proprietary in nature.

# UNITED KINGDOM

## Growth of £100

—— KIF Alloc.      —— US Mutual GBP      —— FTSE 100

| Annual Returns | KIF Alloc. | US Mutual GBP | FTSE 100 |
|---|---|---|---|
| 2002 | 3.32% | (22.27)% | (21.97)% |
| 2001 | 2.38% | 3.61% | (15.76)% |
| 2000 | (1.30)% | 9.74% | (8.57)% |
| 1999 | 3.34% | (16.37)% | 16.01% |
| 1998 | (0.81)% | 2.44% | 17.02% |
| 1997 | 4.67% | 5.86% | 18.32% |

| Trailing Returns | | | |
|---|---|---|---|
| Periods | KIF Alloc. | US Mutual GBP | FTSE 100 |
| 12 months | 5.41% | (21.92)% | (21.17)% |
| 36 months | 6.48% | (28.93)% | (33.48)% |
| 60 months | 5.81% | (28.13)% | (13.98)% |

| Statistical Analysis | KIF Alloc. | US Mutual | FTSE 100 |
|---|---|---|---|
| **Returns** | | | |
| Compounded annual returns | 2.09% | (3.45)% | (0.60)% |
| Compounded monthly returns | 0.17% | (0.29)% | (0.05)% |
| % of positive months | 59.42% | 57.97% | 55.07% |
| Maximum Drawdown | (7.36)% | (20.81)% | (13.74)% |
| **Risk** | | | |
| Sharpe Ratio | 0.08 | -0.03 | 0.01 |
| Standard Deviation | 15.89% | 10.75% | 17.44% |
| **Benchmark correlations** | | | |
| Alpha Annualized | | 16.86% | 13.20% |
| Beta | | 0.24 | 0.34 |
| Correlation | | 0.063 | -0.083 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential: - Do not duplicate-** This report is a property of *Kairos Investments SA*. The information contained in this report is confidential and proprietary in nature.

# U.S.A.

Growth of $100

| Annual Returns | KIF Alloc. | US Mut. | S&P 500 |
|---|---|---|---|
| 2002 | (1.07)% | (16.26)% | (23.32)% |
| 2001 | 9.84% | 0.75% | (12.98)% |
| 2000 | 1.50% | 1.18% | (8.47)% |
| 1999 | 2.95% | (19.24)% | 18.95% |
| 1998 | 0.87% | 2.62% | 30.86% |
| 1997 | 7.29% | 9.45% | 22.41% |

| Trailing Returns | | | |
|---|---|---|---|
| Periods | KIF Alloc. | US Mut. | S&P 500 |
| 12 months | 1.89% | (15.10)% | (19.41)% |
| 36 months | 13.55% | (32.40)% | (33.69)% |
| 60 months | 14.24% | (33.02)% | (3.43)% |

| Statistical Analysis | KIF Alloc. | US Mutual | S&P 500 |
|---|---|---|---|
| **Returns** | | | |
| Compounded annual returns | 3.98% | (3.93)% | 2.85% |
| Compounded monthly returns | 0.33% | (0.33)% | 0.24% |
| % of positive months | 56.52% | 55.07% | 50.72% |
| Maximum Drawdown | (8.13)% | (20.38)% | (13.84)% |
| **Risk** | | | |
| Sharpe Ratio | 0.13 | -0.05 | 0.07 |
| Standard Deviation | 14.21% | 13.74% | 26.07% |
| **Benchmark correlations** | | | |
| Alpha Annualized | | 29.68% | 16.94% |
| Beta | | 0.30 | 0.36 |
| Correlation | | -0.460 | 0.086 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential:** - **Do not duplicate-** This report is a property of *Kairos Investments SA*. The information contained in this report is confidential and proprietary in nature.

# VENEZUELA

## Growth of 1000 VEB

KIF Alloc. — US Mutual Funds VEB — FTSE VEB

| Annual Returns | KIF Alloc. | US Mut. | FTSE VEB |
|---|---|---|---|
| 2002 | 16.04% | 51.95% | 24.66% |
| 2001 | (5.83)% | 10.47% | (14.34)% |
| 2000 | 11.09% | 9.32% | 17.56% |
| 1999 | 21.38% | (7.22)% | 4.86% |
| 1998 | (19.25)% | 14.91% | (46.30)% |
| 1997 | 27.16% | 15.84% | 34.39% |

| Trailing Returns | | | |
|---|---|---|---|
| Periods | KIF Alloc. | US Mut. | FTSE VEB |
| 12 months | 6.00% | 59.01% | 3.20% |
| 36 months | 18.25% | 49.05% | 15.99% |
| 60 months | 15.48% | 86.61% | (38.07)% |

| Statistical Analysis | KIF Alloc. | US Mutual | FTSE VEB |
|---|---|---|---|
| **Returns** | | | |
| Compounded annual returns | 3.56% | (3.35)% | 3.62% |
| Compounded monthly returns | 0.30% | (0.28)% | 0.30% |
| % of positive months | 62.32% | 56.52% | 60.87% |
| Maximum Drawdown | (11.05)% | (19.54)% | (15.28)% |
| **Risk** | | | |
| Sharpe Ratio | 0.10 | -0.02 | 0.08 |
| Standard Deviation | 12.63% | 11.47% | 21.86% |
| **Benchmark correlations** | | | |
| Alpha Annualized | | 26.37% | 11.51% |
| Beta | | 0.31 | 0.43 |
| Correlation | | -0.189 | 0.656 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

# ZIMBABWE

## Growth of 1000 ZWD

— KIF Alloc.  —— US Mutual Funds ZWD  — S&P ZIM

| Annual Returns | KIF Alloc. | US Mut. | S&P ZIM |
|---|---|---|---|
| 2002 | 120.96% | (16.26)% | 141.88% |
| 2001 | 88.68% | 1.34% | 142.83% |
| 2000 | 1.43% | 46.78% | 16.15% |
| 1999 | 41.88% | (17.51)% | 146.12% |
| 1998 | 9.78% | 105.80% | (13.36)% |
| 1997 | (8.69)% | 86.42% | (40.28)% |

| Trailing Returns | | | |
|---|---|---|---|
| Periods | KIF Alloc. | US Mut. | S&P ZIM |
| 12 months | 129.27% | (15.10)% | 146.81% |
| 36 months | 350.66% | (1.29)% | 727.81% |
| 60 months | 485.64% | 198.72% | 792.71% |

| Statistical Analysis | KIF Alloc. | US Mutual | S&P ZIM |
|---|---|---|---|
| **Returns** | | | |
| Compounded annual returns | 87.20% | 51.17% | 133.69% |
| Compounded monthly returns | 7.27% | 4.26% | 11.14% |
| % of positive months | 66.67% | 63.77% | 65.22% |
| Maximum Drawdown | (10.07)% | (20.75)% | (27.90)% |
| **Risk** | | | |
| Sharpe Ratio | 0.44 | 0.27 | 0.31 |
| Standard Deviation | 36.65% | 37.70% | 38.96% |
| **Benchmark correlations** | | | |
| Alpha Annualized | | 90.32% | 33.37% |
| Beta | | -0.14 | 0.39 |
| Correlation | | 0.481 | 0.780 |

The present statistical work is a case study that translates the qualitative model of the Kairos Investment Fund and sets a basic investment methodology of continuous ratios adjustments. Data from January 1997 to October 2002 reflects simulated performance, net of fees. The back testing is not indicative of future performance.

**Confidential: - Do not duplicate-** This report is a property of *Kairos Investments SA*. The information contained in this report is confidential and proprietary in nature.

**European Patent Office**

**DECLARATION**

which under Rule 45 of the European Patent Convention shall be considered, for the purposes of subsequent proceedings, as the European search report

**Application Number**

EP 05 00 1308

| | CLASSIFICATION OF THE APPLICATION (Int.Cl.7) |
|---|---|
| The Search Division considers that the present application, does not comply with the provisions of the EPC to such an extent that it is not possible to carry out a meaningful search into the state of the art on the basis of all claims | G06F17/60 |

Reason:

The search examiner is of the opinion that the description and claims of the present application fail to comply with the prescribed requirements of the EPC to such an extent that a meaningful search cannot be carried out.
In this regard is noted that the description does not allow a reliable determination of the underlying technical problem contrary to the requirements of Rule 27(1)(c) EPC.
It is further noted that insofar as the content of the application can be understood, it appears to relate primarily to subject matter excluded from patentability under the terms of Art. 52(2)(c) & (3) EPC, namely a method for investing in the financial markets (claim 1), an economic model (claim 6), a business organization method for investing money (claim 7) and a fund for investing money (claim 8). Given that the claims are formulated in terms of such subject matter or merely specify commonplace features relating to its technological implementation, the examiner could not identify any technical problem whose solution might potentially have required an inventive step. Hence it was not possible to carry out a meaningful search into the state of the art (Rule 45 EPC). See also Guidelines Part B Chapter VIII, 1-3.

The applicant's attention is drawn to the fact that a search may be carried out during examination following a declaration of no search under Rule 45 EPC, should the problems which led to the declaration

-/--

| Place of search | Date | Examiner |
|---|---|---|
| Munich | 25 April 2005 | Corcoran, P |

EPO FORM 1504 (P04C37)

**European Patent Office**

**DECLARATION**

which under Rule 45 of the European Patent Convention shall be considered, for the purposes of subsequent proceedings, as the European search report

**Application Number**

EP 05 00 1308

| The Search Division considers that the present application, does not comply with the provisions of the EPC to such an extent that it is not possible to carry out a meaningful search into the state of the art on the basis of all claims<br><br>Reason:<br><br>being issued be overcome (see EPC Guideline C-VI, 8.5).<br><br>----- | **CLASSIFICATION OF THE APPLICATION (Int.Cl.7)** |
|---|---|

| Place of search | Date | Examiner |
|---|---|---|
| Munich | 25 April 2005 | Corcoran, P |

EPO FORM 1504 (P04C37)